(19) **Europäisches Patentamt European Patent Office Office européen des brevets**

(11) **EP 4 579 537 B1**

(12) **EUROPEAN PATENT SPECIFICATION**

(45) Date of publication and mention
of the grant of the patent:
**05.08.2026 Bulletin 2026/32**

(21) Application number: **24305088.7**

(22) Date of filing: **12.01.2024**

(51) International Patent Classification (IPC):
**G06N 10/20** (2022.01)      **G06N 10/40** (2022.01)
**G06N 10/70** (2022.01)

(52) Cooperative Patent Classification (CPC):
**G06N 10/70; G06N 10/20; G06N 10/40**

(54) **QUANTUM SYSTEM FOR PERFORMING A CLASSICAL LDPC ERROR-CORRECTING CODE AND FOR PERFORMING QUANTUM LOGICAL GATES**

VERFAHREN UND SYSTEM ZUR DURCHFÜHRUNG VON LOGISCHEN QUANTENGATTERN

PROCÉDÉ ET SYSTÈME POUR RÉALISER DES PORTES LOGIQUES QUANTIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.12.2023 EP 23307438**

(43) Date of publication of application:
**02.07.2025 Bulletin 2025/27**

(73) Proprietors:
  • **Alice & Bob**
    **75015 Paris (FR)**
  • **INRIA - Institut National de Recherche en Informatique et en Automatique**
    **78150 Le Chesnay (FR)**

(72) Inventors:
  • **RUIZ, Diego**
    **75015 PARIS (FR)**
  • **GUILLAUD, Jérémie**
    **75015 Paris (FR)**
  • **MIRRAHIMI, Mazyar**
    **78150 LE CHESNAY (FR)**
  • **LEVERRIER, Anthony**
    **78150 LE CHESNAY (FR)**
  • **VUILLOT, Christophe**
    **78150 LE CHESNAY (FR)**

(74) Representative: **Atout PI Laplace**
    **Immeuble Up On**
    **25 Boulevard Romain Rolland**
    **CS 40072**
    **75685 Paris Cedex 14 (FR)**

(56) References cited:
**US-A1- 2023 071 000**

  • **RÉGENT FRANCOIS-MARIE LE ET AL: "High-performance repetition cat code using fast noisy operations", 1 March 2023 (2023-03-01), pages 1 - 15, XP093067491, Retrieved from the Internet <URL:https://arxiv.org/pdf/2212.11927.pdf> [retrieved on 20230726], DOI: 10.48550/arxiv.2212.11927**
  • **\'ELIE GOUZIEN ET AL: "Performance Analysis of a Repetition Cat Code Architecture: Computing 256-bit Elliptic Curve Logarithm in 9 Hours with 126133 Cat Qubits", ARXIV.ORG, CORNELL UNIVERSITY LIBRARY, 201 OLIN LIBRARY CORNELL UNIVERSITY ITHACA, NY 14853, 4 August 2023 (2023-08-04), XP091580059, DOI: 10.1103/PHYSREVLETT.131.040602**
  • **J\'ER\'EMIE GUILLAUD ET AL: "Repetition cat-qubits: fault-tolerant quantum computation with highly reduced overhead", ARXIV.ORG, CORNELL UNIVERSITY LIBRARY, 201 OLIN LIBRARY CORNELL UNIVERSITY ITHACA, NY 14853, 20 April 2019 (2019-04-20), XP081450162**
  • **SHRUTI PURI ET AL: "Bias-preserving gates with stabilized cat qubits", ARXIV.ORG, CORNELL UNIVERSITY LIBRARY, 201 OLIN LIBRARY CORNELL UNIVERSITY ITHACA, NY 14853, 1 May 2019 (2019-05-01), XP081271244**

**Description**

The invention concerns a quantum system for performing a classical LDPC error-correcting code.

A. General context

A1. General considerations relating to quantum systems error correction

Realizing a large-scale quantum computer is challenging because the noise induced by the uncontrolled interactions of the quantum computer's components with its environment destroys the fragile quantum characteristics responsible for quantum acceleration. Indeed, all algorithms whose quantum acceleration is theoretically proven require a certain level of protection against decoherence.

The theory of fault-tolerant quantum computing addresses this question. Quantum error-correcting codes (QECC) are designed in such a way that errors induced by the environment do not affect the quantum information. These codes operate according to the principle "fighting entanglement with entanglement": as natural errors occurring in physical systems are generally local, the quantum information to be protected is coded in non-local entangled states, so that it becomes unlikely that errors could corrupt it. The most popular QECC is the surface code.

The heart of quantum fault tolerance theory is the threshold theorem: arbitrarily long quantum calculations can be performed reliably provided that the noise affecting the physical components of the computer is less than a constant value called the fault-tolerant error threshold.

In theory, QECCs provide, when operating below the fault-tolerance error threshold, arbitrarily good protection against noise, thereby solving the decoherence problem. However, their implementation in the physical world comes at the cost of enormous physical resources to achieve a level of sufficient protection. The trade-off between the degree of protection provided by a QECC and the increase in components required to implement it defines what is known as the "resource overhead problem".

Realistic approaches to quantum computing must address this problem. In this light, systems with continuous variables (such as a harmonic oscillator), in which an infinite-dimensional Hilbert space is readily available to protect and process quantum information, appear to have a head start over systems with discrete variables (DV) which only have a finite-dimensional Hilbert space. There are many different continuous variable encodings, usually involving the superposition of some specific states of a harmonic oscillator, such as position and momentum eigenstates (GKP qubits), Fock states, or coherent states (so-called cat qubits).

US2023071000A1 discloses methods and systems for improving the performance of subsystem quantum error-correcting codes by repeating gauge-check measurements in tailored schedules and feeding selected single gauge-measurement outcomes directly to the decoder as effective stabilizer information.

Régent Francois-Marie Le ET AL: "High-performance repetition cat code using fast noisy operations", 1 March 2023 (2023-03-01), DOI: 10.48550/arxiv.2212.11927, URL:https://arxiv.org/pdf/2212.11927.pdf presents high-performance repetition cat codes using fast but noisy operations and shows, via tailored decoding and scheduling, how to achieve improved logical error rates and thresholds for biased-noise cat-qubit architectures.

ELIE GOUZIEN ET AL: "Performance Analysis of a Repetition Cat Code Architecture: Computing 256-bit Elliptic Curve Logarithm in 9 Hours with 126133 Cat Qubits", ARXIV.ORG, CORNELL UNIVERSITY LIBRARY, 201 OLIN LIBRARY CORNELL UNIVERSITY ITHACA, NY 14853, 4 August 2023 (2023-08-04), DOI: 10.1103/PHYSREVLETT.131.040602 discloses a large-scale quantum computing architecture based on a 2D grid of cat qubits using a repetition cat code, lattice surgery and magic-state based Toffoli gates, and analyses the resources required to run Shor's algorithm for 256-bit elliptic-curve discrete logarithms.

JEREMIE GUILLAUD ET AL: "Repetition cat-qubits: fault-tolerant quantum computation with highly reduced overhead", ARXIV.ORG, CORNELL UNIVERSITY LIBRARY, 201 OLIN LIBRARY CORNELL UNIVERSITY ITHACA, NY 14853, 20 April 2019 (2019-04-20) describes a 1D repetition code built from stabilized cat qubits with strongly biased noise and proposes a universal set of bias-preserving logical gates (including CNOT and Toffoli) enabling fault-tolerant quantum computation with significantly reduced hardware overhead.

SHRUTI PURI ET AL: "Bias-preserving gates with stabilized cat qubits", ARXIV.ORG, CORNELL UNIVERSITY LIBRARY, 201 OLIN LIBRARY CORNELL UNIVERSITY ITHACA, NY 14853, 1 May 2019 (2019-05-01) teaches bias-preserving two-qubit gates for stabilized cat qubits, allowing quantum operations that largely maintain the bit-/phase-flip noise asymmetry and thereby improve the performance of cat-qubit based error-correcting schemes.

A2. QECCs and noise bias qubits

The invention relates more particularly to qubits exhibiting a noise bias.

Stabilized cat qubits are an example of bosonic qubits known to benefit from a noise bias. More precisely, an effective error channel (e.g., bit-flip errors) is suppressed exponentially with "size" - that is, the average number of photons - of the Schrodinger cat states. According to current knowledge, this suppression should apply to a large class of physical noise processes having a local effect on the phase space of a harmonic oscillator. This includes, but is not limited to, photon loss, thermal excitations, photon phase shift, and various nonlinearities induced by coupling to a Josephson junction. Recent experiments, in the context of quantum superconducting circuits, have made it possible to observe this exponential suppression of bit errors with the average number of photons in cat states.

Due to this noise structure, quantum error correction becomes similar in complexity to classical error correction. For instance, a certain level of quantum error correction can be achieved by using a repetition code.

A3.Repetition code

With cat qubits, the bitflip lifetime is much longer than the phase-flip lifetime, so a classical error-correcting code can be used. To stick with the literature about classical error correction, the codes will be referred to in the 0/1 basis and not the +/- basis as would be used for cat qubits. It should be noted that this is a just a notation formalism and all the following results apply to cat qubits by just changing "0" to " + " and "1" and "-".

The goal of error correction is to protect information by encoding it redundantly. Some bitstrings are considered as valid codewords. The codewords live in the logical subspace and correspond to logical qubits: the "1" in the codeword is the support of the logical operator.

In error correction, the code distance is the minimum Hamming distance between any pair of codewords, i.e. the number of errors you need to go from a codeword to another, which is basically the number of bits which are different in the valid bitstrings. The number of errors that can be corrected is (d-1)/2 when d is an odd number (and the floor of this value when d is not odd). Beyond this number of errors, the logical qubit are no longer protected. For example, if only 1 bit-flip occurs in a 3 bits repetition code, then correction can accurately be made as the majority vote leads to the correct protected logical bit, whereas if there are 2 bit-flips then the majority vote would result in a failure.

An equivalent way is defining a code by its parity checks: if the logical bits are known, the parity checks can be deduced - and if the parity checks are known, the logical bits can be deduced. Again, with the example of a logical bit encoded by 3-bits, the sum of the first two bits are zero (modulo 2, i.e. for $1_L$ the sum of the first two bits is 1 + 1 = 2 modulo 2 = 0), and the sum of the last two bits are zero (modulo 2, i.e. for $1_L$ the sum of the first two bits is 1 + 1 = 2 modulo 2 = 0). The repetition code codewords satisfy the constraints of the parity checks. Therefore, if there is a single error in one of the logical bits (i.e. the code space for that logical bit is left), then the parity checks will flag the error.

This is important for quantum information, it is not the logical bits which are checked (i.e. we do not measure or look at whether the bits making up the logical bit are in 0's or 1's), but rather the parity measurements between pairs of the bits, which is precisely the parity check formalism. In the example above, at least one parity check between the qubits will result in a 1 if there is an error. This flag can thereafter be used to correct the error.

In practice, the parity checks actually require further physical qubits, usually named ancilla qubits. For instance, for a 3 bits repetition code with bits b1, b2 and b3, performing the b1+b2=0 parity check actually requires an ancilla qubit coupled to both b1 and b2 via CNOT gates.

The CNOT gate operates on a quantum register consisting of 2 qubits. The CNOT gate flips the second qubit (the target qubit) if and only if the first qubit (the control qubit) is 1.

Assuming the ancilla starts in value 0:

- if b1 is 0, then the ancilla stays 0 after a CNOT, and if b2 is 0, then the ancilla again stays 0 after a CNOT.
- if b1 is 1, then the ancilla flips from its initial 0 to 1 after a CNOT, and if b2 is also 1, then the ancilla again flips from its 1 back to 0 after a CNOT.

As a result, b1 + b2 = 0 for both 0+0 and 1+1 as required. However, if b1 is 1 then the ancilla flips from its initial 0 to 1 after a CNOT, and if b2 is 0, then the ancilla remains 1 after a CNOT. As a result, it is verified that 1+0 = 1.

Several articles propose using cat qubits in a QECC, either in a code entirely dedicated to phase-flip, or in a code which tolerates phase errors much better than bit errors (such as the rectangular surface code or XZZX surface code type), including: "Repetition Cat Qubits for Fault-Tolerant Quantum Computation" by Jérémie Guillaud and Mazyar Mirrahimi Phys. Rev. X 9, 041053, 12/12/2019; "Bias-Preserving Gates With Stabilized Cat Qubits" by Shruti et al., Science Advances, Vol 6, Issue 34, 08/21/2020; "Error Rates and Resource Overheads of repetition cat qubits" by Jérémie Guillaud and Mazyar Mirrahimi, Phys. Rev. A 103, 042413, 04/13/2021; "Building a Fault-Tolerant Quantum Computer Using Concatenated Cat Codes" by Christopher Chamberland et al.; PRX Quantum 3, 010329, 02/23/2022; or "Practical Quantum Error Correction with the XZZX Code and Kerr-Cat Qubits" by Andrew S. Darmawan et al., PRX Quantum 2, 030345, 09/16/ 2021.

A4. Tackling the overhead problem of repetition codes

The resource overhead problem can be seen as minimizing the number of physical qubits for a given number of logical qubits and a given distance of the code.

In order to encode a single logical qubit only, the repetition code is the best in terms of absolute numbers of qubits. However, when it comes to encoding a plurality of logical qubits, then the repetition code is limited by the fact that each physical qubit only contributes to a single logical qubit in the repetition code.

The performance of a code is given by a triplet of number [n,k,d]: n is the number of physical qubits (not including the ancillas for the parity checks); k is the number of logical qubits encoded and d is the distance of the code.

The repetition code is a [n,1,n] code, and thus has a value of kd/d equal to 1. There exist some classical codes which improves upon the repetition code.

A5. Quantum LDPC (qLDPC) error-correcting codes

LDPC (low density parity check) are a family of codes where the stabilizer weight is constant as the distance or number of qubits increase, and wherein each data qubit participates in a constant number of stabilizers. The adaptation of LDPC codes to a quantum context, named qLDPC codes, have also been studied for quantum information.

A recent example is "High-threshold and low-overhead fault-tolerant quantum memory" by S. Bravi et. al., arXiv:2308.07915, 15 August 2023. However, this family of qLDPC codes require long-range interactions between qubits, which are undesirable given their practical unfeasibility. This family is also dedicated to protecting against both bit-flips and phase-flips, rather than being applied to noise-bias qubits as in the case of cat qubits. This family of qLDPC codes are directed to encoding a fault-tolerant quantum memory, but do not readily enable logical operations. However, the ability to perform logical operations between logical qubits is indispensable to a usable quantum computer.

Another example is "Constant-Overhead Fault-Tolerant Quantum Computation with Reconfigurable Atom Arrays" by Xu et al., arXiv:2308.08648, where qLDPC codes for Reconfigurable Atom Arrays were shown, as well as how to perform logical gates. Unfortunately, this architecture cannot be transposed to superconducting qubits.

As a result, there is no satisfying qLDPC architecture which can be used in the context of superconducting qubits.

The invention aims at improving the situation.

To this end, in a first aspect, there is provided a quantum system for performing a classical low density parity check (LDPC) error-correcting code, the system comprising: a command circuit for selectively applying radiation; and an LDPC quantum superconducting circuit comprising: a number n of data resonators, each data resonator being coupled to said command circuit for stabilizing a respective data cat qubit, wherein the n data resonators are arranged on said LDPC quantum superconducting circuit in a two-dimensional array defining a plurality of rows of data resonators extending along a length dimension L and a plurality of columns of data resonators extending along a height dimension H, the two-dimensional array extending from a first edge to a second edge in a first direction along the height dimension H and from a third edge to a fourth edge in a second direction along the length dimension L; a first plurality of stabilizers.

Each stabilizer of the first plurality of stabilizers: (i) is formed from between 4 and 10 data resonators selected from a seven-by-seven sub-array of the two-dimensional array spanning seven consecutive rows along the first direction and seven consecutive rows along the second direction, and (ii) spans over at least two consecutive rows and at least two consecutive columns, wherein two or more data resonators are from the first row of the stabilizer in the first direction, two or more data resonators are from the final row of the stabilizer in the first direction, two or more data resonators are from the first column of the stabilizer in the second direction, and two or more data resonators are from the final column of the stabilizer in the second direction.

The command circuit is configured to implement a classical LDPC error-correcting code with the first plurality of stabilizers which only corrects phase flip errors on the data cat qubits stabilized in the data resonators, to thereby encode a plurality k of logical qubits from the data cat qubits such that the classical LDPC code has a value kd/n greater than 1, where d is the distance of the resulting classical LDPC code, the command circuit being further configured to determine an error syndrome on each stabilizer of the first plurality of stabilizers by performing a parity check on the data cat qubits stabilized in the data resonators of the respective stabilizer.

More generally, according to a second aspect of the present disclosure, there is provided quantum system for performing a classical low density parity check (LDPC) error-correcting code, the system comprising: a command circuit for selectively applying radiation; and an LDPC quantum superconducting circuit. The LDPC quantum superconducting circuit comprises a number n of data resonators, each data resonator being coupled to said command circuit for stabilizing a respective data cat qubit. The n data resonators are arranged on said LDPC quantum superconducting circuit in a two-dimensional array defining a plurality of rows of data resonators extending along a length dimension L and a plurality of columns of data resonators extending along a height dimension H, the two-dimensional array extending from a first edge to a second edge in a first direction along the height dimension H and from a third edge to a fourth edge in a second direction along the length dimension L. The LDPC quantum superconducting circuit also comprises a first plurality of stabilizers.

Each stabilizer of the first plurality of stabilizers is formed from between 4 (or 3, according to aspects not covered by the claims) and 10 data resonators selected from a seven-by-seven sub-array of the two-dimensional array spanning seven consecutive rows along the first direction and seven consecutive rows along the second direction, and wherein at least two stabilizers of the first plurality of stabilizers are distinct. The command circuit is configured to implement a classical LDPC error-correcting code with the first plurality of stabilizers which only corrects phase flip errors on the data cat qubits stabilized in the data resonators, to thereby encode a plurality k of logical qubits from the data cat qubits such that the classical LDPC code has a value kd/n greater than 1, where d is the distance of the resulting classical LDPC code, the command circuit being further configured to determine an error syndrome on each stabilizer of the first plurality of stabilizers by performing a parity check on the data cat qubits stabilized in the data resonators of the respective stabilizer.

The values of k and d for the classical LDPC error-correcting code (in any of its aspects and embodiments) may be determined via the methods described herein. For instance, given the form of each stabilizer of the first plurality of stabilizers, a corresponding parity check matrix may be determined. This parity check matrix may be transformed into the so-called generator matrix G, wherein the rows of the generator matrix G form a basis for the classical LDPC error-correcting code, namely the codewords are all linear combinations of the rows of G. To encode k logical qubits in the classical LDPC error-correcting code, one may define a vector B which is of length k and includes the bitstring of logical qubits to be encoded in the two-dimensional array. The transpose of B, referenced as $B^T$, may be matrix multiplied with generator matrix G, which produces $E^T$ wherein E is another vector and the superscript T indicates the transpose. By keeping tracks of indices indicating the positions of the data cat qubits in the two-dimensional array when defining G (or an equivalent permutation thereof), the coefficients of $E^T$ can be mapped to the tracked indices therein, which indicates the positions of the data cat qubits in the two-dimensional array. This tells us which data cat qubits contribute to which logical operator(s). As will be appreciated, it may be preferable to choose the basis of the classical LDPC error-correcting code such that the minimum number of data cat qubits contribute to the logical operator(s), as this may minimize the risk of errors occurring. Thus, the command circuit may be configured to implement the classical LDPC error-correcting code according to the first and second aspects by stabilizing each data cat qubit of the two-dimensional array to a particular state according to the vector $E^T$.

Thus, the command circuit, according to the first and second aspects, is configured to implement a classical LDPC error-correcting code to thereby encode a plurality k of logical qubits, wherein each logical qubit is encoded in a logical group (i.e. a logical Z group) of data cat qubits of said LDPC quantum superconducting circuit which defines the support for the Z logical operator of the logical qubit. Moreover, each logical qubit is associated with a logical X group of data cat qubits of said LDPC quantum superconducting circuit which defines the support for the logical X operator of the logical qubit.

The system of the present disclosure, according to any of its aspects and embodiments, is therefore advantageous because it provides a QECC which has an increased kd/n value over the repetition code (wherein for a repetition code kd/n = 1), which is applicable to cat qubits and more generally to biased-noise qubits. This allows to significantly lower the number of qubits necessary to encode logical qubits and hence tackle the overhead problem.

According to the present disclosure, it will be understood that the stabilizers are associated in a particular geometry or motif on the two-dimensional array, such that the terms "stabilizer" and "stabilizer motif" are used interchangeably herein.

Moreover, as will be appreciated, according to the first aspect, each stabilizer of the first plurality is not "pointy" in any direction, i.e. does not have only a single data cat qubit in any of the outer-most columns or rows. Furthermore, spanning over at least two consecutive rows and at least two consecutive columns means that each of the first stabilizers comprises data resonators from a plurality of rows and a plurality of columns. Finally, it will be understood that one of the data resonators which is from the first row of the stabilizer in the first direction may be one of the data resonators which is from the first column of the stabilizer in the second direction, and one of the data resonators which is from the final row of the stabilizer in the first direction may be one of the data resonators which is from the final column of the stabilizer in the second direction, and so on - in which case would define a substantially rectangular stabilizer with a data resonator positioned at each of the vertices of the rectangular shape.

According to any of the aspects and embodiments described herein, all of the stabilizers of the classical LDPC code overlap, such that all of the data resonators contribute to more than one stabilizer, and a majority of the data resonators contribute to more than two stabilizers - as is well know from the field of classical LDPC error correcting codes.

By "spanning" consecutive rows or columns, it is meant that the stabilizer geometry may extend over the consecutive rows or columns, however the stabilizer itself may not necessarily comprise a data resonator from each consecutive row in turn. For instance, a stabilizer may span three consecutive columns, namely in a given direction: a first column, a second column, and a third column, and yet only comprise data resonators from the first and third columns, with no data resonators from the second column contributing to that stabilizer.

According to the second aspect, the edges of the two-dimensional array may define a non-rectangular shape. That is, at least one of the edges of the two-dimensional array is a non-straight edge. Said otherwise, at least one row of the two-dimensional array is of a different length to one or more other rows of the two-dimensional array and/or at least one column of the two-dimensional array is of a different length to one or more other columns of the two-dimensional array. The Applicant has recognized that this enables the most optimal classical LDPC codes in a two-dimensional topology without compromising the value of kd/n, such that the quantum system may be provided on a side of a chip.

According to the first and second aspects, the distance d may be greater than or equal to 5, may preferably be greater than 7, or may preferably be greater than 10. Most preferably d may be between 10 and 30.

According to the first and second aspects, the two-dimensional array may comprise a number of rows equal to or greater than three and a number of columns equal to or greater than six.

The LDPC quantum superconducting circuit further comprise: a plurality of ancilla resonators, each ancilla resonator being coupled to said command circuit for stabilizing a respective ancilla qubit in the ancilla resonator. Each stabilizer of the first plurality of stabilizers is associated with a respective ancilla resonator of the plurality of ancilla resonators, the respective ancilla resonator being coupled to each of the data resonators of the stabilizer by a coupling. The LDPC quantum superconducting circuit is configured to implement a quantum gate through each coupling between the ancilla qubit stabilized in the ancilla resonator and the respective data cat qubit stabilized in the data resonator. The command circuit is configured to determine the error syndrome on each stabilizer of the first plurality of stabilizers by: (i) stabilizing or preparing an ancilla qubit in the associated ancilla resonator of the stabilizer, (ii) performing quantum gates between the ancilla qubit and each of the data cat qubits stabilized in the data resonators of the stabilizer, and (iii) measuring the associated ancilla qubit to determine the presence of a phase flip on at least one of the data cat qubits stabilized in the data resonators of the stabilizer.

Said otherwise, each stabilizer of the first plurality of stabilizers comprises an ancilla resonator of the plurality of ancilla resonators, and the command circuit uses the corresponding ancilla qubit stabilized in the ancilla resonator to perform a parity check on the data cat qubits stabilized in the data resonators of each stabilizer, to thereby determine an error syndrome on each stabilizer of the first plurality of stabilizers.

The command circuit being configured to stabilize an ancilla qubit in an ancilla resonator may for instance include preparing or initializing a qubit. For example, the command circuit may be configured to prepare or initialize a transmon qubit in a given state as the ancilla qubit, e.g., such as the transmon ground state or transmon first excited state. Other types of qubits such as fluxonium, heavy fluxonium, or others can be used.

The ancilla qubits may be ancilla cat qubits. That is, command circuit may be configured to stabilize ancilla cat qubits in the ancilla resonators. The command circuit may be configured to stabilize ancilla cat qubits in the ancilla resonators using a dissipative stabilization.

The quantum gates between the ancilla qubits or the ancilla cat qubits and each of the data cat qubits may be CNOT gates.

The coupling between the ancilla resonator and each of the data resonators in each stabilizer may be a non-linear coupling. For instance, the LDPC quantum superconducting circuit may comprise a plurality of non-linear elements each configured to, in combination with signals from the command circuit, stabilize data cat qubits in the data resonators. The non-linear elements may be: a Josephson Junction, a SNAIL, an RF-or DC-SQUID, or an asymmetrically-threaded SQUID (ATS). The relevant resonant mode or modes of the ancilla resonator may partially participate in the non-linear element of the data resonators, such that the coupling between the ancilla resonator and each of the data resonators in each stabilizer is non-linear coupling.

The command circuit may be configured to repeatedly determine the error syndrome on each stabilizer of the first plurality of stabilizers by: (i) stabilizing or preparing the ancilla qubit or ancilla cat qubit in a "|->" or "|+>" state of the X operator in the associated ancilla resonator of the stabilizer, (ii) sequentially performing CNOT gates between the ancilla cat qubit and each of the data cat qubits stabilized in the data resonators of the stabilizer, and (iii) applying a measurement operation of the X operator on the ancilla cat qubit in the associated ancilla resonator of the stabilizer to determine the presence of a phase flip on at least one of the data cat qubits stabilized in the data resonators of the stabilizer.

The ancilla qubits may be ancilla cat qubits; and wherein the command circuit may be configured to implement a multi-qubit quantum gate through two or more of the couplings between the ancilla qubit stabilized in the ancilla resonator and respectively two or more data cat qubits stabilized in the data resonators. The command circuit may further be configured to determine the error syndrome on each stabilizer of the first plurality of stabilizers by: (i) stabilizing or preparing the ancilla cat qubit in a "|->" or "|+>" state of the X operator in the associated ancilla resonator of the stabilizer, (ii) performing CNOT gates between the ancilla cat qubit and each of the data cat qubits stabilized in the data resonators of the stabilizer, wherein at least two of the CNOT gates between the ancilla cat qubit and respectively at least two of the data cat qubits are performed substantially simultaneously, and (iii) applying a measurement operation of the X operator on the ancilla cat qubit in the associated ancilla resonator of the stabilizer to determine the presence of a phase flip on at least one of the data cat qubits stabilized in the data resonators of the stabilizer.

This enables the implementation of two or more CNOT gates simultaneously, i.e. in a single multi-qubit gate. The Applicant has recognized how to perform multi-qubit gates in the superconducting system of cat qubits, thus combining an advantage of simultaneous multi-qubit gates (usually only seen in ion-trap or cold atom-based quantum computing architectures) with the benefits of a superconducting based architecture such as high-fidelity control operations, long coherence times, and sophisticated fabrication techniques. As a result, the number of steps involved in the error syndrome determination is reduced. Thus, the probability of accumulating errors due to the finite time required to perform each CNOT gate is reduced. As will be appreciated, the weight of a stabilizer is partially limited by the accrued probability of an error occurring during a chain of successive CNOT gates. Thus, the Applicant has discovered that configuring the command circuit to determine the error syndrome on each stabilizer in this simultaneous manner advantageously enables higher stabilizer weights to be used, e.g., allowing stabilizer weights of between 6 and 10.

Each data resonator may have a respective resonance frequency and each ancilla resonator may have a respective resonance frequency. The command circuit may be further configured to determine the error syndrome on each stabilizer of the first plurality of stabilizers by: (a) in step (i) stabilizing the ancilla cat qubit in a "|->" or "|+>" state of the X operator, and, while stabilizing the ancilla cat qubit, applying an electromagnetic radiation having a frequency substantially equal to the ancilla resonance frequency of the associated ancilla resonator of the stabilizer such that the data resonators of said stabilizer and said ancilla resonator are substantially simultaneously subject to a Hamiltonian resulting from said radiation having said ancilla resonance frequency; and (b) turning off the electromagnetic radiation having the ancilla resonance frequency after a chosen duration. The command circuit may be further configured to apply a dissipative stabilization to the data resonators depending on time and on the state of the ancilla cat qubit during said operation (a). The command circuit may be configured to apply a measurement operation of the X operator on the ancilla cat qubit in the associated ancilla resonator of the stabilizer after step (b).

Each stabilizer of the first plurality of stabilizers: (i) may be formed from between 4 and 9 data resonators selected from a three-by-three sub-array of the two-dimensional array spanning three consecutive rows along the first direction and three consecutive rows along the second direction.

According to the first and second aspects, each stabilizer of the first plurality of stabilizers is formed from between 6 and 9 data resonators selected from a three-by-three sub-array of the two-dimensional array spanning three consecutive rows along the first direction and three consecutive rows along the second direction. The Applicant has discovered this provides a good compromise between length of connections between e.g. the ancilla resonator and each of the data resonators of a stabilizer, whilst keeping the weight of the stabilizer at a reasonable value.

Each stabilizer of the first plurality of stabilizers may be selected from the group comprising: a ring-like shape formed from 8 data resonators; a C-like shape forward-facing along the second direction formed from 7 data resonators; a C-like shape backward-facing along the second direction formed from 7 data resonators; an I-like shape formed from 7 data resonators. The present Applicants have discovered that these stabilizers give particularly good results, and in particular provides a value of kd/n greater than 2.

According to the first aspect, at least two of said stabilizers may be distinct, and/or the edges of the two-dimensional array defines a non-rectangular shape.

That is, at least one of the edges of the two-dimensional array is a non-straight edge. The Applicant has recognized that this enables the most optimal classical LDPC codes in a two-dimensional topology, such that the quantum system may be provided on a side of a chip.

According to the first and second aspects, the LDPC quantum superconducting circuit may further comprise a second plurality of stabilizers, wherein each stabilizer of the second plurality of stabilizers: (i) may be formed from between 2 and 10 data resonators selected from a seven-by-seven sub-array of the two-dimensional array spanning seven consecutive rows along the first direction and seven consecutive rows along the second direction, and (ii) may span over at least two consecutive rows and at least two consecutive columns, wherein a single data resonators is from the first row of the stabilizer in the first direction, or a single data resonators is from the final row of the stabilizer in the first direction, or a single data resonators is from the first row of the stabilizer in the second direction, or a single data resonators is from the final row of the stabilizer in the second direction. The command circuit may be configured to implement the classical LDPC error-correcting code with the first plurality of stabilizers and the second plurality of stabilizers which only corrects phase flip errors on the data cat qubits stabilized in the data resonators, the command circuit being further configured to determine an error syndrome on each stabilizer of the second plurality of stabilizers by performing a parity check on the data cat qubits stabilized in the data resonators of the respective stabilizer.

As will be appreciated, each stabilizer of the second plurality of stabilizers may have any of the features described above in relation to embodiments of the first plurality of stabilizers. For instance, each stabilizer of the second plurality of stabilizers may comprise an ancilla resonator of the plurality of ancilla resonators, and the command circuit may use the corresponding ancilla qubit stabilized in the ancilla resonator to perform a parity check on the data cat qubits stabilized in the data resonators of each stabilizer, to thereby determine an error syndrome on each stabilizer of the second plurality of stabilizers. The various embodiments relating to the determination of error syndromes on each of stabilizer of the first plurality of stabilizers may also apply to the stabilizers of the second plurality of stabilizers.

Preferably, each stabilizer of the second plurality of stabilizers is formed from between 3 and 9 data resonators selected from a three-by-three sub-array of the two-dimensional array spanning three consecutive rows along the first direction and three consecutive rows along the second direction.

According to the first and second aspects, the stabilizers of the first plurality of stabilizers and/or the stabilizers of the second plurality of stabilizers may each comprise less than seven data cat qubits, and/or associate data cat qubits spanning over at most four consecutive rows.

According to the first and second aspects, substantially all data cat qubits of a given row of the two-dimensional array may have the same stabilizer.

The Applicants have further discovered a system and method for performing a quantum gate, and in particular to applying a logical CNOT quantum gate with a logical qubit encoded in a classical LDPC error-correcting code, or between two logical qubits encoded in a classical LDPC error-correcting code, using the system of the first and second aspects.

Thus, in a third aspect, there is provided a quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit is associated with a logical X group of qubits of said LDPC quantum superconducting circuit which defines the support for the logical X operator of the target logical qubit, such that the routing path includes all of the data cat qubits of the routing circuit which are connected to the data cat qubits of the logical X group of the target logical qubit which form internal routing target qubits, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

c1) to prepare an internal routing target qubit with a $|+\rangle$ state or a $|-\rangle$ state, and to prepare the two ancilla of the routing path surrounding this internal routing target qubit with a $|0\rangle$ state or a $|1\rangle$ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit being further arranged to perform operations c1) to c4) on all but one of the internal routing target qubits, to perform operations c1) to c4) on the remaining internal routing target qubit using a single ancilla qubit, and to multiply the results of operation c4) on all internal routing target qubits to provide a MXX result,

said command circuit being further arranged:

d1) depending on the MXX result, to derive a quantum Z gate to be performed on the data cat qubits of the logical group of the control logical qubit, and

d2) to apply a measurement of operator Z on all data cat qubits in said routing path except the internal routing target qubits, and, based on the result of the product of the results, to derive a quantum X gate to be performed on the data cat qubits of the logical X group.

Preferably, the internal routing target qubit is prepared with a $|+\rangle$ state.

Preferably, the two routing-ancilla qubits of the path surrounding this internal routing target qubit are prepared with a |0⟩ state. If the two routing-ancilla qubits of the path surrounding this internal routing target qubit are prepared with |1⟩ state - the skilled person would be well aware of the need to keep track of the propagated logical X error in the path, which would need to be accounted for in further downstream operations.

Thus, in the third aspect, the logical X group of the target logical qubit may comprise a plurality of data cat qubits of the LDPC circuit, in which case the path includes all of the data cat qubits of the routing quantum superconducting circuit which correspond to the respective plurality data cat qubits of the LDPC circuit of the logical X group of the target logical qubit, and the corresponding data cat qubits of the routing circuit are designated as the internal routing target qubits.

In a similar manner, the logical X group of the target logical qubit may comprise a single data cat qubit of the LDPC circuit, in which case the path includes the single data cat qubit of the routing quantum superconducting circuit which corresponds to the respective single LDPC-data cat qubit of the logical X group of the target logical qubit, and this single routing-data cat qubit is designated as the internal routing target qubit.

Thus, in a fourth aspect, there is provided a quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit comprises a single data cat qubit of said LDPC quantum superconducting circuit which provides the support for the logical X operator of the target logical qubit, such that the routing path includes the only data cat qubit of the routing circuit which is connected to the single data cat qubit of the target logical qubit which forms an internal routing target qubit, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

c1) to prepare the internal routing target qubit with a |+⟩ or |-⟩ state, and to prepare one of the ancilla qubit of the routing path surrounding this internal routing target qubit with a |0⟩ or a |1⟩ state,

c2) to perform a first CNOT gate between the single prepared ancilla qubits and the internal routing target qubit, with the former being the target and latter being the control,

c3) to perform a second CNOT gate between the single prepared ancilla qubits and its neighboring data cat qubit in the routing path which is not the internal routing target qubit, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the single prepared ancilla qubit of the routing path neighboring it, and to multiply their result to provide an MXX result,

said command circuit being further arranged:

d1) depending on the MXX result, to derive a quantum Z gate to be performed on the data cat qubits of the logical group of the control logical qubit, and

d2) to apply a measurement of operator Z on all data cat qubits in said routing path except the internal routing target qubits, and, based on the result of the product of the results, to derive a quantum X gate to be performed on the data cat qubits of the logical X group.

Preferably, the internal routing target qubit is prepared with a $|+\rangle$ state.

Preferably, the two routing-ancilla qubits of the path surrounding this internal routing target qubit are prepared with a $|0\rangle$ state. If the single prepared routing-ancilla qubits of the path neighboring this internal routing target qubit is prepared with $|1\rangle$ state - the skilled person would be well aware of the need to keep track of the propagated logical X error in the path, which would need to be accounted for in further downstream operations.

In a fifth aspect, there is provided a quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit comprises a single data cat qubit of said LDPC quantum superconducting circuit which provides the support for the logical X operator of the target logical qubit and forms a main target qubit and the corresponding connected data cat qubit of the routing quantum superconducting circuit forms a routing target qubit, such that the routing path does not include the routing target qubit, wherein the routing path ends at an end path qubit which is a data cat qubit of the routing quantum superconducting circuit neighboring said routing target qubit, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

and said command circuit being further arranged:

c1) to prepare the routing target qubit with a $|+\rangle$ or a $|-\rangle$ state, and to prepare the ancilla qubit connecting the routing target qubit and the end path qubit with a $|0\rangle$ or a $|1\rangle$ state,

c2) to perform a first CNOT gate between the prepared ancilla qubit and the routing target qubit, with the former being the target and the latter being the control,

c3) to perform a second CNOT gate between the prepared ancilla qubit and the end path qubit, with the former being the control and the latter being the target, and a third CNOT gate between the main target qubit and the routing target qubit, with the former being the target and the latter being the control,

c4) to perform an MX operation on the routing target qubit and the prepared ancilla qubit, and to multiply their result to provide an MXX result,

d1) depending on the MXX result, to derive a quantum Z gate to be performed on the data cat qubits of the logical group of the control logical qubit,

d2) to apply a measurement of operator Z on all data cat qubits in said routing path, and, based on the result of the product of the results, to derive a quantum X gate to be performed on the data cat qubits of the logical X group.

Preferably, the routing target qubit is prepared with a $|+\rangle$ and the connecting ancilla qubit connecting is prepared with a $|0\rangle$, although as above the skilled person would be well aware of tracking if otherwise prepared in the other state(s).

In a sixth aspect, there is provided a quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit is associated with a logical X group of qubits of said LDPC quantum superconducting circuit which defines the support for the logical X operator of the target logical qubit, such that the routing path includes all of the data cat qubits of the routing circuit (5) which are connected to the data cat qubits of the logical X group of the target logical qubit but one, these data cat qubits forming internal routing target qubits and the remaining data cat qubit connected to the data cat qubits of the logical X group of the target logical qubit forming a routing target qubit, wherein the routing path ends at an end path qubit which is a data cat qubit of the routing superconducting quantum circuit (5) neighboring said routing target qubit, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

c1) to prepare an internal routing target qubit with a $|+\rangle$ state or a $|-\rangle$ state, and to prepare the two ancilla qubit of the routing path surrounding this internal routing target qubits with a $|0\rangle$ state or a $|1\rangle$ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit being arranged to perform operations c1) to c4) on all of the internal routing target qubits, and being further arranged:

c5) to prepare the routing target qubit with a $|+\rangle$ state, and to prepare the ancilla qubit connecting the routing target qubit and the end path qubit with a $|0\rangle$ state,

c6) to perform a first CNOT gate between the prepared ancilla qubit and the routing target qubit, with the former being the target and the latter being the control,

c7) to perform a second CNOT gate between the prepared ancilla qubit and the end path qubit, with the former being the control and the latter being the target, and a third CNOT gate between the data cat qubit of LDPC quantum superconducting circuit connected to the routing target qubit and the routing target qubit, with the former being the target and the latter being the control,

c8) to perform an MX operation on the routing target qubit and the prepared ancilla qubit, and to multiply their result,

said command circuit being further arranged to multiply the results of operation c4) together and with the result of operation c8) to provide a MXX result,

d1) depending on the MXX result, to derive a quantum Z gate to be performed on the data cat qubits of the logical group of the control logical qubit,

d2) to apply a measurement of operator Z on all data cat qubits in said routing path except the internal routing target qubits, and, based on the result of the product of the results, to derive a quantum X gate to be performed on the data cat qubits of the logical X group.

Preferably, the internal routing target qubit is prepared with a |+⟩ and the two ancilla qubits are prepared with a |0⟩, although as above the skilled person would be well aware of tracking if otherwise prepared in the other state(s).

As will be appreciated, according to any of the aspects of the present disclosure, the logical X group of qubits of said LDPC quantum superconducting circuit which are associated with the target logical qubit may share an odd number of qubits with the logical group (namely logical Z group) of the target logical qubit and an even number of qubits with all other logical groups (namely logical Z groups) of respective logical qubits in the LDPC quantum superconducting circuit. In the case wherein there is only a single data cat qubit of said LDPC quantum superconducting circuit which provides the support for the logical X operator of the target logical qubit, this is still satisfied (e.g. for a logical X group comprising only the single qubit).

The quantum system may be configured such that the quantum Z gate of operation d1) and/or the quantum X gate of operation d2) may be stored in order to be applied later. As will be appreciated, this may advantageously reduce the number of physical operations to be applied.

In a seventh aspect, there is provided quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said routing quantum superconducting circuit comprising a target repetition code comprising a succession of data cat qubits and ancilla qubits,

said command circuit being arranged, based on a control logical qubit encoded in said LDPC quantum superconducting circuit:

a) to define a repetition code path within said routing quantum superconducting circuit which connects all data cat qubits corresponding to the logical group of said control logical qubit with an ancilla qubit being included between each pair of data cat qubits, said repetition code path extending until an end path qubit which is a data cat qubit of the routing quantum superconducting circuit neighboring a data cat qubit of said target repetition code, with a bridging ancilla qubit between said end path qubit and said neighboring data cat qubit of said target repetition code

b1) to prepare all of the data cat qubits within said repetition code path with a "|0⟩" state or a "|1⟩" state, and the ancilla qubits with a "| +⟩" state or "| -⟩" state,

b2) to repeatedly measure the stabilizers in the repetition code path to prepare a routing repetition code in a "$|0\rangle_L$" state or a "$|1\rangle_L$" state in the repetition code path,

b3) to perform a CNOT gate with each of the data cat qubits of the logical group of said control logical qubit being the control, each time with the corresponding data cat qubit in said routing quantum superconducting circuit (5) being the target,

and said command circuit being further arranged:

c1) to prepare the bridging ancilla qubit with a |+⟩ or a |-⟩ state,

c2) to perform a first CNOT gate between the prepared bridging ancilla qubit and the neighboring data cat qubit of the repetition code, with the former being the control and the latter being the target,

c3) to perform a second CNOT gate between the prepared bridging ancilla qubit and the end path qubit, with the former being the control and the latter being the target,

c4) to perform an MX operation on the performed bridging ancilla qubit, to provide an MXX result,

d1) depending on the MXX result, to derive a quantum Z gate to be performed on the data cat qubits of the logical group of the control logical qubit,

d2) to apply a measurement of operator Z on all data cat qubits in said repetition code path, and, based on the result of the product of the results, to derive a quantum X gate to be performed on an odd number of data cat qubits of the target repetition code.

Preferably, all of the data cat qubits within said repetition code path with a "|0⟩" state and the ancilla qubits with a |

+⟩, although as above the skilled person would be well aware of tracking if otherwise prepared in the other state(s).

In an eighth aspect, there is provided quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said routing quantum superconducting circuit comprising a control repetition code comprising a succession of data cat qubits and ancilla qubits configured to encode a control logical qubit, the data cat qubits of the control repetition code forming repetition data qubits, wherein the plurality of repetition data qubits form a logical group which defines the support for the Z logical operator of the control logical qubit, and wherein the control logical qubit further comprises a logical X group of one or more repetition data qubit(s) which defines the support for the X logical operator of the control logical qubit,

based on said control logical qubit encoded in said routing quantum superconducting circuit and a target logical data qubit encoded in said LDPC quantum superconducting circuit, wherein the target logical qubit is associated with a logical X group of one or more qubits of said LDPC quantum superconducting circuit which defines the support for the logical X operator of the target logical qubit, wherein the one or more data cat qubits of the routing quantum superconducting circuit each coupled to a respective one of the one or more data cat qubits of the logical X group of the target logical qubit form one or more routing target qubits of the routing quantum superconducting circuit, said command circuit being arranged:

a) to define a routing path within said routing quantum superconducting circuit, wherein the path includes a plurality of data cat qubits which are each coupled to an adjacent repetition data qubit such that each repetition data qubit is coupled to a respective data cat qubit in the path, wherein the path includes an ancilla qubit between each pair of data cat qubits, the routing path being configured such that the routing path comprises a routing repetition code implemented on all of the data cat qubits of the path, wherein a routing logical qubit is encoded using the routing repetition code,

b) to perform a CNOT gate with each of the repetition data qubits of the logical group of the control logical qubit being the control, each time with the corresponding adjacent coupled data cat qubit in the routing path being the target,

c) to perform an MX operation on at least the one or more routing target qubits to provide an MXX result; and

d1) depending on the value of the MXX result, to derive a quantum Z gate to be performed on the repetition data qubits of the logical group of the control logical qubit, and

d2) to apply a measurement of operator Z on all data cat qubits in said routing path except any routing target qubits in said routing path, and, based on the result of the product of the results, to derive a quantum X gate to be performed on the data cat qubits of the logical X group of the target logical qubit.

Prior to performing an MX operation on at least the one or more routing target qubits, the command circuit may be arranged, for each of the one or more qubits of the logical X group of the target logical qubit, to perform a CNOT gate between the data cat qubit the logical X group of the target logical qubit and the routing target qubit coupled to the that data cat qubit, with the former being the target and the latter being the control.

Preferably, the n data resonators of said routing quantum superconducting circuit are arranged in a similar two-dimensional array as the n data resonators of the LDPC quantum superconducting circuit, such that the n data resonators of said routing quantum superconducting circuit connected to a respective one of said n data resonators of said LDPC quantum superconducting circuit effectively "mirror" those of the LDPC quantum superconducting circuit.

Preferably, each of the n data resonators of said routing quantum superconducting circuit is connected to each of its nearest neighbours in the two-dimensional array. This "all-to-all" connectivity is beneficial as it enables both the control logical qubit and the routing path in which the routing logical quit is encoded to be positioned anywhere in the routing quantum superconducting circuit.

As will be appreciated, if the logical X group of the target logical qubit comprises only a single LDPC-data cat qubit, then the second plurality of routing-data cat qubits comprises a routing-data cat qubit which is coupled to the single LDPC-data cat qubit of the logical X group of the target logical qubit. Similarly, if the logical X group of the target logical qubit comprises only a plurality of LDPC-data cat qubits, then the second plurality of routing-data cat qubits comprises a plurality of routing-data cat qubit, each of which is coupled respectively to one of the plurality of LDPC-data cat qubits of the logical X group of the target logical qubit. In either case, the second plurality of routing-data cat qubits may comprise other routing-data cat qubits which are each coupled to a respective LDPC-data cat qubit of LDPC quantum superconducting circuit regardless of whether or not the respective LDPC-data cat qubits are part of the logical X group of the target logical qubit or not.

A such, preferably the routing quantum superconducting circuit may comprise a number n of routing-data cat qubits arranged in a two-dimensional array, wherein each of said n routing-data cat qubits is coupled to a respective one of the n LDPC-data cat qubits. This ensures greatest flexibility in the relative positioning of the target and control logical qubits in their corresponding circuits, as each LDPC-data cat qubit is coupled respectively to a routing-data cat qubit of the routing quantum superconducting circuit.

As will be appreciated, the path is thus a continuous route defined in the routing quantum superconducting circuit connecting two routing-data cat qubits at either end of the path, and is comprised of pairs of routing-data cat qubits which are connected via a routing-ancilla qubit.

The one or more routing-data cat qubit(s) each coupled to a respective one of the one or more LDPC-data cat qubit(s) of the logical X-group of the target logical qubit, namely the one or more routing target qubits, may be inside or outside the path. Thus, a routing target qubit outside the path so defined may be referred to as an "external routing target qubit". Conversely, a routing target qubit inside the path so defined may be referred to as an "internal routing target qubit".

The repetition-data cat qubits used in the first (control) repetition phase-flip error correcting code may be ones of the number n of routing-data cat qubits arranged in the two-dimensional array of the routing quantum superconducting circuit which are each coupled to a respective one of the n LDPC-data cat qubits.

Preferably, the path is defined such that the path at least includes a plurality of routing-data cat qubits which are each immediately adjacent to a respective repetition-data cat qubit. That is, each of the corresponding immediately adjacent routing-data cat qubit in the path is a neighbor of the respective repetition-data cat qubits. By being immediately adjacent, the resulting operation (b) may be performed with the best fidelity, as the coupling between the immediately adjacent routing-data cat qubit in the path and the corresponding repetition-data cat qubit is direct, or comprised of the minimal coupling path/trajectory, or the coupling is maximal... **In** this case, operation (b) comprises performing a CNOT gate with each of the repetition-data cat qubits of the logical Z group of the control logical qubit being the control, each time with the corresponding adjacent routing-data cat qubit in the path being the target.

However, the Applicant can conceive that path is defined otherwise, for instance the path may be defined such that the path includes at least one routing-data cat qubit which is not immediately adjacent to a respective repetition-data cat qubit. Instead, the at least one routing-data cat qubit which is not immediately adjacent to a respective repetition-data cat qubit may for instance be a next-nearest neighbor, such that there is an intervening routing-data cat qubit positioned in-between the routing-data cat qubit of the path in question and the respective repetition-data cat qubit. What is important however is that the routing-data cat qubit is coupled to a respective repetition-data cat qubit such that a CNOT gate can be performed using the routing-data cat qubit and the respective repetition-data cat qubit. The coupling may be through means of a "direct" connection between the routing-data cat qubit and the respective repetition-data cat qubit, or via subset of couplings and operations involving the intervening routing-data cat qubit and/or a routing-ancilla qubit between the intervening routing-data cat qubit and the routing-data cat qubit in question and/or a routing-ancilla qubit between the intervening routing-data cat qubit and the respective repetition-data cat qubit.

Operation (c) may comprise selectively performing MXX operations and/or MXXX operations between (i) chosen routing-data cat qubits of the path and (ii) chosen routing-data cat qubits of the routing quantum superconducting circuit which correspond to the logical X group of the target logical qubit, and thereafter multiplying the results of these MXX operations and/or MXXX operations to obtain a MXX result.

Operation (a) may comprise preparing all of the routing-data cat qubits within the path with a "$|0\rangle_L$" state or a "$|1\rangle_L$" state of the second (routing) repetition code, such that the routing (repetition) logical qubit is encoded using the second (routing) repetition code in a "$|0\rangle_L$" state or a "$|1\rangle_L$" state.

In an embodiment according the eighth aspect, the logical X group of the target logical qubit comprises only a single LDPC-data cat qubit such that the routing quantum superconducting circuit comprises a single routing target qubit, the command circuit being arranged to:

> in operation (a), define the path such that the path does not include the single routing target qubit which forms an external routing target qubit, wherein the path is defined such that an end of the path comprises an end path qubit, wherein the end path qubit is the routing-data cat qubit which is a neighbor of the external routing target qubit, and selectively using the routing-ancilla qubits to prepare all of the routing-data cat qubits within said path with a "$|0\rangle_L$" state or a "$|1\rangle_L$" state of the second (routing) repetition code;
> the command circuit being further arranged to:

c1) prepare the external routing target qubit with a $|+\rangle$ or a $|-\rangle$ state, and preparing the ancilla qubit connecting the routing target qubit and the end path qubit with a $|0\rangle$ state or a $|1\rangle$,

c2) perform a first CNOT gate between the prepared ancilla qubit and the external routing target qubit, with the former being the target and the latter being the control,

c3) perform a second CNOT gate between the prepared ancilla qubit and the end path qubit, with the former being the control and the latter being the target, and a third CNOT gate between the single LDPC-data cat qubit of the logical X group of the target logical qubit and the external routing target qubit, with the former being the target and the latter being the control,

c4) perform an MX operation on at least the external routing target qubit to provide an MXX result.

In an embodiment according the eighth aspect, the logical X group of the target logical qubit comprises a plurality of LDPC-data cat qubit such that the routing quantum superconducting circuit comprises a plurality of routing target qubits, the command circuit being arranged to:

in operation (a), define the path such that the path includes all of the routing target qubits which form internal routing target qubits, and selectively using the routing-ancilla qubits to prepare all of the routing-data cat qubits within said path with a "$|0\rangle_L$" state or a "$|1\rangle_L$" state of the second (routing) repetition code;
the command circuit being further arranged to:

c1) prepare an internal routing target qubit with a $|+\rangle$ or a $|-\rangle$ state, and preparing the two routing-ancilla qubits of the path surrounding this internal routing target qubit with a $|0\rangle$ or a $|1\rangle$ state,

c2) perform a first CNOT gate between the pair of prepared routing-ancilla qubits and the internal routing target qubit, with the former being the target and latter being the control,

c3) perform a second CNOT gate between the pair of prepared routing-ancilla qubits and two neighboring data cat qubits in the path, with the former being the control and the latter being the target, and a third CNOT gate between the LDPC-data cat qubit coupled to the internal routing target qubit and the internal routing target qubit, with the former being the target and the latter being the control,

c4) perform an MX operation on at least the internal routing target qubit, the command circuit being further arranged to:

perform operations c1) to c4) on all but one of the internal routing target qubits, performing operations c1) to c4) on the remaining internal routing target qubit using a single ancilla qubit, and to multiply the results of operation c4) on all internal routing target qubits to provide the MXX result.

In an embodiment according the eighth aspect, the logical X group of the target logical qubit comprises only a single LDPC-data cat qubit such that the routing quantum superconducting circuit comprises a single routing target qubit, the command circuit being arranged to:

in operation (a), define the path such that the path includes the single routing target qubit which forms an internal routing target qubit, and selectively using the routing-ancilla qubits to prepare all of the routing-data cat qubits within said path with a "$|0\rangle_L$" state or a "$|1\rangle_L$" state of the second (routing) repetition code;
the method further comprising the operations of:

c1) prepare the internal routing target qubit with a $|+\rangle$ or a $|-\rangle$ state, and prepare one of the routing-ancilla qubits of the path surrounding this internal routing target qubit with a $|0\rangle$ or a $|1\rangle$ state,

c2) perform a first CNOT gate between the single prepared routing-ancilla qubits and the internal routing target qubit, with the former being the target and latter being the control,

c3) perform a second CNOT gate between the single prepared routing-ancilla qubits and its neighboring data cat qubit in the path which is not the internal routing target qubit, with the former being the control and the latter being the target, and a third CNOT gate between the single LDPC-data cat qubit of the logical X group of the target logical qubit and the internal routing target qubit, with the former being the target and the latter being the control,

c4) perform an MX operation on at least the internal routing target qubit to provide an MXX result.

In an embodiment according the eighth aspect, the logical X group of the target logical qubit comprises a plurality of LDPC-data cat qubit such that the routing quantum superconducting circuit comprises a plurality of routing target qubits, the command circuit being arranged to:

in operation (a), define the path such that the path includes all of the routing target qubits but one, which form internal routing target qubits, the remaining routing target qubit forming an external routing target qubit, wherein the path is defined such that an end of the path comprises an end path qubit, wherein the end path qubit is the routing-data cat qubit which is a neighbor of the routing target qubit;

the command circuit being further arranged to perform the following operations on all of the internal routing target qubits:

(c1) prepare an internal routing target qubits with a $|+\rangle$ or $|-\rangle$ state, and prepare the two routing-ancilla qubits of the path surrounding this internal routing target qubit with a $|0\rangle$ or $|1\rangle$ state;

(c2) perform a first CNOT gate between the pair of prepared routing-ancilla qubits and the internal routing target qubit, with the former being the target and latter being the control;

(c3) perform a second CNOT gate between the pair of prepared routing-ancilla qubits and two neighboring routing-data cat qubits in the path, with the former being the control and the latter being the target, and a third CNOT gate between the LDPC-data cat qubit of the logical X group of the target logical qubit coupled to the internal routing target qubit and the internal routing target qubit, with the former being the target and the latter being the control; and

(c4) perform an MX operation on at least the internal routing target qubit; and

the command circuit being further arranged to perform the following operations on the external routing target qubit:

(c5) prepare the external routing target qubit with a $|+\rangle$ state or $|-\rangle$ state, and preparing the routing-ancilla qubit connecting the external routing target qubit and the end path qubit with a $|0\rangle$ state or $|1\rangle$ state;

(c6) perform a first CNOT gate between the prepared routing-ancilla qubit and the external routing target qubit, with the former being the target and the latter being the control;

(c7) perform a second CNOT gate between the prepared routing-ancilla qubit and the end path qubit, with the former being the control and the latter being the target, and a third CNOT gate between the LDPC-data cat qubit of the logical X group of the target logical qubit coupled to the external routing target qubit and the routing target qubit, with the former being the target and the latter being the control; and

(c8) perform an MX operation on at least the routing target qubit;

wherein operation (c) further comprises multiplying the results of operations (c4) with the result of operation (c8) to provide the MXX result.

In an embodiment according the eighth aspect, the command circuit is arranged to:

in operation (a), define the path such that such one or more routing target qubits are outside the path and form external routing target qubits, wherein the path is defined such that an end of the path comprises an end path qubit, wherein the end path qubit is a routing-data cat qubit which is not a neighbor of at least one of the external routing target qubits; wherein the command circuit is further arranged to, in operation (a), define a continuous GHZ route in the routing quantum superconducting circuit such that an end of the GHZ route comprises an end route qubit, wherein the end route qubit is a routing-ancilla qubit which is external to the path and which is a neighbor of one of the routing-data cat qubits in the path, the neighboring routing-data cat qubit in the path forming a neighboring path qubit, the GHZ route further being defined to include the one or more external routing target qubits;

the command circuit being further arranged to perform the following operations on all of the external routing target qubits:

(c1) prepare any routing-ancilla qubit or routing-data cat qubit in the GHZ route with a $|+\rangle$ or a $|-\rangle$ state forming a prepared control qubit, and prepare all other routing-ancilla qubits or routing-data cat qubits with a with a $|0\rangle$ or a $|1\rangle$ state forming prepared cascading target qubits;

(c2) prepare a GHZ state from all of the routing-ancilla qubits and routing-data cat qubits in the GHZ route by at least performing a first CNOT gate between the prepared control qubit as the control and a neighboring prepared cascading target qubit as the target;

(c3) perform a second CNOT gate between the end route qubit and the neighboring path qubit, with the former being the control and the latter being the target, and a (third) CNOT gate between the LDPC-data cat qubit of the logical X group of the target logical qubit coupled to an external routing target qubit and the external routing target qubit, with the former being the target and the latter being the control; and

(c4) perform an MX operation on at least the external routing target qubit; wherein operation (c) further comprises multiplying the results of operations (c4) for all external routing target qubits to provide the MXX result.

Preferably, in any of the embodiments of the eight aspect, the external routing target qubit may be prepared with a $|+\rangle$ state, and the ancilla qubit connecting the routing target qubit and the end path qubit may be prepared with a $|0\rangle$ state.

The continuous GHZ route thus includes one or more successive routing-data cat qubits each connected to a neighboring routing-data cat qubit in the GHZ route via a routing-ancilla qubit.

As will be appreciated, in the case wherein there is only a single external routing target qubit, then multiplying the results of operations (c4) for all external routing target qubits to provide the MXX result comprises providing the MXX result from the MX operation on at least the single external routing target qubit.

Operation (c2) may comprise the command circuit being further arranged to prepare the GHZ state from all of the routing-ancilla qubits and routing-data cat qubits in the GHZ route by: (i) performing the first CNOT gate between the prepared control qubit as the control and a neighboring prepared cascading target qubit as the target so as to create an initial GHZ state, (ii) performing further CNOT gate between the first GHZ state as the control and another neighboring prepared cascading target qubit as the target or performing a second CNOT between the first GHZ state as the control and both of the neighboring prepared cascading target qubit as the targets to create a further GHZ state, and (iii) repeating operation (ii) until the GHZ state is prepared from all of the routing-ancilla qubits and routing-data cat qubits in the GHZ route.

More generally, according to one of the third to eighth aspects, and any embodiments thereof, the command circuit may be further arranged to repeat operations c1) to c4) and/or c5) to c8) a plurality of times, and to determine a majority vote to provide the MXX result. Additionally or alternatively, according to one of the third to eighth aspects, and any embodiments thereof the command circuit may be configured such that the quantum Z gate and/or the quantum X gate are stored in order to be applied later.

In an ninth aspect, there is provided quantum logic system for performing a quantum gate, comprising said quantum system according any of the first or second aspects, or any embodiments thereof, and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said routing quantum superconducting circuit comprising a repetition code comprising a succession of data cat qubits and ancilla qubits,

said command circuit being arranged, based on a control logical qubit encoded in said LDPC quantum superconducting circuit:

i) to define a repetition code path within said routing quantum superconducting circuit which connects all data cat qubits corresponding to the logical group of said control logical qubit with an ancilla qubit being included between each pair of data cat qubits, wherein said repetition code path comprises said repetition code, and

ii) to perform a CNOT gate with each of the data cat qubits of the logical group of said control logical qubit being the control, each time with the corresponding data cat qubit in said routing quantum superconducting circuit being the target.

According to any of the third to ninth aspects, and any embodiments thereof, the command circuit being configured to stabilize an ancilla qubit in an ancilla resonator of the routing quantum superconducting circuit may for instance include preparing or initializing a qubit. For example, the command circuit may be configured to prepare or initialize a transmon qubit in a given state as the ancilla qubit, e.g., such as the transmon ground state or transmon first excited state. Other types of qubits such as fluxonium, heavy fluxonium, or others can be used.

The ancilla qubits of the routing quantum superconducting circuit may be ancilla cat qubits. That is, command circuit may be configured to stabilize ancilla cat qubits in the ancilla resonators of the routing quantum superconducting circuit. The command circuit may be configured to stabilize ancilla cat qubits in the ancilla resonators using a dissipative stabilization.

The command circuit may be configured to measure the stabilizers of the repetition code via the implementation of two CNOT gates simultaneously, i.e. in a single multi-qubit gate, between two data cat qubits and a single ancillar cat qubit.

The data resonators in the LDPC quantum superconducting circuit and/or data resonators in the routing quantum superconducting circuit may be superconducting electromagnetic resonators. Alternatively, the data resonators may be nano-mechanical resonators, such as nanomechanical membranes or periodically patterned suspended nanostructures supporting localized acoustic resonant GHz frequencies. These periodically patterned suspended nanostructures may for instance be fabricated from a piezoelectric material such as LiNbO3 so as to enable coupling of the resonant frequencies of to the non-linear superconducting circuits. The Applicant also envisages that some of the data resonators may be superconducting electromagnetic resonators and others of the data resonators may be nano-mechanical resonators.

Also, it will be appreciated that the device or associated method of the third to eight aspects may comprise any (or all) of the features described above in relation to the first and second aspects.

The system and method of the third to ninth aspects, and any embodiments thereof, combines the advantages of using a classical LDPC code which is readily compatible with current superconducting circuit technologies (namely superconducting cat qubits) to increase the threshold, whilst enabling logical operations by means of a repetition code with cat qubits. Thus, the method and systems of the present disclosure, in all of its aspects and embodiments, may drastically reduce the overhead of fault-tolerant quantum computing architectures with cat qubits, whilst crucially enabling logical operations. Thus, the method and systems of the present disclosure (in all of its aspects and embodiments) provides the first implementation in a superconducting architecture for performing logical quantum operations with an LDPC error correction scheme.

As will be appreciated, a quantum logic system is a system configured to apply quantum logical operations, i.e. logical operations between two or more logical qubits.

For the avoidance of doubt, the terms "LDPC circuit" and "LDPC quantum superconducting circuit" may be used interchangeably. Similarly, the terms "routing circuit" and "routing quantum superconducting circuit" may be used interchangeably. Similarly, the term "LDPC-data cat qubit" refers to a data cat qubit of the LDPC circuit, the term "routing-data cat qubit" refers to a data cat qubit of the routing circuit, and the term "routing-ancilla qubit" refers to an ancilla qubit of the routing circuit.

Other features and advantages of the invention will readily appear in the following description of the drawings, which show exemplary embodiments of the invention and on which:

- Figure 1 shows a generic view of a quantum system for performing a classical LDPC error-correcting code according to an embodiment of the invention using cat qubits,
- Figure 2 shows an example of how a cellular automaton rule is used in the context of the embodiment of Figure 1 with an L-shaped stabilizer motif,
- Figure 3 shows various stabilizer motif shapes which may be used according to an embodiment of the invention,
- Figure 4 shows various stabilizer motif shapes which may be used according to an embodiment of the invention,
- Figure 5 shows schematic views of quantum systems of figure 1 with the use of various stabilizer motifs, according to various embodiments of the invention,
- Figure 6 shows an example of a logical base group obtained by spanning an inverted T-shape stabilizer motif, according to an embodiment of the invention,
- Figure 7 shows an example of another logical base group obtained by spanning a cross-shaped stabilizer motif, according to an embodiment of the invention,
- Figure 8 shows an example of a logical group obtained by combining two logical base groups, according to an embodiment of the invention,
- Figure 9 shows an example of converting stabilizer motifs into a parity check matrix, according to an embodiment of the invention,
- Figure 10 shows an example method using Gaussian elimination to a transform parity matrix into a generator matrix, according to an embodiment of the invention,
- Figure 11 shows various codes obtained by varying the stabilizer motifs and optimizing their allocation,
- Figure 12 shows an example of different stabilizers used at two of the boundaries of the grid-like array, according to an embodiment of the invention,
- Figure 13 shows exemplary error syndrome measurement operations performed by the system of figures 1 to 12 depending on the stabilizer motif shape, according to an embodiment of the invention,
- Figure 14 shows a generic diagram of a CXX gate between two data cat qubit and an ancilla cat qubit, according to an embodiment of the invention,
- Figure 15 shows a diagram explaining how the quantum gate of Figure 14 is executed, according to an embodiment of the invention,
- Figure 16 shows a graph demonstrating the performance of the quantum gate of Figure 14,
- Figure 17 shows a diagram of a compensation scheme for the CXX gate of Figure 14, according to an embodiment of the invention,
- Figure 18 shows a generic diagram of a measurement quantum system using the quantum gate of Figure 14, according to an embodiment of the invention,

- Figure 19 shows a diagram explaining how the measurement quantum gate of Figure 18 is executed, according to an embodiment of the invention,
- Figure 20 shows a generic diagram of a CX^N gate between N data cat qubits and an ancilla cat qubit, according to an embodiment of the invention,
- Figure 21 shows a diagram explaining how the quantum gate of Figure 20 is executed, according to an embodiment of the invention,
- Figure 22 shows a generic view of a quantum system for performing a logical CNOT quantum gate between two logical qubits both using a classical LDPC error-correcting code according to an embodiment of the invention, as well as a circuit equivalent view of the operations for performing a logical CNOT quantum gate according to an embodiment of the invention,
- Figure 23 shows different scenarios for performing a logical CNOT quantum gate between two logical qubits both using a classical LDPC error-correcting code according, according to embodiments of the invention,
- Figure 24 shows an exemplary manner to perform part of an operation of a logical CNOT quantum gate, according to an embodiment of the invention,
- Figure 25 shows an exemplary manner to perform part of an operation of a logical CNOT quantum gate, according to an embodiment of the invention,
- Figure 26 shows an exemplary manner to perform a CNOT between a logical qubit encoded in a classical LDPC code and a repetition code in a routing circuit, according to an embodiment of the invention
- Figure 27 shows a generic view of a quantum system for performing a logical CNOT quantum gate between a logical qubit encoded in using a repetition code as control and a logical qubit encoded using a classical LDPC error-correcting code as target according to an embodiment of the invention, as well as a circuit equivalent view of the operations for performing a logical CNOT quantum gate according to an embodiment of the invention,
- Figure 28 shows different scenarios for performing a logical CNOT quantum gate between a logical qubit encoded in using a repetition code as control and a logical qubit encoded using a classical LDPC error-correcting code as target, according to embodiments of the invention,
- Figure 29 shows an exemplary manner to perform part of an operation of a logical CNOT quantum gate, according to an embodiment of the invention,
- Figure 30 shows an exemplary manner to perform part of an operation of a logical CNOT quantum gate, according to an embodiment of the invention, and
- Figure 31 shows an exemplary flip chip architecture for manufacturing the quantum system of figures 22 to 30.

The drawings and the following description are comprised for the most part of positive and well-defined features. As a result, they are not only useful in understanding the invention, but they can also be used to contribute to its definition, should the need arise.

The description may make reference or use elements protected or protectable by copyright. The Applicant does not object to the reproduction of those elements in as much as it is limited to the necessary legal publications, however this should not be construed as a waiver of rights or any form of license.

### B. Cat qubits

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode. A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error-correcting code is sufficient to correct the remaining phase-flip. This can be for instance a repetition code defined in the dual base or any other state-of-the-art error-correcting code.

## C. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2 - \alpha^2)b^\dagger + \mathrm{h.\,c.}$, where b is the photon annihilation operator of the buffer mode b and $g_2$ is the two-photon coupling rate, by applying to the four-wave mixing device a pump at frequency | $2f_a$ - $f_b$| and a drive of the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$, where $K$ is the amplitude of the Kerr Hamiltonian, $a$ is the photon annihilation operator, and $|\alpha|^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + \mathrm{h.\,c.}$, where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}\left(\left(\cosh(r)a + \sinh(r)e^{i\theta}a^\dagger\right)^2 - \alpha^2\right)b^\dagger + \mathrm{h.\,c.}$, where b is the photon annihilation operator of mode b and $g_{sc}$ is the squeezed two-photon coupling rate, with several pumps at frequencies |$2f_a$ - $f_b$|, $f_b$ and $2f_a + f_b$, and a drive of the buffer mode b at frequency $f_b$ provided $g_{sc} < \kappa_b$.

f) a variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \mathrm{h.\,c.}$, where $g_2$ is the amplitude of a pump at frequency |$2f_a$ - $f_b$|, $a$ is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

g) a resonant dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/_\hbar = g_2(a^2 - \alpha^2)b^\dagger + \mathrm{h.c.}$, where $b$ is the photon annihilation operator of the buffer mode b provided the mode frequencies verify substantially $2f_a = f_b$ and $g_2 < \kappa_b$ to which a drive of the buffer mode at frequency $f_b$ is added.

The present invention may implement any of these stabilization schemes to generate the data cat qubits and the ancilla qubits used in the quantum system implementing a classical LDPC error-correcting code.

D. Quantum system for performing a classical LDPC code

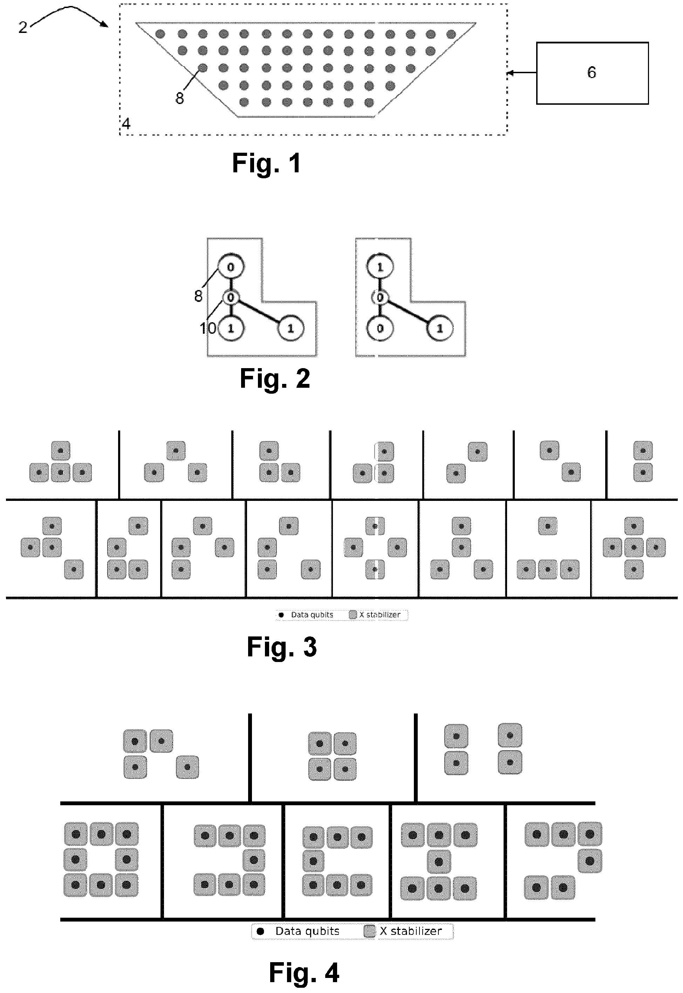

Figure 1 illustrates a quantum system 2 for performing a classical LDPC code.

As will appear below, the Applicant has discovered a design for a quantum system which allows to perform a classical LDPC code in which data cat qubits are basis elements of the code which allow to encode logical qubits. Due to the noise-bias of cat qubits, this error-correcting code is designed to protect against phase-flips.

In the context of the present disclosure, "data cat qubit" and "target qubit" are interchangeable and designate physical qubits which data is sought to be read, controlled or corrected. In the same way, "control cat qubit" and "ancilla qubit" are interchangeable and designate physical qubits which are used to read the photon parity of the data cat qubits for the above-mentioned purposes. In other words, by data cat qubit, it is meant that this physical qubit contains the quantum information that the classical LDPC code seeks to protect. By ancilla qubit, it is meant the complement of the data cat qubit in the classical LPCD code, i.e., this physical qubit is used to detect errors of the data cat qubit. In the following, the ancilla qubits will preferably be cat qubits. However, other types of qubits such as transmon, fluxonium or others can be used.

Further below, a quantum system implementing a classical LDPC code and allowing to perform logical CNOT gates between logical qubits will be described. The performance of the LDPC code or of the logical CNOT gates will involve performing CXX and MXX gates (or more generally CX$^s$ or MX$^s$ depending on the weight s of the stabilizers). In the following, the expression "CNOTNOT gate", "CNOTNOT quantum gate", "CXX gate" or "CXX quantum gate" can be used interchangeably. Further below, the same will be true for the expressions "MNOTNOT operation", "MNOTNOT quantum operation", "MXX operation" or "MXX quantum operation". These gates / operations can be performed sequentially, as it is conventionally known. Alternatively, they may also be made simultaneously, as described below.

As appears on figure 1, quantum system 2 comprises an LDPC quantum superconducting circuit 4, and a command circuit 6. LDPC quantum superconducting circuit 4 comprises data resonators 8 and ancilla resonators 10 not shown on figure 1.

In the example described herein, the command circuit 6 is arranged to selectively apply radiation to the data resonators 8 (respectively to the ancilla resonators 10) in such a manner that each data resonator 8 may stabilize a respective data cat qubit (respectively an ancilla qubit). The ancilla qubit may or may not be a data cat qubit. Advantageously, the ancilla qubit is a cat qubit.

As mentioned above, any stabilization scheme described in section C. above can be implemented by the command circuit 6 to stabilize the qubits. In the following, the expression "data resonator" (respectively "ancilla resonator") and "data cat qubit" (respectively "ancilla qubit") are interchangeable.

While command circuit 6 is herein described as a single element, it may be composed of a plurality of command circuits which are each connected to one or more resonators and allow to stabilize the qubits.

In the example of figure 1, the LDPC quantum superconducting circuit 4 is realized such that the resonators used on the LDPC code are arranged on said LDPC quantum superconducting 4 circuit within a boundary having a substantially trapezoidal shape. Furthermore, within this boundary, the data resonators 8 are substantially aligned horizontally and vertically, thereby providing a grid-like geometry in which each data resonator and the corresponding data cat qubit substantially corresponds to the intersection of a row and a column of the grid-like geometry. In the following, the terms grid-like geometry and two-dimensional array may be used interchangeably when referring to the distribution of the data cat qubits.

This geometry is advantageous because it allows to implement the classical LDPC code, and it is further an optimal way to prevent having to deal with periodic boundary conditions which are particularly detrimental in the actual implementations of quantum circuit comprising cat qubits. As will appear below, due to the nature of the classical LDPC code of the present disclosure, if the boundary were periodic, there would be a need to link the data resonators on the left-most column with some of the resonators on the right-most column (and vice versa). In order to physically implement this connection, the quality of the error correction for the concerned logical qubits would be greatly damaged due to the difficulty to implement long range interactions between two cat qubits with high fidelity. An alternative construction consisting of bending the chip on which the cat qubits reside until opposite edges connect to form a cylinder is not practical under current fabrication processes.

In some embodiments, and in particular embodiments wherein not all stabilizer motifs are "pointy" (as discussed below), the LDPC quantum superconducting circuit 4 may be realized with a substantially rectangular boundary, whilst still benefiting from the advantages afforded by the present disclosure, such as still lowering the number of qubits necessary to encode logical qubits (e.g., as compared to a repetition code) and hence tackling the aforementioned overhead problem. This is particularly the case for so-called "non-pointy" stabilizer motif geometries, as will be discussed below.

Of course, the above definitions are not absolute: the data cat qubits may in a few instances be on the boundary or even slightly out of it, and the grid-like geometry need not form a perfectly straight-angled grid. Nonetheless, the more regular the geometry, the less problems will be encountered for manufacturing purposes and in view of the advantages provided in terms of regularity of the electromagnetic fields. Similarly, the quantum system 2 may comprise resonators outside the boundary, but unused for the realization of the LDPC code.

By substantially trapezoidal, it is meant that at least one of the sides of the boundary (e.g. the left-hand and right-hand sides in Figure 1) is not perpendicular to the bottom edge of the boundary. The trapezoidal side(s) also need not be perfectly straight lines, but may instead extend in a jagged or stepped fashion, which may be uniformly jagged/stepped or non-uniformly jagged/stepped. The trapezoidal sides may be symmetric with respect to each other, or alternatively may not be symmetric with respect to each other. What is important is that the trapezoidal sides enables the truncation of the grid-like geometry of data resonators at finite non-periodic boundaries, the form of which depends on the particular stabilizer motifs (discussed below) of the classical LDPC code, whilst maintaining the advantages of the classical LDPC code without resorting to the problematic implementation of periodic boundary conditions as discussed above.

In a similar manner, in some instances it can be conceived that the base and opposing side of the substantially trapezoidal shape need not be each perfectly straight, nor symmetric, nor parallel with respect to each other. That is, the grid-like geometry or two-dimensional array of data resonators may define a plurality of rows of data resonators extending along a length dimension L and a plurality of columns of data resonators extending along a height dimension H, the two-dimensional array extending from a first edge to a second edge in a first direction along the height dimension H and from a third edge to a fourth edge in a second direction along the length dimension L. Depending on the stabilizer motif geometries chosen (as discussed below), the first and second edges may be independently jagged/stepped or straight, and may be substantially parallel with each other or angled with respect to one another. Similarly, the third and fourth edges may be independently jagged/stepped or straight, and may be substantially parallel with each other or angled with respect to one another.

Furthermore, as the number of columns in the grid-like geometry grows, the number of logical qubits encoded increases, and the substantially trapezoidal boundary looks more and more rectangular, all the while not having periodical boundary conditions. As a result, in the following, the periodical boundary conditions are ignored in some figures, and the boundary and the grid-like geometry are shown as rectangular for simplicity's sake.

The classical LDPC code according to an aspect of the present disclosure not covered by the claims may be achieved by means of a cellular automaton rule (herein referred to as "the cellular automaton embodiment"), as shown on figure 2. In this figure, the most fundamental principle of the cellular automaton rule is shown.

The data cat qubits 8 are associated according to a stabilizer motif having a specific shape. In the following aspects of the present disclosure which are not covered by the claims, it will appear that all stabilizer motifs forming a classical LDPC code achieved by means of a cellular automaton rule are "pointy", i.e. they span across several rows of the grid-like geometry, and the data cat qubit in the upper row of the stabilizer motif comprises only one data cat qubit, hereinafter "the single data cat qubit".

More generally, in order to adopt the formalism of classical LDPC codes, the values "0" and "1" are used to designate the measured states. However, due to the noise-bias of cat qubits, it will be in fact "+" and "-" states which will be encoded and monitored, so as to protect the logical qubits against phase-flips.

In the cellular automaton embodiment, the single data cat qubit is arranged to store the parity of the other data cat qubits in the stabilizer motif. By using a cellular automaton rule to define the state of the single data cat qubit, the parity of the data cat qubits of the stabilizer motif can be measured in an ancilla qubit 10 and reflect the presence or the absence of an error:

- in the absence of an error in any of the data cat qubits of the stabilizer symbol, the parity check will return 0, since the value of the single data qubit is equal to the sum (modulo 2) of the two data qubits of the lower row.
- in the presence of an error, the parity check will return 1 and the parity checks of the neighboring stabilizers will allow to determine which of the data cat qubits of the stabilizer motif has failed.

The below table shows how the cellular automaton rule can be propagated from the bottom row, in the case where all data cat qubits are associated with a stabilizer motif of figure 2.

| 0 | 0 | 1 | 0 | 1 |
|---|---|---|---|---|
| 0 | 0 | 0 | 1 | 1 |
| 1 | 1 | 1 | 1 | 0 |
| 0 | 1 | 0 | 1 | 0 |
| 0 | 0 | 1 | 1 | 0 |

This type of encoding provides two significant advantages when implemented with cat qubits:

- it is a 2D local code, where each qubit laid out on a 2D chip interacts with its nearest neighbour. This is advantageous because it is harder to implement long range interactions between two qubits with high fidelity compared to nearest-neighbour interaction. This is also the reason why periodic boundary conditions have to be prevented.
- it requires the fewest possible number of crossing cables (a cable is required between qubits to make a CNOT gate between them) because crossing cables require either a flip chip architecture (if the cables can be divided into two subsets of non-overlapping cables) or air-bridges, which are hard to manufacture and generally suffer from lower fidelity.

Hence, by providing a substantially trapezoidal shape and by using cat qubits as elements of stabilizer motifs, the Applicant has discovered that it is possible to use a classical LDPC code to protect logical qubits. This is extremely surprising as classical LDPC codes can only protect against one type of errors, and are thus unsuitable for qubits.

Furthermore, the presence of periodic boundary conditions associated with cellular automaton rule codes rendered them incompatible with cat qubit implementations. Starting from this, the Applicant explored the possibilities associated with various stabilizer motifs. Figure 3 shows a set of stabilizer motifs of the cellular automaton embodiment which were tested by the Applicant and validated as offering a better kd/n value over the repetition code. These stabilizer motifs were chosen because they span over two or three consecutive rows and offer a low stabilizer weight.

Generally, the stabilizer weight, i.e. the number of physical bits in a single parity check, is also the number of data cat qubits 8 connected to the ancilla qubit 10 of the stabilizer. Since the parity check is a sequence of CNOT gates being performed between the ancilla qubit and each of the data cat qubits of the stabilizer motif, and since each CNOT gate takes a finite time, the more CNOT checks, the longer the parity check takes in time. And the longer the time of the parity check, the higher the chance an error occurs, notwithstanding the additional probability of error contributed by each CNOT performed. A particularly high stabilizer weight thus results in the threshold of the code performance being very low, which is highly undesirable for quantum error correction. Consequently, a lower stabilizer weight is enviable, and a trade-off must be found with respect to the increase in the value kd/n.

On the first row of figure 3, the following stabilizer motifs, not covered by the claimed invention, are shown: inverted T-shape;

inverted V-shape; L-shape; backwards-L-shape; trailing-diagonal; leading-diagonal; straight-line. Each stabilizer has a stabilizer weight of 2 or 3, and the columns of the data cat qubits of the lower row are less than two columns close to the column of the single data cat qubit.

On the second row of figure 3, various stabilizer motifs spanning over three rows, and the columns of the data cat qubits of the lower rows are less than two columns close to the column of the single data cat qubit.

During its research, the Applicant has recognized that stabilizer motifs which span over less than or equal to four rows and in which the data cat qubits of the lower rows are not distant by more than seven columns, and are each not distant by more than seven columns from the column of the single data cat qubit provide the best results in terms of optimizing the lowest stabilizer weight with the biggest kd/n value along with minimal length of connections between qubits of a stabilizer.

At first, the Applicant tested using a single stabilizer motif of the cellular automaton embodiment for all data cat qubits (except on the sides of the substantially trapezoidal boundary to prevent the periodic boundary conditions). In doing so and testing the distances of the resulting codes, the Applicant identified that the "inverted T-shape" stabilizer motif is particularly interesting.

The Applicant discovered that for the lowest weight stabilizers, many of the most optimal codes not covered by the claimed invention include only "pointy" stabilizer motifs.

The Applicant however recognised that a larger group of classical LDPC error-correcting codes also present distinct advantages over prior repetition codes, even if not of the form in the cellular automaton embodiment. This is especially the case for stabilisers having increasing weights, namely above four.

Figure 4 shows a set of stabilizer motifs formed from between 4 and 8 data resonators. These exemplary stabilizers span over two or three consecutive rows and still offer a reasonably low stabilizer weight. In particular, those stabilizer motifs along the lower row of figure 4 were tested by the Applicant and validated as offering a better kd/n value over the repetition code.

By balancing code performance with physically reasonable weights for the stabilizers, the Applicant has generally discovered that "non-pointy" formed from between 4 and 10 data resonators selected from a seven-by-seven sub-array of the two-dimensional array spanning seven rows along one dimension and seven rows along the other (substantially orthogonal dimension) result in a good compromise between balancing stabilizer weight with the biggest kd/n value. By "non-pointy", it is understood to mean that the stabilizer motif has two or more data resonators in the bottom row of the stabilizer and two or more data resonators in the opposing top-most row of the stabilizer in the first direction, as shown in figure 4.

Preferably, the stabilizer motifs are formed from between 4 and 9 data resonators selected from a 3-by-3 sub-array of the two-dimensional array and form particularly code classical LDPC error-correcting codes with data cat qubits.

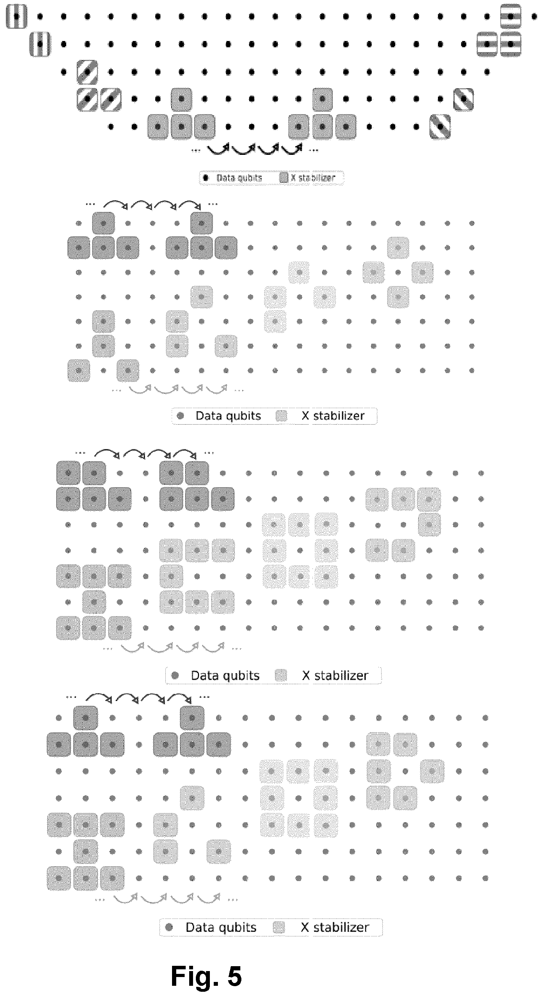

Figure 5 shows schematic views of the quantum system of figure 1 with the use of various stabilizer motifs. The upper panel shows an inverted-T motif of the cellular automaton embodiment, as well as the particular form of the stabilizers at the edge of the array. The next panel down shows a combination of motifs of the cellular automaton embodiment. The following panel down shows a combination of "non-pointy" motifs. The bottom panel shows a combination of motifs wherein some are "pointy" and some are "non-pointy".

The Applicant further discovered that the classical LDPC code resulting from applying the cellular automaton rule to the stabilizer shapes from the ground up allows to characterize the LPDC code by means of logical base groups.

Indeed, the data cat qubits which are part of the bottom row of the grid-like geometry cannot be the single data cat qubit of a stabilizer motif. These data cat qubits constitute "logical base data cat qubits", as a change in their value will change the values of the data cat qubits of the rows above them. This is also the case for other data cat qubits in the rows above the bottom of the grid-like geometry, when the height of the stabilizer motifs used is greater than two.

By virtually setting a chosen logical base data cat qubit with a state opposite to that of all the other logical base data cat qubits, and by applying the cellular automaton rule on all data cat qubits of the others rows to determine respective virtual states, with the cellular automaton rule being determined for each data cat qubit by the stabilizer motif for which this data cat qubit is the single data cat qubit, one can identify which data cat qubits in the LDPC code are influenced by flipping the chosen logical base data cat qubit. Thereafter, the data cat qubits which have the same virtual state can be used to define a logical base group associated with the chosen logical base data cat qubit.

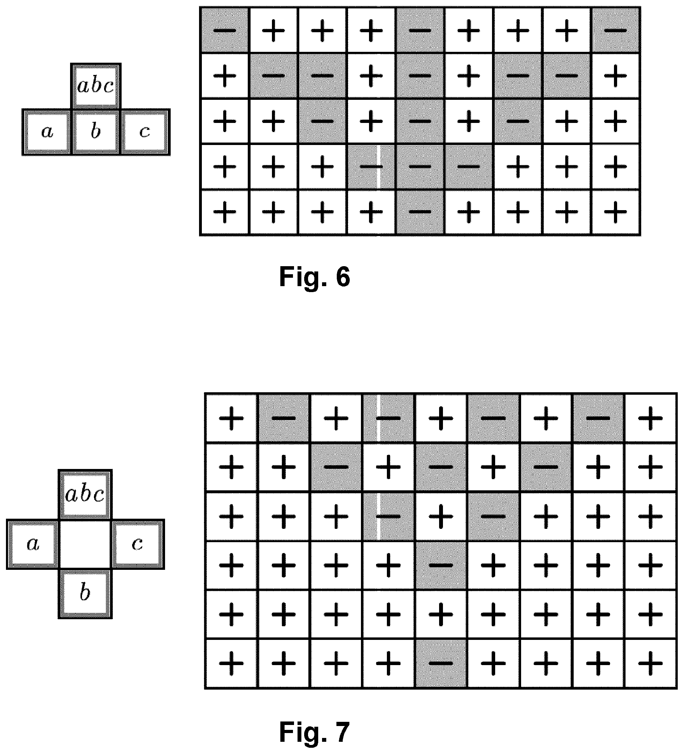

Figure 6 illustrates the determination of a logical base group for an inverted T-shape stabilizer motif. Because the inverted T-shape stabilizer motif spans over two consecutive rows, the bottom row of the grid-like geometry receives the logical base data cat qubits.

In this figure, the fifth logical base data cat qubits is the chosen one, and its state is set with "-", whereas all of the other logical base data cat qubits are set with "+". By propagating the cellular automaton rule shown on the left of this figure, a trident-like group of data-cat qubits having the state "-" are identified. This group of data-cat qubits is herein referred to a logical base group which defines the support of a logical operator. Indeed, this group of data cat qubits have to all be changed together to reflect a change in the state of the logical qubit to which they are associated.

Figure 7 is similar to figure 6, but in the case of a cross-shaped (excluding the center of the cross) stabilizer motif. It will also appear that, by using stabilizer motifs spanning over more than two rows, the logical base data cat qubits can be located on several of the bottom rows of the grid-like geometry.

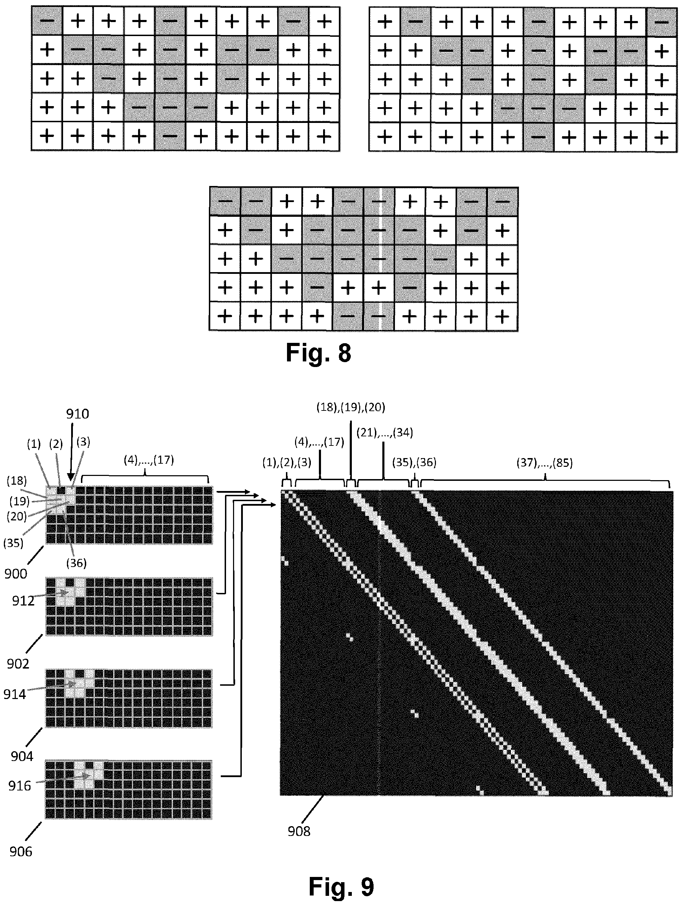

By furthering its research, the Applicant discovered that logical base groups can be combined between them to provide logical groups. Similarly to logical base groups, logical groups define a logical operator, and concretely designate which data cat qubits within the LDPC quantum superconducting circuit are used to protect a given logical qubit. However, contrary to logical base groups, they may comprise several logical base data cat qubits, as shown on figure 8.

Figure 8 shows how two logical base groups, here the logical base groups associated respectively to the fifth and the sixth logical base data cat qubits (shown on top), can be combined to form a logical group (shown below). The only condition to be respected is that the logical groups should form a free base. This means that no logical group shall be obtainable by combining any number of the other logical groups.

As this figure shows, the combination of two logical base groups is obtained by superposing their respective graphs, with the following conditions: 0+0 becomes 1, 1+1 becomes 0, 0+1 and 1+0 become 1. The same will apply to the combination of more than two logical base groups.

Based on this, it is thus possible to generate a very wide variety of classical LDPC codes which use data cat qubits to protect the phase of logical qubits. By comparing the distance between the $2^k$ codewords which can be made by summing the logical groups, the respective distance of these classical LDPC codes can be determined, and specific codes having the highest distance with the lowest weights can be determined.

The Applicant has identified that it is nevertheless preferable to have logical groups which correspond to logical base groups for the following reasons:

- the logical base groups have only one logical base data cat qubit, which bears the X operator of the logical qubit. The less operations, the less risk.

- as will appear below, it is more complicated to perform a CNOT gate between logical qubits when they have several logical base data cat qubits.

By yet pushing his research, the Applicant also discovered that for the cellular automaton embodiment, while the suppression of the periodic boundary conditions requires that some of the stabilizer motifs may need to be different, that is that, contrary to all known codes, the stabilizer motifs are not the same for all of the data cat qubits of the classical LDPC code, it can be in fact extremely beneficial to have a high variety of stabilizer motifs, even "in the middle" of the classical LDPC code.

For this reason, the Applicant explored several variants (as shown in figure 5), such as:

- using a single stabilizer motif for substantially all of the data cat qubits of each row (the stabilizer motifs being different for at least some of the rows),
- using any kind of stabilizer motif anywhere in the classical LDPC code.

By substantially all data cat qubits of a given row having the same stabilizer motif, it will be understood that the outer-most stabilizers at each end of the row may be different from those in the middle of the row. The outer-most stabilizers at each end of the row may be the end-most stabilizers (for instance, if the stabilizers in the middle of the row span over three columns), or several adjacent stabilizers finishing at the end-most stabilizer (for instance, if the stabilizers in the middle of the row span over more than three columns).

The analysis of the resulting classical LDPC codes showed that these designs allow to even further improve the distance of the resulting code while maintaining an interesting average stabilizer weight. In order to choose the best stabilizer motif mix, the Applicant used brute force where possible, and a SAT solver in other cases. The use of SAT solvers is well known in the art.

A SAT solver takes as input Boolean variables (0 or 1) and a set of constraints that must be satisfied at the same time, and outputs possible values of this Boolean variables that satisfy the constraints. If the problem is impossible the SAT solver will tell it.

In the present case, the variables are the stabilizer shapes. Typically when doing stabilizer shapes on three lines and three columns, there are $2^6$ possibilities for a single shape which can be represented by 6 boolean variables. If all stabilizers are chosen to have the same shape for each given line, this has to be multiplied by the number of lines. If more freedom is allowed on the stabilizer choices, the number will further increase. Then the constraints are that the distance between the codewords must be bigger than a certain number. So the number of constraints is $2^{(\text{number of logical qubits})}$.

The Applicant applied a method for designing the quantum system 2, by:

- inputting mimum height and length dimensions of the two-dimensional array;
- inputting plurality of different cellular element shapes (e.g. constraints of weight 4, fits in 3x3 array);
- use a SAT solver to provide cellular automaton combination of elements providing the largest possible distance d of the code.

More generally, given a choice of stabilizer geometry or geometries and dimension of the array, it is possible to map any desired bit string to the physical position of the data cat qubits in the array to thereby determine the logical base groups or logical groups which define a logical operator.

As mentioned above, the performance of an error-correcting code is characterized by the triplet of number [n,k,d], where: n is the number of physical data cat qubits (not including the ancillas for the parity checks); k is the number of logical qubits encoded and d is the distance of the code.

As will be appreciated, given a particular arrangement and number n of physical data cat qubits (i.e. the number of data cat qubits in a two-dimensional array of known dimensions) and a particular geometry of stabilizer motif (i.e. a particular parity check), there are a number of measurement methodologies known in the field of error correction for determining the number of logical qubits k and the distance of the code d, within the appropriate limit of measurement accuracy.

For completeness, the Applicant has also used the following method for determining the k and d parameters of any given code, given the number n of the data cat qubits and the form of the stabilizer motifs (i.e. parity checks).

The array of n data cat qubits is labelled with indices, wherein the indices indicate the position of one of the physical qubits. This is shown in the below exemplary 17 by 5 array:

| 1 | 2 | 3 | 4 | 5 | 6 | 7 | 8 | 9 | 10 | 11 | 12 | 13 | 14 | 15 | 16 | 17 |
|---|---|---|---|---|---|---|---|---|----|----|----|----|----|----|----|----|
| 18 | 19 | 20 | 21 | 22 | 23 | 24 | 25 | 26 | 27 | 28 | 29 | 30 | 31 | 32 | 33 | 34 |
| 35 | 36 | 37 | 38 | 39 | 40 | 41 | 42 | 43 | 44 | 45 | 46 | 47 | 48 | 49 | 50 | 51 |

(continued)

| 52 | 53 | 54 | 55 | 56 | 57 | 58 | 59 | 60 | 61 | 62 | 63 | 64 | 65 | 66 | 67 | 68 |
|----|----|----|----|----|----|----|----|----|----|----|----|----|----|----|----|----|
| 69 | 70 | 71 | 72 | 73 | 74 | 75 | 76 | 77 | 78 | 79 | 80 | 81 | 82 | 83 | 84 | 85 |

The system is arranged to implement particular geometries for the stabilizer motifs, which enable parity checks involving the data cat qubits contributing to a given stabilizer motif in the array. The four left-hand panels of Figure 9 show an example stabilizer geometry, and the first four corresponding parity checks of stabilizer motifs 910, 912, 914, and 916 are shown in the physical arrays indicated by reference numerals 900-906 respectively, with the upper panel with physical array 900 having the stabilizer 910 starting from the upper left-hand corner of the above exemplary 17 by 5 array of physical data qubits. The physical qubits contributing to a stabilizer motif are shown in light grey, whereas the remaining physical data cat qubits are shown in black. The numbers in parentheses indicate the indices indicating the position of each of the physical data cat qubits in the physical array. The indices are only shown in 900 for clarity, however physical arrays 902-906 are the same as 900, such that the physical qubits are identically labelled with the same indices.

A parity matrix H 908 can be constructed by converting each of the parity checks in the physical arrays 900-906 into a row of parity matrix H 908. This can be done by "flattening out" the physical picture such that the first element of the row is index (1), the second element is index (2), and so on, consecutively until the final index of the physical picture (85). This is indicated in the right-hand panel of figure 9, wherein physical array 900 is flattened into the first row of parity matrix H 908. Numerically, the physical data cat qubits contributing to a stabilizer motif are replaced with a "1" as coefficient in the corresponding position of the element in parity matrix H 908, whereas the remaining physical data cat qubits are replaced with a "0", such that the parity matrix H 908 is a numerical matrix populated with numbers "1" and "0". Each physical array 900-906, as well as the remaining physical arrays of all the following parity checks (not shown), is "flattened out" in the same way to populate parity matrix H 908.

The parity check matrix is then transformed into normal form H', consisting of a block A and an identity block I such that H' = [A|I]. The parity matrix in normal form H' is an n-k by n matrix. Thus, from the dimensions of H' one can deduce k, given that n is known. H' can be constructed from H using a variety of methods, for instance by so-called Gaussian elimination.

The generator matrix G can then be constructed from H' as G = [I|A$^T$], where A$^T$ is the transpose of block A. G is thus a k by n matrix. As will be appreciated, the rows of the generator matrix form a basis for the error-correcting code, namely the codewords are all linear combinations of the rows of G.

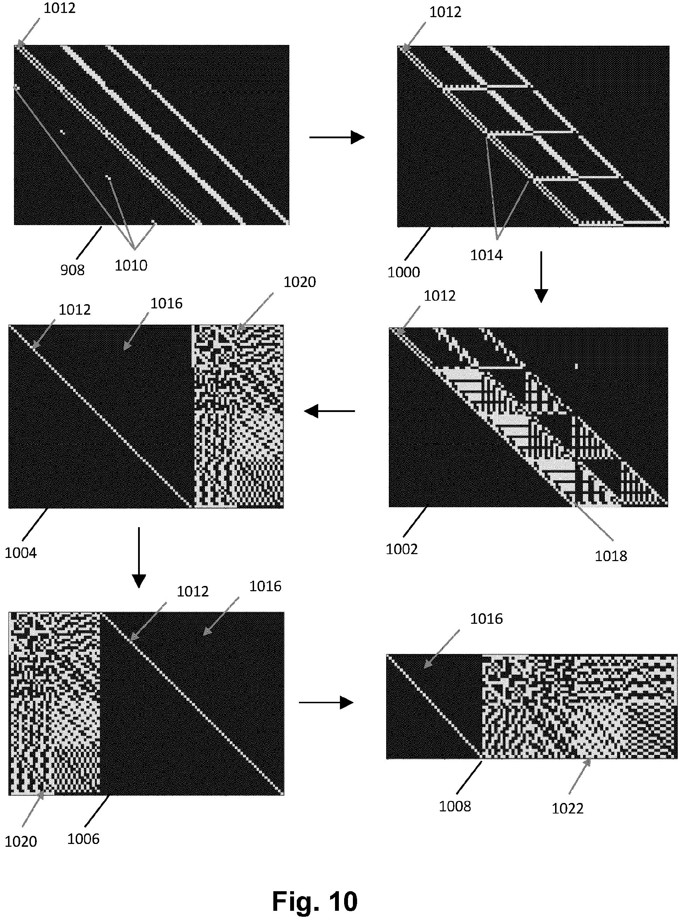

An exemplary method using Gaussian elimination to transform parity matrix H into generator matrix G is shown in figure 10. The goal is to perform linear operations/transformations on the parity matrix H 908 of figure 9 until it has an identity block I on one side with a remaining block on the other side. The parity matrix H 908 is first transformed to remove the "1" coefficients 1010 under the first leading diagonal of "1's" 1012. For instance, for every column of 908 which has a pair of "1's" therein, namely a "1" in the first leading diagonal 1012 and a "1" somewhere below, the row which contains the "1" below the leading diagonal can be replaced with the sum of itself and the row which contains the "1" of the leading diagonal. Given that modulo 2 arithmetic applies, this results in a transformed matrix wherein the row which initially contained the "1" below the leading diagonal now has a "0" in the position of the initial "1". This is saying that instead of describing the code as c1,...,c15,... - where ci is the parity check equations of line i - the code becomes c1,...., c1+c15,... which is an equivalent set of parity check equations. This is iterated or repeated recursively across all relevant rows to produce matrix 1000.

Matrix 1000 is thus a matrix with only "0's" under the leading diagonal 1012, however there may be some "0's" now missing from the leading diagonal 1012, as indicated by 1014. The row with a "0" in the leading diagonal may be scanned in a direction away from the leading diagonal to find a "1" coefficient. The column having this "1" coefficient can then be switched with that having the "0" in the leading diagonal. If this results once more in a "1" below the leading diagonal, the above-described process going from 908 to 1000 is repeated for the offending row. This is iterated or repeated recursively across all relevant rows to produce matrix 1002.

Matrix 1002 is transformed into matrix 1004 which has the identity as the left-hand block 1016 by removing the "1's" in the right-angled triangle above the leading diagonal 1012. This may be done as above, by starting at the penultimate row and replacing it with the summation of itself and a row above such that the coefficient 1018 to the right of the leading diagonal 1012 is switched from a "1" to a "0". This is iterated or repeated recursively across all relevant rows to produce matrix 1004.

Matrix 1004 has a left-hand block 1016 which is the identity I, and a right-hand block 1020 which is the block A. Matrix 1004 is transformed into matrix 1006 which is the parity matrix in normal form H' = [A|I] via flipping the blocks. Thus, the left-hand block 1020 is block A and the right-hand block 1016 is the identity I.

The parity-check matrix in normal form H' 1006 is transformed into the generator matrix G 1008 as above via G = [I|A$^T$], wherein 1022 is A$^T$. It should be noted that the indices (1),...,(85) shown in figure 9 are tracked throughout the various permutations, such that G can be mapped to correspond to the real positions of physical qubits in the physical array.

As described above, the generator matrix G forms a basis for the error-correcting code, namely any row of G is a valid codeword, and all linear combinations of the rows of G are also valid codewords. The distance of the code d is thus given by the row or linear combination of rows which has the smallest number of "1's", wherein the number of "1's" is d. Said otherwise, the distance d of a code is the smallest Pauli error that maps the codespace to itself, (i.e., the smallest logical error).

In a generator matrix G there are thus k codewords that form a basis for the logical codespace of $2^k$ codewords. The codeword with the minimal number of 1's can be found as described above via a brute-force algorithmic search by explicitly constructing the $2^k$ codewords using this basis. An alternative, sometimes more efficient method for calculating the distance is to map this problem to a satisfiability (SAT) problem to leverage efficient available SAT solvers as mentioned above. The SAT problem is the following: given an integer d', is it possible to find a codeword of non-zero Hamming weight inferior or equal to d'? The code distance d is the minimum value of d' for which the problem is satisfied, found using a dichotomic search. As will be appreciated, various other methods are known in the art for finding d, such as inference from the particular mathematical form of the generator matrix G 1008.

To encode k logical qubits, one may define a vector B which is of length k and includes the bitstring of logical qubits to be encoded in the physical array. The transpose of $B^T$ may be matrix multiplied with generator matrix G, which produces $E^T$ wherein E is another vector. By keeping tracks of the indices indicating the positions of the physical data cat qubits in the array, the coefficients of $E^T$ can be mapped to the tracked indices therein, corresponding to indicating the positions of the physical data cat qubits in the array. This tells us which physical data cat qubits contribute to which logical operator(s). As will be appreciated, this more general formulation is an equivalent to the logical base groups or logical groups which define the logical operator as described above in the cellular automaton embodiment.

Thus, the generator matrix G and bitstring vector B may be equivalently used to designate the logical base groups of data cat qubits or logical groups of data cat qubits for any general classical LDPC error-correcting code, which define the support of a logical operator.

The above methods are only exemplary, and a number of variations thereof, as well as other methods, can alternatively be used to: generate valid (and equivalent) codewords; find the distance d of the code; and find the number of logical qubits encoded k, for an error-correcting code given by a particular arrangement and number n of physical qubits and one or more particular stabilizer geometries, insofar this falls within the scope of the invention defined by the appended claims.

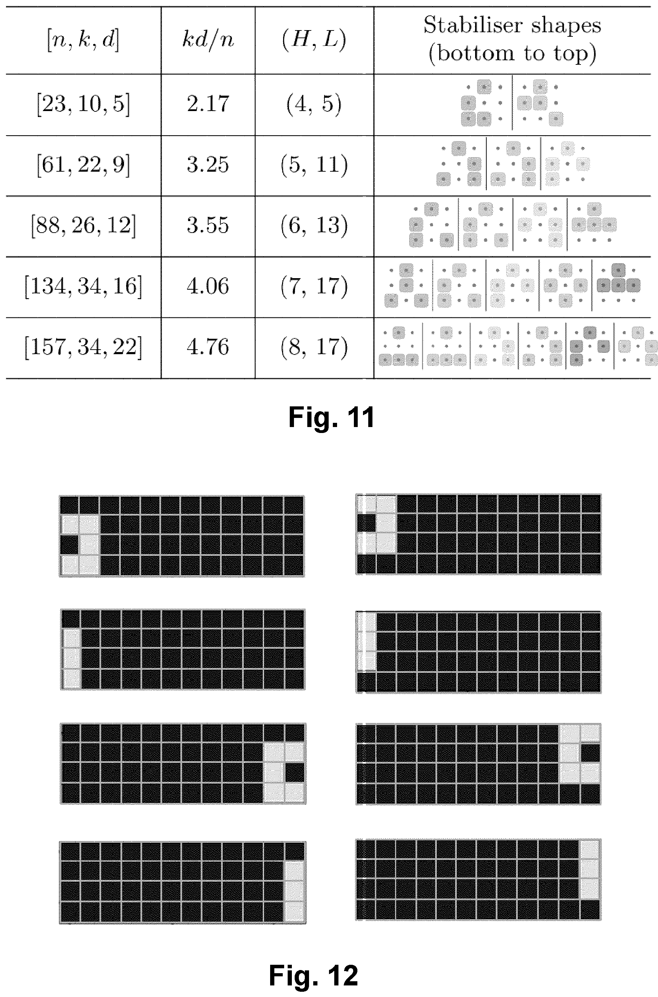

Figure 11 shows results obtained by applying the above methods. This table shows, for various values of [n, k, d], kd/n values obtained, corresponding height and minimum width of the two-dimensional arrays (grid-like geometry) used, as well as the type of stabilizers used to obtain this kd/n value.

From the above, it appears that there are many ways to generate a classical LDPC code using at least two stabilizer motifs and which have a kn/d value which is greater than 1 (that is which perform more favorably than a conventional repetition code). As mentioned, in many cases, brute force can be used, and in other cases, a SAT solver can be used.

Figure 12 shows an example of different stabilizers used at two of the boundaries of the grid-like array, used in conjunction with the O-shaped stabilizer motif shown in the bottom panel of figure 4. Indeed, for this dimension of array (height of 4, width of 12) and O-shaped stabilizer motif, the Applicant has verified that the [n, k, d] of the code is [48, 20, 8], which results in a value of kd/n of 3.33. By providing the different stabilizers at the end of the row, the Applicant has discovered that this provides only a slight reduction in encoding compared to the corresponding classical LDPC code with periodic boundary conditions (which has [48,24,8] and kd/n = 4). This is highly surprising, given that the corresponding finite array instead having O-shaped stabilizers at the edges has an extremely poor distance and an kd/n of 1 or lower.

Thus, to enable the most optimal classical LDPC codes in a two-dimensional topology (namely, on a side of a chip), the Applicant has verified that it is particularly advantageous to include: (i) different stabilizer motif geometries at the edges of the array as compared to those in the middle; and/or (ii) non-rectangular edges (namely, a substantially trapezoidal shaped boundary as discussed above).

E. Error syndrome measurement

Once all the stabilizers are chosen to define the classical LDPC code, one needs to perform the error syndrome measurement in order to truly protect the logical qubits against phase-flips.

As explained above, this is done by measuring the parity of the data cat qubits within each stabilizer motif. Advantageously, all of the error syndrome measurements can be performed substantially in parallel. The only constraint is that a given data cat qubit can only participate in a single parity check for each timestep (i.e., the given data cat qubit cannot participate in the parity check of two different stabilizer motifs simultaneously). This means that patterns of parity check orders have to be adapted for neighboring stabilizer motifs.

The error measurement syndrome may be performed conventionally, for example by repeatedly preparing the ancilla qubit of each stabilizer motif in a "|-⟩" or "|+⟩" state, performing quantum gates with the data cat qubits of the stabilizer motif, and measuring the associated ancilla to determine the presence of a phase-flip. In an alternative embodiment, the error syndrome can be improved by performing asynchronous CXXX operations (or more in the case of higher stabilizer weights), such that each data cat qubit is used at most in one such CXXX operation for a given timestep.

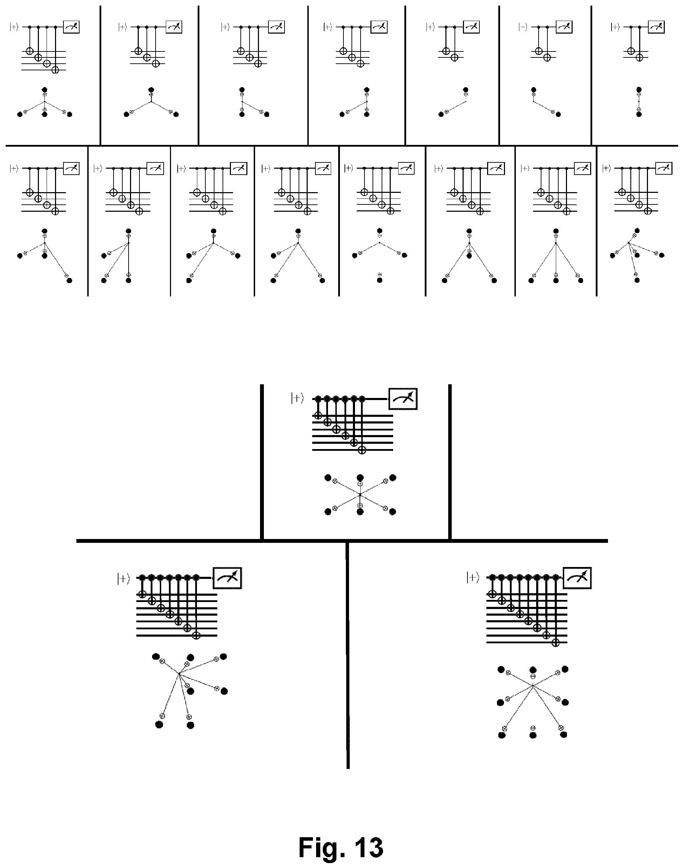

Figure 13 shows, for various stabilizer motif shapes, how the ancilla resonator 10 can be placed on the LDPC quantum superconducting circuit 4 with respect to the data cat qubits 8 in view of the stabilizer motif shape, as well as the kind of steps which can be conventionally executed to measure the error syndrome in each case. The upper panel of figure 13 show examples of "pointy" stabilizer motifs whereas the lower panel of figure 13 show examples of "non-pointy" stabilizer motifs.

The Applicant has further recognized that combining a classical LDPC circuit with a cat qubit architecture presents further advantageous synergies. In particular, by stabilizing an ancilla cat qubit in the ancilla resonator 10 of the LDPC quantum superconducting circuit 4, the command circuit 6 may be configured to perform two or more CNOT gates respectively between the ancilla cat qubit of a stabilizer and two or more of the data cat qubits in said stabilizer substantially simultaneously. This is particularly advantageous as outlined further below, as it reduces the number of timesteps required to perform the parity check of a stabilizer motif. Said otherwise, given that the parity check is usually a sequence of finite time CNOT gates being performed between the ancilla qubit and each of the data cat qubits of the stabilizer motif, by reducing the sequence (either partially or fully to a single CX$^s$ gate), the shorter the parity check takes in time, and thus the shorter the chance an error occurs.

In many architectures, realizing N-qubit gates becomes increasingly difficult with N, such that it is preferred to use only 2-qubit gates to synthesize N-qubit gates. For instance, in the case of the repetition code (namely only stabilizers of weight two), realizing a cascade of two CNOT gates is typically preferred to performing a CXX gate. Incidentally, this approach is not restricted to CXX gates, but is generalized to any multi-qubit entangling gates between more than 2 qubits. In other words, when more than two quantum entities are set to interact, the go-to way to perform these multi-entities interactions is to perform multiple two-entities interactions.

The theoretical realization of CNOT gates between two stabilized cat qubits in modes $a_1$ and $a_2$ relies on the use of the following three ingredients:

1) the performance of a dissipative stabilization on the control qubit $a_1$, with the jump operator $L_c = \sqrt{\kappa_2}(a_1^2 - \alpha^2)$, where $a_1$ is the photon annihilation operator of mode $a_1$ and $\alpha$ is a complex number defining the cat qubit, or one of the stabilization schemes described above,

2) the addition in the circuit of a 'feedforward' Hamiltonian, also called the 'CNOT' Hamiltonian or 'longitudinal' Hamiltonian with the formula $H_{CX}/\hbar = g_{CX}(a_1 + a_1^\dagger - 2\alpha)(a_2^\dagger a_2 - \alpha^2)$, where $g_{CX}$ is the complex amplitude of the Hamiltonian, $a_1$ is the photon annihilation operator of mode $a_1$, $a_2$ is the photon annihilation operator of mode $a_2$, and $\alpha$ is a complex number defining the cat qubit,

3) the performance of a dissipative stabilization on the target qubit $a_2$ which depends on the state of the control qubit $a_1$, with the jump operator $L_t(t) = \sqrt{\kappa_2}\left(a_2^2 - \frac{1}{2}\alpha(a_1 + \alpha) + \frac{1}{2}\alpha e^{\frac{i2\pi}{T}t}(a_1 - \alpha)\right)$, where $\kappa_2$ is the two-photon dissipation rate, $a_1$ is the photon annihilation operator of mode $a_1$, $a_2$ is the photon annihilation operator of mode $a_2$, and $\alpha$ is a complex number defining the cat qubit, or one of the stabilization schemes a) to e) described above in a form adapted to be made conditional on an ancilla qubit state.

The best theoretical implementation uses the 3 above ingredients. However, the experiments of the Applicant have revealed that the two first ingredients offer a good compromise between the ease of realization and quality of the results.

Ingredient 3, when applied, replaces the conventional stabilization performed on the target qubits to stabilize the cat states. If ingredient 3 is absent, the target qubits are not subject to any stabilization of the cat states while the ingredients for performing the gate are applied. In some embodiments, during a gate operation or a measurement operation, the stationary stabilization of the target cat qubits is turned off, and it may be replaced by ingredient 3 during a gate operation. One can also realize a CNOT gate without the feedforward Hamiltonian and only the ingredients 1 and 3, although in practice the CNOT gate fidelity is poor without this term, such that it is crucial to implement the ingredient 2).

The means used to engineer the feedforward Hamiltonian also introduce an extremely strong deterministic spurious effect, such that it is indispensable to remove this deterministic spurious effect to achieve any result. More precisely, when developing the terms of the feedforward Hamiltonian, the term $-2\alpha(a_2^\dagger a_2)$ is a detuning on the data cat qubit, and does not need to be physically implemented, but rather can be done in software by redefining $\alpha$ of the data cat qubit, while the term $-\alpha^2 g_{CX}\left(a_1 + a_1^\dagger\right)$ is a linear displacement of the ancilla cat qubit that is routinely achieved.

The entangling part of the interaction; that is the most difficult to realize is $g_{CX}\left(a_1 + a_1^\dagger\right)a_2^\dagger a_2$. Usually, the modes $a_1$ and $a_2$ are neighbors on the chip and both participate in a non-linear circuit element (typically, an asymmetrical threaded superconducting quantum interference device or "ATS", as described in the article *"Exponential suppression of bit-flips in a qubit encoded in an oscillator"*, Lescanne R. et. Al., Nature Physics, 2020) such that this term may be directly driven via a pump $\varepsilon_p(t) = \varepsilon_p cos(\omega_1 t)$. However, applying a pump at this frequency induces a linear drive on the ancilla cat qubit $a_1$ that needs to be exactly compensated. The feedforward Hamiltonian induces a displacement, which in combination with stabilization the ancilla cat qubit results in decoherence and/or leakage out of the cat qubit code space. A compensation needs to be engineered, for example by turning on a resonant drive on the ancilla cat qubit such that it compensates exactly the effect of the pump realizing the entangling part of the feed-forward Hamiltonian. While this compensation is achievable, it becomes a burden when several CNOT gates are performed, as multiple need to be engineered more or less simultaneously without adversary effects.

Thus, the Applicant has developed a CNOTNOT gate could be directly implemented without resorting to sequential CNOT steps, which is enabled due to the use of both data and ancilla cat qubits - contrary to other superconducting architectures. As a further advantage, the Applicant has found that this can be done while solving the problem of the compensation for the feedforward Hamiltonian.

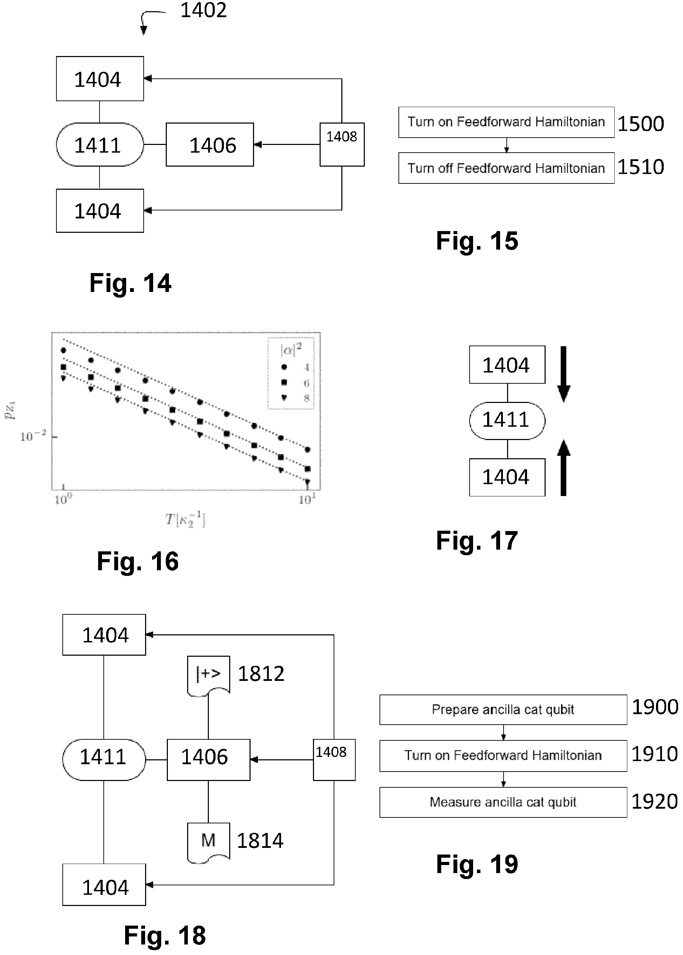

Figure 14 depicts a general diagram of a quantum system for performing a CNOTNOT quantum gate 2 according to an embodiment of the invention. In the example described here, a quantum system 1402 for performing a CXX gate links two data cat qubits 1404 and one ancilla cat qubit 1406.

The theoretical realization of CXX gates between three stabilized cat qubits in modes $a_1$ and $a_2$ and $a_3$ relies on the use of the following three ingredients:

1) the performance of a dissipative stabilization on the control qubit $a_1$, with the jump operator $L_{c_1} = \sqrt{\kappa_2}(a_1^2 - \alpha^2)$, where $a_1$ is the photon annihilation operator of mode $a_1$ and $\alpha$ is a complex number defining the ancilla cat qubit,

2) the addition in the circuit of a 'feedforward' Hamiltonian, also called the 'CXX' Hamiltonian with the formula ,

$$H_{CXX}/\hbar = \frac{\pi}{4\alpha T}\left(a_1 + a_1^\dagger - 2\alpha\right)\left(a_2^\dagger a_2 - a_3^\dagger a_3\right)$$

where $T$ is the CXX gate duration, $a_1$ is the photon annihilation operator of the ancilla cat qubit 6 and $a_2$ and $a_3$ are the photon annihilation operator of the data cat qubits, and $\alpha$ is a complex number defining the cat qubit. For simplicity, the photon populations of the ancilla and data cat qubits are taken equal but they can be different: $\alpha_1^2$ for $a_1$, $\alpha_2^2$ for $a_2$, $\alpha_3^2$ for $a_3$. The feedforward Hamiltonian can be engineered with a pump at frequency $\omega_{a_1}$ and acts as a pull force and on the data cat qubits 4. During the application of this feedforward Hamiltonian, the stabilization on data cat qubit 4 is turned off.

3) one or more dissipative stabilization which acts as a drag force on one or both the data cat qubits 4 which depends on the state of the ancilla cat qubit $a_1$ can be used, with the jump operators

$$L_{t_2} = \sqrt{\kappa_2}\left(a_2^2 - \frac{1}{2}\alpha(a_1 + \alpha) + \frac{1}{2}\alpha e^{\frac{2i\pi}{T}t}(a_1 - \alpha)\right)$$ and

$$L_{t_3} = \sqrt{\kappa_2}\left(a_3^2 - \frac{1}{2}\alpha(a_1 + \alpha) + \frac{1}{2}\alpha e^{\frac{2i\pi}{T}t}(a_1 - \alpha)\right)$$. The jump operator $L_{t_2}$ and $L_{t_3}$ can be realized

by providing respective buffer modes $b_2$ and $b_3$ for the data cat qubits 4 and engineering the Hamiltonian

$$H/\hbar = g_{2b}a_2^2 b_2^\dagger + g_{1b}a_1 b_2^\dagger + h.c.$$ and pumps at frequency $2\omega_{a_2} - \omega_{b_2}$ and $\frac{1}{2}\left(\omega_{a_1} - \omega_{b_2}\right)$

and a drive at frequency $\omega_{b_2}$. The same can be done for jump operator $L_{t_3}$ by replacing $a_2$ and $b_2$ by $a_3$ and $b_3$ in the above equations.

The best implementation theoretically uses the 3 ingredients. However, the experiments of the Applicant have revealed that the two first ingredients offer a good compromise between the ease of realization and quality of the results. As in the case of a CNOT gate described above, the stabilization schemes 1) and 3) can be implemented with any of the aforementioned cat stabilization schemes.

As shown on figure 5, the two data cat qubits 1404 are connected to the ancilla cat qubit 1406 via a CXX gate 1411. However, contrary to the prior art which uses two sequential CNOT gates, there is a single CXX gate 1411, and, as shown, both data cat qubits 1404 are connected simultaneously to the CXX gate 1411, such that the CXX gate is performed simultaneously on both data cat qubits 1404.

Figure 15 shows a block diagram of the operation of the CXX gate of figure 14. In a first operation 1500 which consists the feedforward Hamiltonian (ingredient 2) is turned on on both data cat qubits 1404 and the ancilla cat qubit 1406. Ingredient 1 is always applied as the ancilla cat qubit needs to be stabilized, but the stabilization on data cat qubits 1404 is turned off. Alternatively, operation 1500 could comprise turning on the feedforward Hamiltonian (ingredient 2) and the time dependent dissipation $L_{t_2}$ and $L_{t_3}$ on the data cat qubits (ingredient 3), or only activating the time dependent dissipation $L_{t_2}$ and $L_{t_3}$ on the data cat qubits (ingredient 3). After a chosen duration for operation 1500, which is the gate duration and which will be discussed below, the feedforward Hamiltonian (or its variations of operation 1500) is turned off in an operation 1510 and the stabilization of data cat qubits 4 is restored.

In order to demonstrate that the CXX strategy leads to better overall performance, the analytical errors of a CXX gate will be computed and compared below to the performance of two consecutive CX gates, and this analytical computation will be checked using numerical simulations shown in figure 16.

For the following demonstration, the CXX gate is again considered to be realized between 3 cat qubits whose modes are given by $a_1$, $a_2$ and $a_3$. Qubits $a_2$ and $a_3$ are the target qubits 4 and $a_1$ is the control qubit. The CXX gate between the three cat qubits can be realized by the master equation

$$\frac{d\rho(t)}{dt} = \kappa_2\big[D[a_1{}^2 - \alpha^2] + D[L_2(t)] + D[L_3(t)]\big]\rho(t) +$$

$$\kappa_1\big[D[a_1] + D[a_2] + D[a_3]\big]\rho(t) - i[H, \rho(t)]$$ where $a\_1$, $a_2$ and $a_3$ are the annihilation operators of the control and the two target qubits, respectively, $L_{2(t)} = a_2 - \alpha^2 + \frac{\alpha}{2}\left(e^{2i\frac{\pi}{T}t} - 1\right)(a_1 - \alpha)$,

$L_{3(t)} = a_3 - \alpha^2 + \frac{\alpha}{2}\left(e^{2i\frac{\pi}{T}t} - 1\right)(a_1 - \alpha)$, and $H/\hbar = \frac{\pi}{4\alpha T}(a_1 + a_1{}^\dagger - 2\alpha)(a_2{}^\dagger a_2 - a_3{}^\dagger a_3)$.

In cat qubit architectures, the quality of the hardware is measured by the ratio of two time scales: time $1/\kappa_2$, where $\kappa_2$ is the two-photon dissipation rate that stabilizes the qubit; and time $1/\kappa_1$, where $\kappa_1$ is the one-photon loss rate. There are other sources of errors such as the phase shift at the rate $\kappa_\phi$, thermal excitations, self-Kerr and cross-Kerr interactions, or other undesirable couplings with other quantum systems present in the vicinity of the memory, etc.

Nevertheless, the one-photon loss is the dominant error mechanism and for the sake of clarity, only this physical error mechanism is considered in what follows. In general, all that follows is valid by replacing the ratio $\kappa_1/\kappa_2$ by the sum of the rates of the error mechanisms divided by $\kappa_2$.

To analyze the master equation, a hybrid basis is used in which the control qubit is described by the shifted Fock basis and the two target qubits are described by the usual Fock basis. The Hamiltonian can be expressed as follows:

$$H/\hbar = \frac{-\pi}{T}|1\rangle\langle 1| \otimes \left(a_2^\dagger a_2 - a_3^\dagger a_3\right) + \frac{\pi}{4\alpha T}Z_1 \otimes \left(b_1 + b_1^\dagger\right)\left(a_2^\dagger a_2 - a_3^\dagger a_3\right)$$

In the rotating frame, and in the full shifted Fock basis, the master equation is given by:

$$\frac{d\rho_I(t)}{dt} = \kappa_2\left[D\left[I_{1,2} \otimes (b_1^2 + 2\alpha b_1)\right] + D[L_2'(t)] + D[L_3'(t)]\right]\rho_I(t)$$

$$+ \kappa_1\left[D[Z_1 \otimes (b_1 + \alpha)] + D\left[Z_1\left(\frac{\pi}{T}t\right)Z_2 \otimes (b_2 + \alpha)\right]\right.$$

$$\left. + D\left[Z_1\left(\frac{\pi}{T}t\right)Z_3 \otimes (b_3 + \alpha)\right]\right]\rho_I(t)$$

$$- i\left[\frac{\pi}{4\alpha T}Z_1\right.$$

$$\left. \otimes \left(b_1 + b_1^\dagger\right)\left(b_2^\dagger b_2 + \alpha(b_2 + b_2^\dagger) + b_3^\dagger b_3 + \alpha(b_3 + b_3^\dagger)\right), \rho_I(t)\right]$$

where the jump operators on the target qubits are given by $L_2'(t) = Z_1\left(\frac{2\pi}{T}t\right) \otimes (b_2^2 + 2\alpha b_2) + \frac{\alpha}{2}\left(e^{2i\frac{\pi}{T}t} - 1\right)Z_1 \otimes b_1$, and

$$L_3{}'(t) = Z_1\left(\frac{2\pi}{T}t\right) \otimes (b_3^2 + 2\alpha b_3) + \frac{\alpha}{2}\left(e^{2i\frac{\pi}{T}t} - 1\right)Z_1 \otimes b_1 \; \cdot$$

By only considering the first excited state in each of the three qubits, ignoring internal couplings and neglecting the last term of both target jump operators, the master equation becomes:

$$\frac{d\rho_I(t)}{dt} = 4\kappa_2\alpha^2\left[D[I_{1,2,3} \otimes b_1] + D\left[Z_1\left(\frac{2\pi}{T}t\right) \otimes b_2\right] + D\left[Z_1\left(\frac{2\pi}{T}t\right) \otimes b_3\right]\right]\rho_I(t)$$

$$+ \kappa_1\alpha^2$$

By adiabatically eliminating the excited states, the following master equation is obtained:

$$\frac{d\rho_{I,g}(t)}{dt} = \kappa_1\alpha^2\left[D[Z_1] + D\left[Z_1\left(\frac{\pi}{T}t\right)Z_2\right] + D\left[Z_1\left(\frac{\pi}{T}t\right)Z_3\right]\right]\rho_I, g(t)$$

$$+ \frac{\pi^2}{16\kappa_2\alpha^2 T^2}D\left[Z_1 Z_1\left(\frac{2\pi}{T}t\right)\right]$$

By integrating from 0 to time T and ignoring higher order terms, this equation yields:

$$\rho_I, g(T) \simeq \rho_g(0)$$

$$+ \int_0^T dt\left(\kappa_1\alpha^2\left[D[Z_1] + D\left[Z_1\left(\frac{\pi}{T}t\right)Z_2\right] + D\left[Z_1\left(\frac{\pi}{T}t\right)Z_3\right]\right]\right.$$

$$\left. + \frac{\pi^2}{16\kappa_2\alpha^2 T^2}D\left[Z_1 Z_1\left(\frac{2\pi}{T}t\right)\right]\right)\rho_g(0)$$

By going back to the initial frame and removing the unitary perfect CXX, the error channel of CXX can be obtained:

$$N_{CXX'}(\rho) \simeq \rho\int_0^T dt\left(\kappa_1\alpha^2\left[D[Z_1] + D\left[Z_1 Z_1\left(\frac{\pi}{T}t\right)Z_2\right] + D\left[Z_1 Z_1\left(\frac{\pi}{T}t\right)Z_3\right]\right]\right.$$

$$\left. + \frac{\pi^2}{16\kappa_2\alpha^2 T^2}D\left[Z_1 Z_1\left(\frac{2\pi}{T}t\right)\right]\right)\rho$$

By performing the integrating and focusing on diagonal terms the Z error rates of CXX are given by $\overline{p_{Z_1}} = \kappa_1\alpha^2 T + \frac{\pi^2}{32\kappa_2\alpha^2 T}$ (where the second term corresponds to non-adiabatic errors) and $\overline{p_{Z_2}} = \overline{p_{Z_1 Z_2}} = \overline{p_{Z_3}} = \overline{p_{Z_1 Z_3}} = \frac{1}{2}\kappa_1\alpha^2 T$ .

Figure 16 shows the simulation of a quantum circuit using a quantum gate according to Figure 14 compared to the non-adiabatic error determined above. In small dashed lines, the value $\overline{p_{Z_1}}$ is plotted as a function of the invert of $\kappa_2$ for various values of $\alpha^2$. For each value of $\alpha^2$, simulation error levels are plotted for specific values of $\kappa_2$ (as circles, triangles and squares). This figure shows that the non-adiabatic error determined theoretically is expected to be met in real-life implementations and the error budget calculations below proves the advantage mentioned above. In this simulation, $\kappa_1$ is set to 0 as its effect is well understood and does not need to be checked.

To concretely evaluate the gain associated to the use of the CXX gate according to an embodiment of the invention, a comparison of the error budgets with two CNOT gates in series will now be offered. The total time to realize the CXX or the two CNOT gates in series is fixed at T. In the following, $\overline{n} = |\alpha|^2$ is the average photon number in the cat states.

The CNOT gates in series have the following error budget considerations. The error on the ancilla qubit is given by $\overline{n}\kappa_1 T + 4\frac{\pi^2}{64\overline{n}\kappa_2 T}$ . The errors on the two data qubits are given by $\frac{3}{2}\overline{n}\kappa_1 T$ . The correlated errors between the data and ancilla qubits are given by $\frac{1}{2}\overline{n}\kappa_1 T$ .

As a result, the total error is given by $3\overline{n}\kappa_1 T + \frac{\pi^2}{16\overline{n}\kappa_2 T}$ .

The CXX gate has the following error budget considerations. The error on the ancilla qubit is given by $\overline{n}\kappa_1 T + \frac{\pi^2}{32\overline{n}\kappa_2 T}$ . The errors on the two data qubits are given by $\overline{n}\kappa_1 T$. The correlated errors between the data and ancilla qubits are given by $\overline{n}\kappa_1 T$. As a result, the total error is given by $3\overline{n}\kappa_1 T + \frac{\pi^2}{32\overline{n}\kappa_2 T}$ .

Thus, for any time T, the CXX error budget is smaller than the two CNOT gates in series error budget.

This means that the CXX gate according to an embodiment of the invention can be done either faster with the same error as two CNOT gates performed slower, or it can be done in the same time as two CNOT gates performed but with a better fidelity.

Another advantage of implementing CXX in a single step instead of using two consecutive CNOT gates is that the compensation problem mentioned above can be solved by choosing specific phase arrangement for the feedforward Hamiltonian. More precisely, any Hamiltonian of the form $H_{CX}/\hbar = g_{CX}\big(a_1 + a_1^\dagger - 2\alpha\big)\big(a_2^\dagger a_2 \pm a_3^\dagger a_3\big)$ produces the desired effect. The Applicant has discovered for the specific case of the "-" sign in the last term of the $H_{CX}$ formula, the undesired displacement generated by the respective terms $\big(a_1 + a_1^\dagger\big)\big(a_2^\dagger a_2\big)$ and $\big(a_1 + a_1^\dagger\big)\big(a_3^\dagger a_3\big)$ of the feedforward Hamiltonian (as explained above) exactly compensate each other, as shown on figure 17, such that it is not anymore necessary to engineer a compensation. In practice, due to experimental imperfections, a very small compensation may still be needed but, because most of it has been already cancelled, it is much easier to engineer. In alternative embodiments, compensation can be engineered as known conventionally.

Figure 18 shows a generic diagram of the XX syndrome measurement using the CXX quantum gate of figure 14. The system of figure 18 is very similar to that of figure 14, with the exception that it comprises a control qubit preparation 1812 and a control qubit measurement 1814. By providing these elements, the measurement of the ancilla cat qubit 1406 allows to measure the joint photon number parity between the data cat qubits 1404 (which in isolation is a stabilizer of weight two on two-components cat qubits).

Figure 19 shows a block diagram of the execution of the measurement operation of figure 18. It is similar to figure 15 except that operation 1900 of preparing the ancilla cat qubit 1406 in the "+" state precedes the feedforward Hamiltonian of operation 1910 which is followed by an operation 1920 of measuring the ancilla cat qubit 1406. In operation 1910, the conditional dissipation stabilizations $L_{t_2}$ and $L_{t_3}$ are also turned on simultaneously if the embodiment makes use of them. In operation 1900, the control qubit 1406 could also be prepared in the $|-\rangle$ state.

As a result, figure 19 shows that the operation of the XX syndrome measurement is performed in three timesteps, whereas the conventional XX syndrome measurement requires four timesteps due to the sequential CNOTs. The advantages achieved by gaining one timestep has been demonstrated above.

While the embodiment of figures 14 to 16 has been made with only two data cat qubits, the Applicant has discovered that the CXX can be made a CX^N by using N data cat qubits, each connected to the same ancilla cat qubit. Thus, in the context of the presentdisclosure, this is a CN$^s$ where s is in fact the weight of the stabilizer motif. By implementing such a multi-qubit gate, the Applicant has recognized that stabilizer motifs having higher weights can advantageously be used.

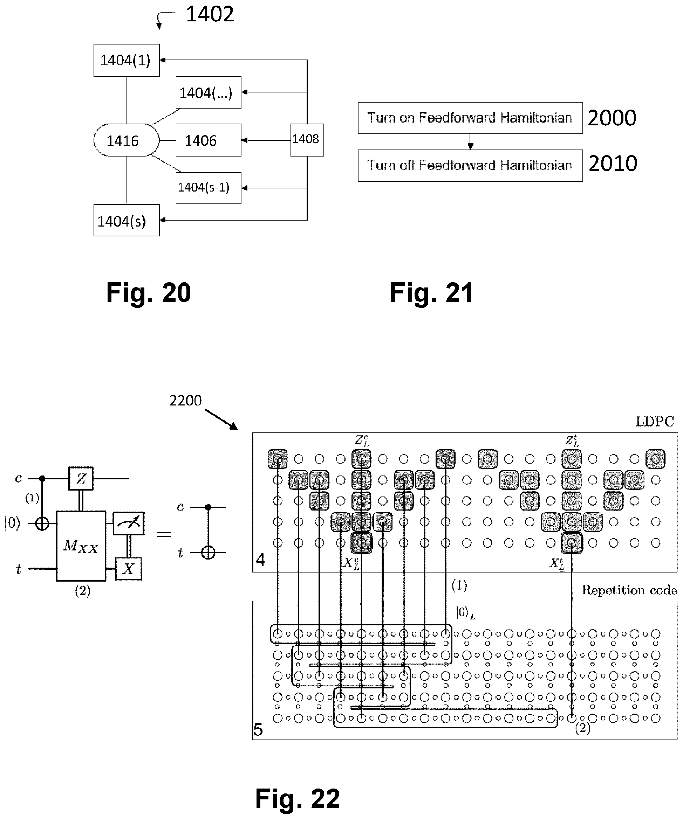

Like the CXX, the CX$^s$ can be realized in a single timestep. Figure 20 shows a generic diagram of the CX$^s$ gate. The data cat qubits 1404(1) to 1404(s) are connected to the ancilla cat qubit 1406 via a CX$^s$ gate 1416.

Figure 21 shows a block diagram of the operation of the CX$^s$ gate of figure 20. In a first operation 2000 which consists in turning on s feedforward Hamiltonian (ingredient 2) on each data cat qubit 1404(1) to 1404(s) and the ancilla cat qubit 1406. Ingredient 1 is always applied as the ancilla cat qubit needs to be stabilized. Alternatively, operation 2000 could comprise turning on the feedforward Hamiltonian (ingredient 2) and the time dependent dissipation $L_{t_1}$ to $L_{t_s}$ on the data cat qubits (ingredient 3), or only activating the time dependent dissipation $L_{t_1}$ and $L_{t_s}$ on the data cat qubits (ingredient 3). After a chosen duration for operation 2000, which is the gate duration and which will be discussed below, the feedforward Hamiltonian (or its variations of operation 2000) is turned off in an operation 2010.

The phases of the pumps to turn on the s feedforward Hamiltonians can be chosen so that no compensation is needed. A possible compensation scheme includes choosing pumps of the s feedforward Hamiltonians so that the drives are exactly compensated on the ancilla cat qubit. In the case that the feedforward Hamiltonians all have the same amplitude, and referring to the description of figure 17, this comes down to the number of feedforward Hamiltonians being in the "+" case equaling the number of feedforward Hamiltonians being in the "-" case, as a possible example

$$H_{CX^s}/\hbar = g_{CX^s}\left(a_1 + a_1^\dagger - 2\alpha\right)\left(a_2^\dagger a_2 - a_3^\dagger a_3 + \cdots + a_s^\dagger a_s - a_{s+1}^\dagger a_{s+1}\right)$$ where the alternating signs ensure the compensation. Even if the amplitudes are not strictly equal, at the first order of analysis, the phase compensation scheme yields excellent results. In the case where s is odd, a solution is that an even number of feedforward Hamiltonians cancel each other out, and a single (or more) conventional compensation is engineered.

### F. Logical quantum gates

#### F1. Principles

Due to the nature of the classical LDPC codes described herein, the X gate and the Z gate can easily be performed on the encoded logical qubits:

- The logical X gates need only be performed on the bottom-most qubits of the logical groups of the logical qubit of the cellular automaton embodiment, or the logical X group as explained below (namely, on the at least one qubit which provides the support for the logical X operator),
- The logical Z gates need only be performed on the data cat qubits of the logical group of the logical qubit.

However, both the potential distance and the fact that at least some data cat qubits participate in several logical groups make the performance of logical CNOT gates complex. However, the Applicant designed a quantum system and a method which a specifically tailored to performing a CNOT gate on the classical LDPC codes described herein. Indeed, the Applicant has designed a quantum system and a method which a specifically tailored to performing a CNOT gate on one or more logical qubits encoded in any of the general family of classical LDPC codes using cat qubits.

#### F2. Logical CNOT quantum gate

Figure 22 shows an exemplary embodiment of such a quantum system. System 2200 comprises two circuits:

- The LDPC quantum superconducting circuit 4 of figures 1 to 13 (or LDPC circuit 4), and
- A routing quantum superconducting circuit 5 (or routing circuit 5).

As appears on the right part of figure 22, the data resonators of the routing circuit 5 are represented by big circles, whereas the ancilla resonators are represented by small circles. The ancilla resonators of LDPC circuit 4 are not shown for simplicity's sake, but they have been represented on figure 13.
The routing circuit 5 comprises at least the same number of data resonators as the LDPC circuit 4. Indeed, each data resonator of the LDPC circuit 4 is directly connected to a corresponding data resonator of the routing circuit 5.
Advantageously, the data resonators of the routing circuit 5 are arranged similarly to the data resonators of the LDPC circuit 4, such that the grid-like geometry applies similarly to both the LDPC circuit 4 and the routing circuit 5. Not only does this make determination of the below defined path easier, but it also guarantees that the links between the LDPC circuit 4 and the routing circuit 5 will all be more or less identical, or at the very least similar in length and nature, thus ensuring homogeneous behavior of these links.
If this condition is not met, the correspondence of the data resonators with the LDPC circuit 4 and the routing circuit 5 will need to be closely monitored and controlled when designing the below defined path.
However, the routing circuit 5 is different when it comes to the ancilla resonators. In the example described here, each ancilla resonator is connected to at least two and at most four data resonators of the routing circuit 5, such that it is possible to make a single continuous path which connects all data cat qubits of the routing circuit 5, which path alternates data cat qubits and ancilla qubits, each data cat qubit in said path being connected to its neighboring ancilla qubit(s) in the path, and the path never comprising twice the same data cat qubit or the same ancilla qubit.
More generally, substantially all data cat qubits are connected to at least two ancilla qubits, and substantially all ancilla qubits are connected to at least two data cat qubits, such that a continuous path can be defined in the routing circuit 5 which connects any two data cat qubits and is comprised of pairs of data cat qubits which are connected via an ancilla qubit. In this manner, it is possible to create a repetition code connecting any two data cat qubits in the routing circuit 5.
There are several manners to provide for the above limitation. For example, routing circuit 5 may comprise one ancilla qubit connecting every two data cat qubits which are neighbors horizontally or vertically in the grid-like geometry. Alternatively, some ancilla qubits can be connected to 3 or 4 data cat qubits, as long as it allows to ensure that no ancilla qubit can be subject to two CNOT operation from different data cat qubits of different weight-two repetition code stabilizers at the same time. In some cases, this can also be obtained by time multiplexing CNOT operations, with the disadvantage of complicating the operation design and increasing the operating time of the logical CNOT (and hence the risks of the logical CNOT undergoing an error in this added operating time).

The principles for applying a CNOT gate are shown on the left part of figure 22. This part shows that applying a logical CNOT gate between a control logical qubit $Z_L^c$ and a target logical qubit $Z_L^t$ can be performed in 4 operations:

a) The routing circuit 5 undergoes a preparation phase in which a continuous path is determined in the routing circuit 5, and in which the data cat qubits of that path are initialized with a state of a repetition code, such as a $|0\rangle_L$ state of a repetition code,

b) The states of the data cat qubits of the logical group of the control logical qubit are mapped on their corresponding data cat qubits in the routing circuit 5 - this operation is referenced (1) on the left part of figure 22, as well as on the right part of figure 22,

c) A MXX operation is selectively performed between chosen data cat qubits of the path and chosen data cat qubits of the routing circuit 5 which correspond to the data cat qubit(s) which define the support for the logical X operator of the target logical qubit - this operation is referenced (2) on the left part of figure 22, as well as on the right part of figure 22 (wherein on the right part of figure 22 the support for the logical X operator is the logical base data cat qubit(s) of the logical group of the target logical qubit), and

d) Conditionally on the result of the MXX operation, and on the result of a MZ operation, adaptation operations are applied physically or in software form on the control logical qubit and the data cat qubit(s) which define the support for the logical X operator of the target logical qubit (e.g., the logical base data cat qubit(s) of the logical group of the target logical qubit in the right part of figure 22).

All of these operations will now be detailed in greater detail.

F3. Operations a and b

The most fundamental parts of performing the CNOT lie in operations b) and c). Operation a) aims at providing a way to produce a "copy" of the control logical qubit in the routing circuit 5, for instance by first entangling together data cat qubits of the routing circuit 5 and initializing them with a $|0\rangle_L$ state of a repetition code.

In order to do so, it is necessary to provide a continuous path (hereinafter the "routing path"), which passes by all data cat qubits of the routing circuit 5 associated with a data cat qubit of the logical group of the control logical qubit and which does not cross over itself. This may be done in various manners, depending on the topology of the ancilla qubits as described above. In the case where the routing circuit 5 comprises one ancilla qubit connecting every two data cat qubits which are neighbors horizontally or vertically in the grid-like geometry, it will be fairly simple to provide the shortest path possible, starting from leftmost or rightmost data cat qubit of the logical group of the control logical qubit in the top row of the grid-like geometry. The man-skilled in the art will readily identify many ways in which the routing path can be determined. These ways will of course vary depending on the repartition of the ancilla qubits in the routing circuit 5, as explained above. The aim of this routing path is to provide a repetition code which will receive the states of the control logical qubit and allow it to interact with the target logical qubit to perform the CNOT gate without damaging the classical LDPC code.

The end of the routing path may vary depending on the target logical qubit. Indeed, when the LDPC circuit 4 is initialized, all of its data cat qubits are brought to a $|0\rangle_L$ state (or alternatively a $|1\rangle_L$ state) by first initializing the data cat qubits with a $|0\rangle$ state (respectively a $|1\rangle$ state) and then measuring all of the stabilizer operators. This has as a consequence to entangle all of the qubits of the code (e.g., the $|0\rangle_L$ or $|1\rangle_L$ state is a completely entangled state). This is not the case for the $|+\rangle_L$ or $|-\rangle_L$, which are separable states, which is a consequence of the classical LDPC structure. Other methods can be used to initialize the LDPC circuit 4, but they will lead to the same consequence.

As a result, the value of the logical X operator of a target logical qubit is not carried in a single group of qubits like with the Z information and the logical groups $Z_L^c$ and $Z_L^t$ shown in grey on figure 22. On the contrary, the X information is carried by many different groups of qubits which obey the following rule: a set of qubits of the LDPC circuit 4 constitute a logical X group for a given logical qubit if the qubits in this set of qubits share an odd number of qubits with the logical group of the given logical qubit, and an even number of qubits with all other logical groups in the LDPC circuit 4. This is a necessary and sufficient condition to ensure that the logical X operator of this given logical qubit anti-commutes with the corresponding logical Z operator, while commuting with all of the other logical Z operators of the other logical qubits. Said otherwise, the logical X group for a given logical qubit constitutes the data cat qubit(s) of the LDPC circuit (4) which define the support for the logical X operator of that logical qubit.

For the cellular automaton embodiment, the determination of logical X groups according to this rule is equivalent to multiplying the logical base data cat qubits of the logical group of the given logical qubit by any combination of stabilizer motifs as defined by their position in the grid-like geometry of the LDPC circuit 4. Incidentally, such as shown with the logical X group $X_L^c$ of the control logical qubit, and with the logical X group $X_L^t$ of the target logical qubit, in the particular implementation of the cellular automaton embodiment, the case of a logical group having a single logical qubit directly verifies the above defined rule.

As a result, performing operation c) can be very different depending on the logical X group $X_L^t$ which is chosen to carry out the MXX operation on the target logical qubit. More specifically, it readily appears that the logical X group $X_L^t$ of the target logical qubit $X_L^t$ of the target logical qubit may contain many data cat qubits which can be almost anywhere on the LDPC circuit 4. Hence, there are three main possibilities:

- All of the data cat qubits of the logical X group chosen to perform the MXX operation are part of the routing path of operation a)
- At least one data cat qubits of the logical X group chosen to perform the MXX operation is not part of the routing path of operation a)
- None of the data cat qubits of the logical X group chosen to perform the MXX operation are part of the routing path of operation a).

The latter case will in practicality be reduced to the case where a single data cat qubit of the logical X group chosen to perform the MXX operation is not part of the routing path of operation a). Indeed, in the contrary, there will be a need to join all of the target cat qubits of the logical X group which are not part of the of the routing path of operation a), and to put them in a GHZ state in order to perform the MXX operation. This may be disadvantageous because the operations on GHZ states are known to suffer from a poor fidelity, although it may lead to more flexibility in lattice surgery schemes, should it not be desirable to extend the routing path right up to the neighboring data cat qubit to a routing target qubit for whatever reason. The GHZ procedure is detailed below.

Consequently, the above possibilities define the following main alternatives:

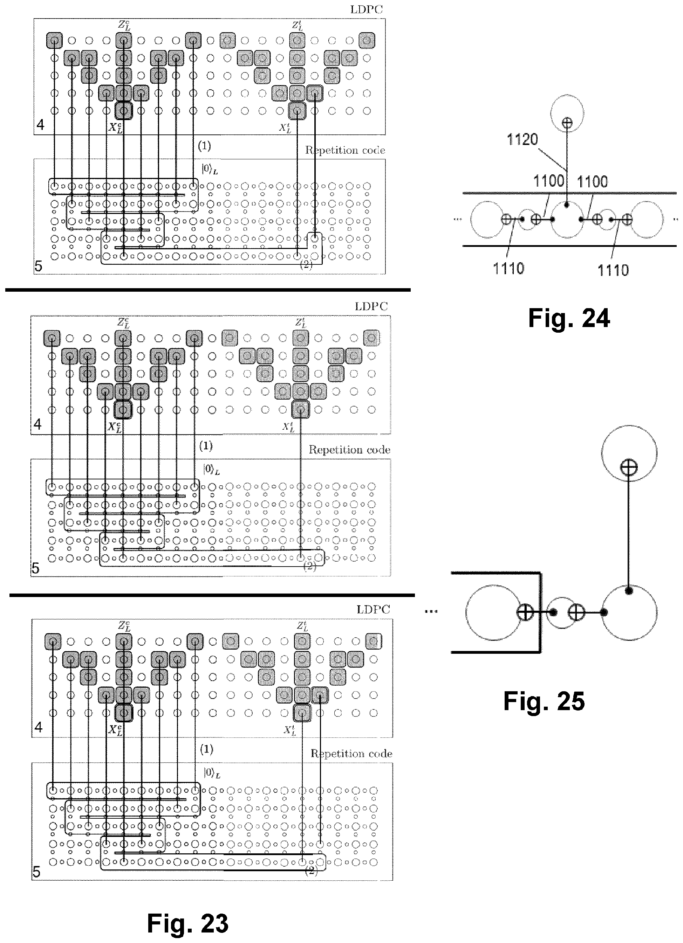

A) The routing path contains all of the data cat qubits of the logical X group as shown in the upper panel of figure 23, and a number of routing path shapes can be envisaged. Of course, the logical X group may contain only a single data cat qubit as shown in the middle panel of figure 23, and the skilled person would appreciate that the operations for applying to a single data cat is analogous to those if there are a plurality.

B) The routing path contains all of the data cat qubits of the logical X group but one, and the routing path is designed to end at a data cat qubit of the routing circuit 5 (hereinafter the "end path qubit") which is a neighbor of the data cat qubit in the routing circuit 5 (hereinafter the "routing target qubit") which is connected to the one data cat qubit of the logical X group which is not in the routing path (hereinafter the "main target qubit"). This is shown in the lower panel of figure 23.

C) The logical X group contains a single data cat qubit, and it is not in the routing path (but rather adjacent to an end of the path). This is shown in figure 22.

In the example shown on figure 22, the logical X group $X_L^t$ of the target logical qubit is made of a single data cat qubit (the main target qubit). In this case, the end path qubit which is the neighbor horizontally or vertically in the grid-like geometry of the routing target qubit. This is most advantageous because it provides for the shortest routing path in the routing circuit 5, and also for the simplest realization in operations b), c) an d).

In the example shown on figure 22, the routing path is the serpentine shown in the routing circuit 5, and it ends next to the routing target qubit.

In any case, after the routing path has been determined in the routing circuit 5, its data cat qubits are set with a $|0\rangle$ state, and the stabilizers of the repetition code are measured using the ancillary qubits connecting pairs of data cat qubits such that the data cat qubits are put in a $|0\rangle_L$ state. The ancilla qubits of the routing path are crucial as they are necessary to implement the repetition code to obtain the $|0\rangle_L$ state in the data cat qubits of the path. As will be appreciated, the data qubits of the routing path and the ancilla qubits may be selectively used to more generally to prepare all of the data cat qubits within said routing path with a "$|0\rangle_L$" state or a "$|1\rangle_L$" state of a repetition code.

Operation b) aims at "reproducing" the state of the control logical qubit state in the routing circuit 5. To do this, a CNOT is performed between each of the data cat qubits of the logical group $Z_L^c$ of the control logical qubit and its associated data cat qubit in the routing path, with the data cat qubits of the control logical qubit being the control and the data cat qubits of the routing circuit 5 being the target.

Operation b) can be performed simultaneously for all of the data cat qubits of the routing circuit 5. This operation "transfers" the states of the control logical qubit to its equivalent in the routing path in the routing circuit 5. Because of the repetition code performed in operation a), the data cat qubits of the routing path are entangled, and this transfer reflects in all data cat qubits of the routing path, up to the end path qubit.

Operation c) will be performed differently for each of the above described alternatives.

F4. Operations c and d - Alternative A

According to alternative A), the routing path contains all of the data cat qubits of the logical X group. In the example described here, the routing path ends at a data cat qubit of the routing circuit 5 which is associated to the highest and leftmost data cat qubit of the logical group of the control logical qubit.

For this reason, a MXXX or MXX operations will be executed on each of the data cat qubits in the routing circuit 5 which are connected to the data cat qubits of the logical X group $X_L^t$ of the target logical qubit (hereinafter the "internal routing target qubits") as shown on figure 24. The expression "internal routing target qubit" is used to designate the fact that these are qubits relating to the target logical qubit which are included in the routing path.

The MXXX operation can be carried out as follows:

c1) the internal routing target qubits undergo a MX operation in order to disentangle them from the repetition code, and to prepare them with a $|+\rangle$ state. At a different time, or simultaneously, the two ancilla qubits surrounding the internal routing target qubits undergo a MZ operation in order to disentangle them from the repetition code, and to prepare them with a $|0\rangle$ state.

c2) In an operation 1100, a first CNOT gate is made between each pair of prepared ancilla qubits and each internal routing target qubit, with the ancilla qubits being the target and the internal routing target qubits being the control,

c3) In an operation 1110, a second CNOT gate is made between each pair of prepared ancilla qubits and each neighboring data cat qubit in the routing path, with the ancilla qubits being the control and the neighboring data qubits being the target, and in a preferred manner, a third CNOT gate is made simultaneously in an operation 1120 between the data cat qubit of LDPC circuit 4 connected to the internal routing target qubit and the internal routing target qubits, with the former being the target and the latter being the control. Incidentally, the second CNOT and third CNOT can be done asynchronously.

c4) The internal routing target qubit and the two ancilla qubits undergo an MX operation, and their results are multiplied together to determine the value MXXX.

As conventional with MX operations, these steps may be repeated several times, until a result is chosen by majority voting.

As mentioned above, this measurement should be performed on all of the internal routing target qubits. However, because all of the internal routing target qubits are inside the routing path, the bilateral X measurements via the ancilla qubits cancel each other out for MXXX purposes, and it is necessary to perform operations c1) to c4) with a single ancilla qubit and its corresponding neighboring data cat qubit instead of on both, resulting in a MXX operation instead of a MXXX operation for one of the internal routing target qubits. After the MXXX operations and the MXX operation have been performed, their results are multiplied to provide a MXX result.

It should be noted that these are only preferred operations, and the skilled person would be aware of equivalent operations yielding the same result differing in only minor details, insofar this falls within the scope of the invention defined by the appended claims.

The above operations c1)-c4) may be referred to as a first option.

For instance, in a second option, operation c2) may be applied a first time, operation c3) may then be applied, and then operation c2) may be applied again (i.e. a second time). In this case, operation c4) comprises only performing an MX operation on the internal routing target qubit.

Once more, operations c1) to c4) are performed on all but one of the internal routing target qubits, and operations c1) to c4) are performed on the remaining internal routing target qubit using a single ancilla qubit, and to multiply the results of operation c4) on all internal routing target qubits to provide a MXX result.

In a third option, operations c1)-c4) of option 1 may be performed on all but one of the internal routing target qubits, and operations c1)-c4) of option 2 may be performed on the remaining internal routing target qubit using a single ancilla qubit, and the results of c4) from both options on all internal routing target qubits are multiplied to provide the MXX result.

In a fourth option, operations c1)-c4) of option 2 may be performed on all but one of the internal routing target qubits, and operations c1)-c4) of option 1 may be performed on the remaining internal routing target qubit using a single ancilla qubit, and the results of c4) from both options on all internal routing target qubits are multiplied to provide the MXX result.

The above applies equally to the scenario wherein there is only a single data cat qubit of the LDPC circuit which provides the support for the logical X operator of the target logical qubit (i.e. the logical X group $X_L^t$ of the target logical qubit comprises on a single data cat qubit - hereinafter the "internal routing target qubits"). For completeness, MXXX operation can be carried out as follows:

c1) Similar to above, the internal routing target qubit is prepared with a $|+\rangle$ (or equivalently a $|-\rangle$ state as discussed below), and (at a different time or simultaneously) one of the ancilla qubit of the routing path surrounding this internal routing target qubit with a $|0\rangle$ (or equivalently a $|1$ state as discussed below).

c2) A first CNOT gate is performed between the single prepared ancilla qubits and the internal routing target qubit, with the prepared ancilla qubit being the target and the internal routing target qubit being the control.

c3) A second CNOT gate is performed between the single prepared ancilla qubits and its neighboring data cat qubit in the routing path which is not the internal routing target qubit, with the single prepared ancilla qubit being the control and the neighboring data cat qubit being the target, and in a preferred manner, a third CNOT gate is performed between the data cat qubit of LDPC quantum superconducting circuit connected to the internal routing target qubit (namely, the single data cat qubit of the LDPC circuit which provides the support for the logical X operator of the target logical qubit) and the corresponding internal routing target qubit, with the former being the target and the latter being the control. Again, incidentally, the second CNOT and third CNOT can be done asynchronously.

c4) The internal routing target qubit and the single prepared ancilla qubit of the routing path neighboring it undergo an MX operation, and theirs result are multiplied together to provide an MXX result.

As conventional with MX operations, these steps may be repeated several times, until a result is chosen by majority voting.

It should be noted that these are only preferred operations, and the skilled person would be aware of equivalent operations yielding the same result differing in only minor details, insofar this falls within the scope of the invention defined by the appended claims.

The above operations c1)-c4) may be referred to as a first option.

For instance, in a second option, operation c2) may be applied a first time, operation c3) may then be applied, and then operation c2) may be applied again (i.e. a second time). In this case, operation c4) comprises only performing an MX operation on the internal routing target qubit to provide an MXX result.

In both of the general above cases (i.e. single or multiple data cat qubits in the routing circuit 5 which are connected to the data cat qubits of the logical X group $X_L^t$ of the target logical qubit being in the path) thereafter, operation d) can perform the following optional operations:

- d1) if the value of the MXX result is "-1", a Pauli-Z gate is applied on the data cat qubits of the logical group of the control logical qubit,
- d2) The state Z of all of the data cat qubits in the routing path - excluding the internal routing target qubits - are measured and multiplied, and, if the result of operation d2) is "-1", a Pauli-X gate is performed on the logical X group of the logical target qubit.

It will appear from the above that operations d1) and d2) can be performed simultaneously, and that the measurements of operations d2) can themselves all be performed simultaneously.

In the above, the Pauli-Z gate and the Pauli-X gate of operations d1) and d2) need not be performed physically. Due to their nature, they may be stored and performed as a "software" operation down the road. Indeed, the LDPC decoder allows to store all Pauli-X and Pauli-Z operations on a given data cat qubit, and to apply them as a pure logical operation bundle at a later point in time. A physical operation corresponding to this bundle may nevertheless be necessary prior to performing some operations of some gates, such as a Toffoli gate between two logical qubits encoded as described here.

F5. <u>Operations c and d - Alternative B</u>

According to alternative B, the routing path contains all of the data cat qubits of the logical X group but one, and the routing path ends at a data cat qubit of the routing circuit 5 which is a neighbor of the routing target qubit which is connected to the main target qubit.

This means that the MXXX operations will be performed on all internal routing target qubits as described with respect to operations c1 to c4 of point F4 immediately above, every time with both ancilla qubits.

Moreover, for the routing target qubit, figure 25 shows the operations used to perform the MXX operation:

- c5) the routing target qubit is prepared with a $|+\rangle$ state, and the ancilla qubit connecting the routing target qubit and the end path qubit is prepared with a $|0\rangle$ state,
- c6) a first CNOT gate is performed between the ancilla qubit of operation c5) and the routing target qubit, with the former being the target and the latter being the control,

- c7) a second CNOT gate is made between the ancilla qubit of operation c5) and the end path qubit, with the former being the control and the latter being the target, and in a preferred manner, a third CNOT gate is made simultaneously between the main target qubit (namely, the data cat qubit of the LDPC circuit connected to the routing target qubit) and the routing target qubit, with the former being the target and the latter being the control. Incidentally, the second CNOT and third CNOT can be done asynchronously.
- c8) the routing target qubit and the ancilla qubit undergo an MX operation and the results are multiplied to determine the MXX value.

As conventional with MX operations, these steps may be repeated several times, until a result is chosen by majority voting.

After the MXXX operations and the MXX operation have been performed, their results are multiplied to provide a MXX result.

In this alternative, operation d) is unchanged.

It should be noted that these are only preferred operations, and the skilled person would be aware of equivalent operations yielding the same result differing in only minor details, insofar this falls within the scope of the invention defined by the appended claims.

The above operations c1)-c4) or the above operations c1)-c8) may be both referred to as a first option.

For instance, in a second option, operation c2) may be applied a first time, operation c3) may then be applied, and then operation c2) may be applied again (i.e. a second time). In this case, operation c4) comprises only performing an MX operation on the internal routing target qubit.

In a third option, operation c6) may be applied a first time, operation c7) may then be applied, and then operation c6) may be applied again (i.e. a second time). In this case, operation c8) comprises only performing an MX operation on the routing target qubit.

In a fourth option, the results of c4) of option 1 may be multiplied with the results of c8) of option 3 to provide the MXX result. In a fifth option, the results of c4) of option 2 may be multiplied with the results of c8) of option 3 to provide the MXX result. In a sixth option, the results of c4) of option 2 may be multiplied with the results of c8) of option 1 to provide the MXX result.

F6. <u>Operations c and d - Alternative C</u>

Alternative C is treated similarly to alternative B.

According to this alternative, the logical X group contains a single data cat qubit, and it is not contained in the routing path. Hence, the routing path ends at an end path qubit which is a data cat qubit of the routing circuit 5 which is a neighbor of the routing target qubit which is connected to the main target qubit.

Consequently, the operations are similar to those of Alternative B), but without the MXXX operations. Only the MXX operation is performed:

- c1) the routing target qubit is prepared with a $|+\rangle$ state, and the ancilla qubit connecting the routing target qubit and the end path qubit is prepared with a $|0\rangle$ state,
- c2) a first CNOT gate is performed between the ancilla qubit of operation c1) and the routing target qubit, with the former being the target and the latter being the control,
- c3) a second CNOT gate is made between the ancilla qubit of operation c1) and the end path qubit, with the former being the control and the latter being the target, and in a preferred manner, a third CNOT gate is made simultaneously between the main target qubit and the routing target qubit, with the former being the target and the latter being the control. Incidentally, the second CNOT and third CNOT can be done asynchronously.
- c4) the routing target qubit and the ancilla qubit undergo an MX operation and the results are multiplied to determine the MXX value.

As conventional with MX operations, these steps may be repeated several times, until a result is chosen by majority voting.

In this alternative, operation d) is unchanged.

It should be noted that these are only preferred operations, and the skilled person would be aware of equivalent operations yielding the same result differing in only minor details, insofar this falls within the scope of the invention defined by the appended claims.

The above operations c1)-c4) may be referred to as a first option.

For instance, in a second option, operation c2) may be applied a first time, operation c3) may then be applied, and then operation c2) may be applied again (i.e. a second time). In this case, operation c4) comprises only performing an MX operation on the routing target qubit to provide an MXX result.

In the above, the CNOT measurements have been presented by first setting a "$|0\rangle_L$" state or a "$|0\rangle$" state to the qubits used to perform the MXX measurement. The same operations could be performed by setting a "$|1\rangle_L$" state or a "$|1\rangle$" state.

F7. <u>Logical CNOT quantum gate - control LDPC logical qubit and target repetition logical qubit</u>

The quantum system of figures 22 to 25 (namely having an LDPC circuit and a routing circuit) may also be used to perform other logical quantum gates. In order to do so, it may be necessary to perform a CNOT gate between a logical group in the LDPC circuit 4 and the routing circuit 5, with the former being the control and the latter being the target.

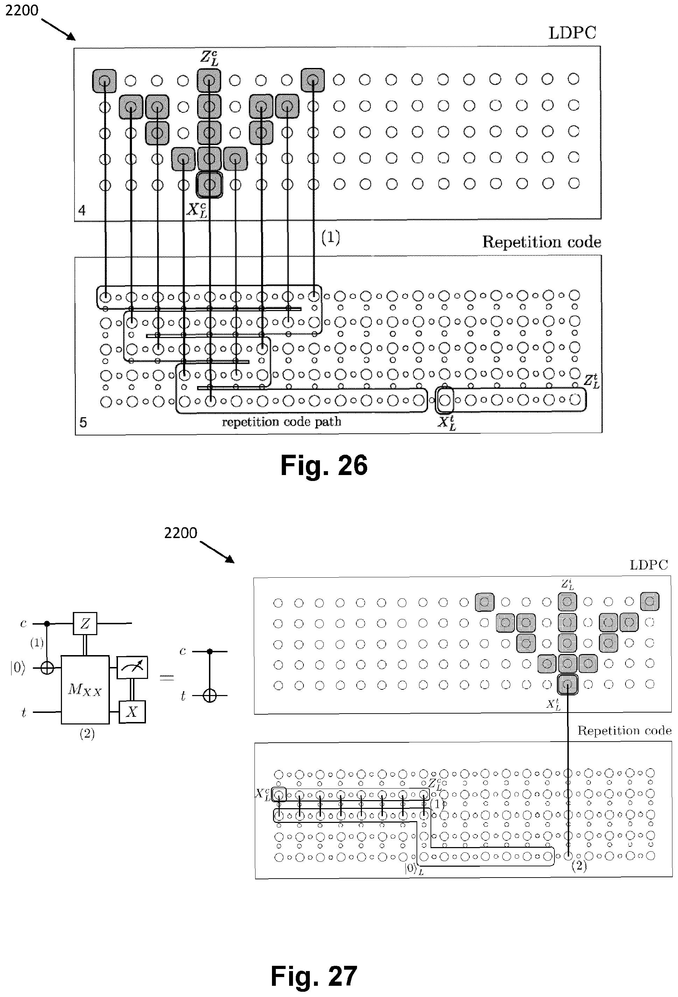

Figure 26 provides an example of how to perform this CNOT gate. This may be used for instance as an essential step in a particular implementation of a logical Toffoli gate between three LDPC logical qubits, or in other logical operation protocols.

As appears on figure 26, performing a CNOT between a logical qubit in the LDPC circuit 4 having a logical group $Z_L^c$ and a logical X group $X_L^c$ as a control and a repetition code in the routing circuit 5 as a target (hereinafter "the target repetition code") resembles a lot operations of the CNOT gates of figures 23 and 24.

The main difference is that the target logical qubit is replaced by a repetition code, and that consequently there is no need to deal with the logical X group of the target logical qubit.

As a result, all that is needed is to entangle the target repetition code with the data cat qubits of the routing circuit 5 which are connected to the data cat qubit of the logical group $Z_L^c$, and then to perform the CNOTs between the qubits of the logical group $Z_L^c$ and their equivalents in the routing circuit 5.

In other words, this is done by defining a repetition code path which will include all of the qubits of the routing circuit 5 which are connected to the data cat qubit of the logical group $Z_L^c$, similarly to the routing path of figures 23 and 24, and prolonging the repetition code path until a data cat qubit (namely an end path data qubit) which neighbors a data cat qubit of the target repetition code. As can be seen in figure 26, a bridging ancilla qubit will thus be between the end path data qubit and the neighboring data cat qubit of the target repetition path (the neighboring data cat qubit is indicated as the support for the logical X operator in figure 26, although as discussed below this need not necessarily be the case) .

Once, the repetition code path is defined, its data cat qubits need to be prepared with a "$|0\rangle$" state or a "$|1\rangle$" state, and its ancilla qubits need to be prepared with a "$| +\rangle$" state or "$| -\rangle$" state, and the stabilizers of a repetition code in the repetition code path need to be repeatedly measured to prepare a routing repetition code in a "$|0\rangle_L$" state or a "$|1\rangle_L$" state in the repetition code path..

A CNOT gate is then performed with each of the data cat qubits of the logical group of said control logical qubit being the control, each time with the corresponding data cat qubit in said routing circuit 5 being the target.

There are thus two repetition codes:

- The repetition code path which has been the object of the CNOT gates with each of the data cat qubits of the logical group of said control logical qubit
- The target repetition code.

As described above, the repetition code path and the target repetition code are bridged by an ancilla qubit of the routing circuit 5 which connects the end path qubit and its neighbor data cat qubit of the target repetition code.

Finally, all that remains is to perform an MX operation on the bridging ancilla qubit between the end path qubit and the neighbor data cat qubit of the target repetition code:

c1) to prepare the bridging ancilla qubit with a $|+\rangle$ or a $|-\rangle$ state,
c2) to perform a first CNOT gate between the prepared bridging ancilla qubit and the neighboring data cat qubit of the repetition code, with the former being the control and the latter being the target,
c3) to perform a second CNOT gate between the prepared bridging ancilla qubit and the end path qubit, with the former being the control and the latter being the target,
c4) to perform an MX operation on the performed bridging ancilla qubit, to provide an MXX result.

As conventional with MX operations, these steps may be repeated several times, until a result is chosen by majority voting.

As described with the other quantum gates, operation d) may be performed:

d1) depending on the MXX result, to derive a quantum Z gate to be performed on the data cat qubits of the logical group of the control logical qubit,

d2) to apply a measurement of operator Z on all data cat qubits in said repetition code path, and, based on the result of the product of the results, to derive a quantum X gate to be performed on an odd number of data cat qubits of the target repetition code.

Said otherwise, in order to entangle the logical qubit thus prepared routing repetition code with the logical qubit encoded in the target repetition code, the bridging ancilla qubit is prepared with with a |+⟩ or a |-⟩ state. A first CNOT gate is performed between the prepared bridging ancilla qubit and the neighboring data cat qubit of the target repetition code, with the former being the control and the latter being the target. A second CNOT gate is performed between the prepared bridging ancilla qubit and the end path qubit, with the former being the control and the latter being the target.

The result of this operation is that the data cat qubits of the target repetition code and the data cat qubits in the repetition code path will be entangled.

An MX operation is then performed on the prepared bridging ancilla qubit, to provide an MXX result. As will be appreciated, depending on the MXX result, to a quantum Z gate is performed on the data cat qubits of the logical group of the control logical qubit. A measurement of operator Z on all data cat qubits in the repetition code path is performed, and, based on the result of the product of the results, a quantum X gate is derived, to be performed on an odd number of data cat qubits of the target repetition code. In the example shown in figure 26, the quantum X gate is derived and to be performed on only the neighboring data cat qubit of the logical qubit encoded in the target repetition code, which in this instance is the support for the logical X operator.

As will be appreciated, the support for the logical X operator for the logical qubit encoded in the target repetition code need not be provided by a single data cat qubit, but rather any odd number of data cat qubits of the target repetition code. Thus, it can be envisaged that the repetition code path is defined such that a part of the path is brought adjacent to the target repetition code so as to apply the above steps to an odd number of data cat qubits of the target repetition code (a number greater than 1).

Of course, if the target repetition code already includes the data cat qubits of the routing circuit 5 which are connected to the data cat qubit of the logical group $Z_L^c$ of the LDPC circuit 4, then the operation of extending the path and entangling the target repetition code may be omitted.

All that remains in this instance is to then perform a CNOT gate with each of the data cat qubits of the logical group of said control logical qubit being the control, each time with the corresponding data cat qubit in said routing circuit 5 being the target.

F8. Logical CNOT quantum gate - control repetition logical qubit and target LDPC logical qubit

It may also sometimes be necessary to perform a CNOT gate between a logical qubit encoded in the routing circuit 5 and a logical qubit encoded in the LDPC circuit 4, with the former being the control and the latter being the target. Figure 27 provides an example of how to perform this CNOT gate, which again may be performed on the quantum system of figures 22 to 26. This may also be used for instance as an essential step in a particular implementation of a logical Toffoli gate between three LDPC logical qubits, or in other logical operation protocols.

The principles for applying a CNOT gate are shown on the left part of figure 27. This part shows that applying a logical CNOT gate between a control logical qubit $Z_L^c$ and a target logical qubit $Z_L^t$ can be performed in the 4 general operations a)-d) discussed above in relation to figures 22-27.

The operations differ in that it is a control qubit encoded in a repetition code already in the routing circuit 5 which is "copied" using a logical qubit encoded in the routing path. In this case, a continuous routing path is provided which includes data cat qubits which are each coupled to an adjacent data cat qubit of the control logical qubit. That is, the path is defined so as to pass next to each of the data cat qubits of the repetition code which encodes the control logical qubit, as shown in figure 27. Each data cat qubit of the repetition code of the control logical qubit is thus coupled to a respective data cat qubit in the path. The aim of this routing path is thus similar to the above, i.e. to provide a repetition code which will receive the states of the control logical qubit, and thus allows it to interact with a target logical qubit which is differently encoded in the LDPC circuit and which may be positioned further away. In essence, this routing logical qubit is to be entangled with the control repetition code logical qubit, so as to in turn be entangled with the data cat qubit(s) corresponding to (namely being connected to) the LDPC data cat qubit(s) which provide the support for the X logical operator of the target logical qubit in the LDPC circuit.

One requirement is thus that the data cat qubits of the repetition code of the control logical qubit are each able to be coupled to a respective data cat qubit of the path. This means that these pairs of data cat qubits in the routing quantum superconducting circuits must be connected so as to enable a CNOT gate to be performed therebetween. This may be via direct connections between adjacent data cat qubits in the routing circuit, or alternatively via a string of sub-operations involving the ancilla qubits positioned between the data cat qubits. In the embodiment of figure 27, the n data resonators of said routing quantum superconducting circuit are arranged in a similar two-dimensional array as the n data resonators of the LDPC quantum superconducting circuit, such that the n data resonators of said routing quantum superconducting circuit connected to a respective one of said n data resonators of the LDPC quantum superconducting circuit effectively "mirror" those of the LDPC quantum superconducting circuit.

In figure 27, each of the n data resonators of said routing quantum superconducting circuit is connected to each of its nearest neighbours in the two-dimensional array. This "all-to-all" connectivity is beneficial as it enables both the control logical qubit and the routing path in which the routing logical quit is encoded to be positioned anywhere in the routing quantum superconducting circuit.

As for before, the end of the routing path may vary relative to the position of the routing target qubits in the routing circuit corresponding to the logical X group of the target logical qubit. However, just as before in operation a), after the routing path has been determined, all of the data cat qubits within said routing path are prepared with a "$|0\rangle_L$" state or a "$|1\rangle_L$" state of a repetition code.

Operation b) is then performed as above, namely by performing a CNOT between each of the data cat qubits of the logical group $Z_L^c$ of the control logical qubit (which is all of the data cat qubits of the control repetition code) and its associated adjacent data cat qubit in the routing path, with the data cat qubits of the routing circuit 5 of the control logical qubit being the control and the data cat qubits of the routing circuit 5 being the target.

As will be appreciated, operation c) is identical to those described above in relation to Figures 22-26 regarding the CNOT between a control logical qubit and a target logical qubit both encoded using an LDPC code. Thus the main possibilities are and corresponding operations are identical as described above for alternatives A), B), and C), namely:

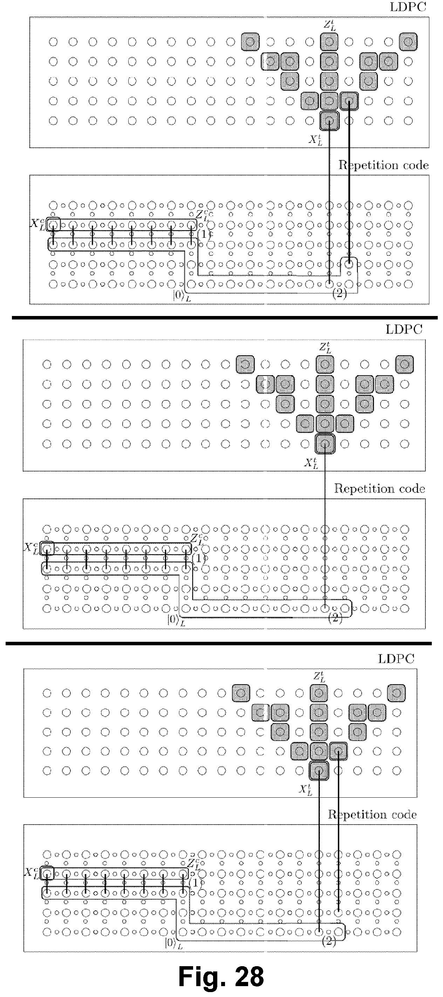

A) The routing path contains all (i.e. a plurality) of the data cat qubits of the logical X group as shown in the upper panel of figure 28, or the logical X group may contain only a single data cat qubit as shown in the middle panel of figure 28, and the skilled person would appreciate that the operations for applying to a single data cat is analogous to those if there are a plurality.

B) The routing path contains all of the data cat qubits of the logical X group but one, and the routing path is designed to end at a data cat qubit of the routing circuit 5 (hereinafter the "end path qubit") which is a neighbor of the data cat qubit in the routing circuit 5 (hereinafter the "routing target qubit") which is connected to the one data cat qubit of the logical X group which is not in the routing path (hereinafter the "main target qubit"). This is shown in the lower panel of figure 28.

C) The logical X group contains a single data cat qubit, and it is not in the routing path (but rather adjacent to an end of the path). This is shown in figure 27.

The alternatives A), B), and C) may then be performed identically as described above.

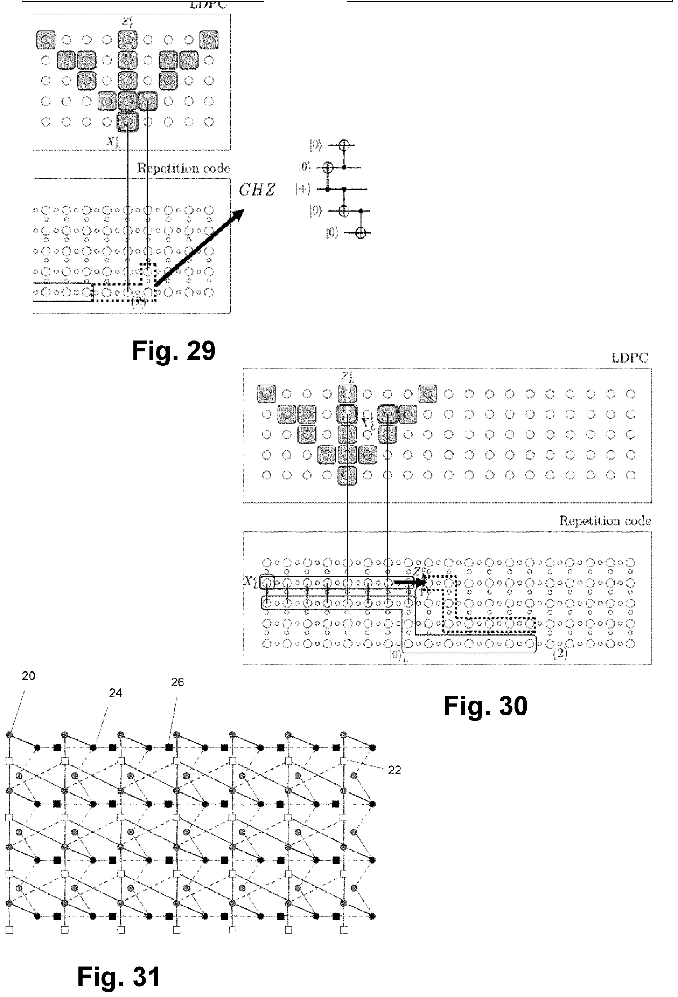

Figure 29 shows the preparation of GHZ state, which may be required to perform operation c) when the logical X group contains one or more data cat qubits with corresponding data cat qubits in the routing circuit (herein external routing target qubits) which are not in the routing path and are not adjacent to an end of the path. This may apply equally to either of the above described methods for performing a logical CNOT wherein the target logical qubit is encoded in the LDPC circuit.

In this situation, the external routing target qubits are put in a GHZ state along with an ancilla qubit of the routing circuit which is external and adjacent to the routing path, along with the intervening data cat qubits and ancilla qubits. This is shown by the route delimited by dashed lines in figure 29. Said otherwise, a continuous GHZ route is defined in the routing quantum superconducting circuit such that an end of the GHZ route comprises an end route qubit, wherein the end route qubit is a routing-ancilla qubit which is external to the path and which is a neighbor of one of the routing-data cat qubits in the path, the neighboring routing-data cat qubit in the path forming a neighboring path qubit, the GHZ route further being defined to include the one or more external routing target qubits.

In this situation, operation c) may comprise performing the following operations:

c1) preparing any routing-ancilla qubit or routing-data cat qubit in the GHZ route with a $|+\rangle$ or a $|-\rangle$ state forming a prepared control qubit, and preparing all other routing-ancilla qubits or routing-data cat qubits with a with a $|0\rangle$ or a $|1\rangle$ state forming prepared cascading target qubits;

c2) preparing a GHZ state from all of the routing-ancilla qubits and routing-data cat qubits in the GHZ route by at least performing a first CNOT gate between the prepared control qubit as the control and a neighboring prepared cascading target qubit as the target;

c3) performing a second CNOT gate between the end route qubit and the neighboring path qubit, with the former being the control and the latter being the target, and a (third) CNOT gate between the LDPC-data cat qubit of the logical X group of the target logical qubit coupled to an external routing target qubit and the external routing target qubit, with the former being the target and the latter being the control; and

c4) performing an MX operation on at least the external routing target qubit; wherein operation c) further comprises multiplying the results of operations c4) for all external routing target qubits to provide the MXX result.

As conventional with MX operations, these steps may be repeated several times, until a result is chosen by majority voting.

In this alternative, operation d) is unchanged.

The continuous GHZ route thus includes one or more successive routing-data cat qubits each connected to a neighboring routing-data cat qubit in the GHZ route via a routing-ancilla qubit.

As will be appreciated, in the case wherein there is only a single external routing target qubit, then multiplying the results of operations (c4) for all external routing target qubits to provide the MXX result comprises providing the MXX result from the MX operation on at least the single external routing target qubit.

Operation (c2) may comprise preparing the GHZ state from all of the routing-ancilla qubits and routing-data cat qubits in the GHZ route by: (i) performing the first CNOT gate between the prepared control qubit as the control and a neighboring prepared cascading target qubit as the target so as to create an initial GHZ state, (ii) performing further CNOT gate between the first GHZ state as the control and another neighboring prepared cascading target qubit as the target or performing a second CNOT between the first GHZ state as the control and both of the neighboring prepared cascading target qubit as the targets to create a further GHZ state, and (iii) repeating operation (ii) until the GHZ state is prepared from all of the routing-ancilla qubits and routing-data cat qubits in the GHZ route. This is shown in schematic form on the right-hand side of figure 29.

Herein, by "neighbour" it is meant immediate neighbour. For instance, the routing-ancilla qubit which is external to the path and which is a neighbor of one of the routing-data cat qubits in the path is an immediate neighbor to that routing-data cat qubits in the path, such that the routing-ancilla qubit is connected to that routing-data cat qubits in the path with no other routing-data cat qubits or routing ancilla qubits positioned therebetween.

It should be noted that these are only preferred operations, and the skilled person would be aware of equivalent operations yielding the same result differing in only minor details, insofar this falls within the scope of the invention defined by the appended claims.

The above operations c1)-c4) may be referred to as a first option.

For instance, in a second option, for each external target qubit, operation c2) may be applied a first time, operation c3) may then be applied, and then operation c2) may be applied again (i.e. a second time). In this case, operation c4) comprises only performing an MX operation on the external routing target qubit to provide an MXX result. When there is a plurality of external target qubits, operations c1)-c4) of the first option may be applied on one of the external target qubits, whereas operations of the second option may be applied on another of the external target qubits, and these results may be multiplied to provide the MXX result.

Figure 30 shows an example of a logical qubit encoded in a repletion code being moved in the routing circuit. In this instance, it is the control repetition code according to figures 27-28 which is moved; however the following could equally apply to any of the repetition codes implemented in the routing circuit. More generally, the control logical qubit encoded in the repetition code in figures 27-28, or the target logical qubit in figure 26 may be the result of previous upstream logical operations during a particular algorithm or from other lattice surgery implementations.

For instance, it can be conceived that during certain algorithms, the one or more routing target qubits (i.e. the routing-data cat qubit(s) of the routing quantum superconducting circuit which are each coupled to a respective one of the one or more LDPC-data cat qubit(s) of the logical X-group of the target logical qubit) may happen to also be repetition-data cat qubits of the first (control) repetition phase-flip error-correcting code which encodes the control logical qubit. This particular situation is shown in figure 30.

In this situation, the control logical qubit may be "moved" to a different position in the routing quantum superconducting circuit, such that the routing target qubit(s) are no longer also used in a repetition code to encode the control logical qubit. Thus, the moved control logical qubit may be used as the control logical qubit for performing a logical CNOT with the target logical qubit encoded using the classical LDPC code according to any of the aspects and embodiments disclosed herein.

This can be achieved a number of ways. For instance: (I) move the control logical qubit; (II) extend or define the path as in operation (a) such that the path includes a plurality of routing-data cat qubits which are each coupled to a respective repetition-data cat qubit of the moved control logical qubit, such that each repetition-data cat qubit of the moved control logical qubit is coupled to a respective routing-data cat qubit in the path; and (III) performing a CNOT gate as in operation (b), with each of the repetition-data cat qubits of the logical Z group of the moved control logical qubit being the control, each time with the corresponding coupled routing-data cat qubit in the path being the target.

As will be appreciated, steps (I)-(III) can be performed in any order, provided that the path includes a plurality of routing-data cat qubits which are each coupled to a respective repetition-data cat qubit of the control logical qubit and a CNOT gate is performed between each of the repetition-data cat qubits of the control logical qubit and respectively the corresponding coupled routing-data cat qubit in the path.

Moving the control logical qubit consists of first extending the repetition code which encodes the control logical qubit, and then subsequently cutting it. Extending the repetition code comprises preparing the routing-data cat qubits in a region of the routing circuit where the repetition code is to be extended to in a $|0\rangle$ or a $|1\rangle$ state, and preparing the routing-ancilla qubits in the region of the routing circuit where the repetition code is to be extended to in a $|+\rangle$ or a $|-\rangle$ state. The stabilizers of these are measured, and are herein referred to as "prepared stabilizers" (whilst the stabilizers of the repetition code which encodes the control logical qubit are continued to be measured). This is repeated a number of times, and depending on the measurements of the prepared stabilizers, corrections in the form of quantum X gates can be applied so that the routing-data cat qubits in the region of the routing circuit where the repetition code is to be extended to match those of the original control logical qubit. Alternatively, the required corrections can be tracked and accounted for later on (either physically, or in software).

Moving the control logical qubit then required cutting the original repetition code. This may be done by measuring the Z operator for each of the routing-data cat qubits to be cut, and stopping measuring the stabilizers which include these routing-data cat qubits to be cut. The stabilizers of the extended repetition code which is to be kept are still repeatedly measured. Again, depending on the measurements of these stabilizers, corrections in the form of quantum X gates can be applied so that the routing-data cat qubits in the region of the routing circuit where the repetition code is to be extended to match those of the original control logical qubit. Alternatively, the required corrections can be tracked and accounted for later on (either physically, or in software).

By following these operations, the control logical qubit is essentially moved to a different location in the routing circuit.

As will be appreciated, the control repetition logical qubit or the target repetition logical qubit described herein can be a magic state encoded in a repetition code, magic states for instance include: Toffoli, CZ, S, or T. The skilled person would be well aware of how magic states may be prepared in a repetition code (herein magic state logical qubit). For instance, they may be prepared in a so-called "magic state factory". The repetition code in which the magic state logical qubit is encoded may be part of the routing circuit (i.e. may be implemented in data cat qubits and ancilla qubits of the routing circuit).

Alternatively, the repetition code in which the magic state logical qubit is encoded (namely, the magic state factory) may be adjacent to the routing circuit (i.e. be implemented in data cat qubits and ancilla qubits of a magic state circuit wherein the data cat qubits thereof are not respectively connected to an LDPC-data cat qubit, the command circuit being configured to implement a magic state factory with the magic state circuit). In this case, the magic state circuit must be connected to the routing circuit via at least one ancilla qubit between a data cat qubit of the magic state circuit and a data cat qubit of the routing circuit. The repetition code in which the magic state logical qubit is encoded may then be moved, via any number of ways known in the art, to the routing circuit (e.g. via extending as described above, or extending and cutting as described above), such that the magic state logical qubit is the target repetition code logical qubit described herein. For instance, the repetition code in which the magic state logical qubit is encoded may be extended, through the least one ancilla qubit between a data cat qubit of the magic state circuit and a data cat qubit of the routing circuit, then subsequently optionally contracted or cut, such that the magic state logical qubit has effectively been moved to the routing circuit (for instance, so as to thereby be encoded using data cat qubits of the routing circuit which are respectively connected to LDPC circuit data cat qubits).

For the logical CNOT between a control qubit encoded in the LDPC circuit and a target repetition code logical qubit, the intended target logical qubit may be a magic state logical qubit prepared in an adjacent magic state factory. In this case, the magic state logical qubit may be extended to the repetition code path of the routing circuit as described above, without needing to subsequently cut the old repetition code in which the magic state logical qubit was originally encoded in the magic state factory. A CNOT may then be performed as before, between each data cat qubit of the logical Z group of the control logical qubit in the LDPC circuit, each time with the respective coupled routing data cat qubit in the repetition code path (in which the magic state logical qubit has been extended), with the former being the control and the latter being the target.

For the logical CNOT between a control repetition code logical qubit which is a magic state logical qubit prepared in an adjacent magic state factory and a control qubit encoded in the LDPC circuit, the magic state need not be extended or moved. Instead, all that is required is that the path in figure 27 is defined so as to bridge the routing circuit and the magic state circuit and include data cat qubits in the magic state circuit which are adjacent and coupled to those of the control magic state logical qubit. Exactly the same operations may then be performed as described above regarding figure 27. Namely, as in operation b), the CNOT is performed between the control magic state logical qubit and the logical $|0\rangle$ of the path logical qubit as the target. Operation c) is then performed as described above to provide an MXX measurement between the logical $|0\rangle$ of the path logical qubit and the target LDPC logical qubit, wherein the result of the MXX measurement is repeated multiple times to ensure fault-tolerance. Operation d) may then be performed as described above.

Figure 31 shows an exemplary circuit design for the quantum system of figures 22 to 30.

The layout of the chip is based on a flip chip architecture. The cables between qubits can be on a first or a second plane of the chip (respectively shown in plain or dotted lines). Most crucially, there are no two plain cables crossing or two dotted cable crossing.

Data qubits 20 of the classical LDPC codes are shown as dots and ancilla qubits 22 for measuring the error syndrome are shown as squares. Data qubits 24 of the routing circuit 5 are also shown as dots and ancilla qubits 26 of the routing circuit 5 are also shown as squares.

Thus, the LDPC quantum superconducting circuit is shown arranged on a first side of a flip-chip and the routing quantum superconducting circuit is arranged on a second side of the flip-chip which is opposite to the first side. For clarity, connections between nearest neighbor data cat qubits 24 of the routing circuit have been omitted, although may be present an advantageous as discussed above. Each data cat qubit 24 of the routing circuit 5 is respectively connected to each data cat qubit 20 of the LDPC circuit 5, as shown by the solid line therebetween. This connection or coupling may be through the form of a vias passing from the first side of the flip-chip on which the LDPC circuit 5 is situated to the second side of the flip-chip on which the routing circuit 4 is situated. Thus, performing the CNOT gate between the LDPC-data cat qubit and the routing target qubit coupled to the LDPC-data cat qubit may be made using the vias through the flip-chip which couples the LDPC-data cat qubit on the first side to the corresponding routing target qubit on the second side.

In any of the above exemplary methods, it is clear that whether the relevant ancilla qubits are prepared in a $|+\rangle$ state or $|-\rangle$ state or the relevant data qubits are prepared in a $|0\rangle$ state or a $|0\rangle$ state (or vice versa as appropriate), the skilled person would be well aware of how to track the associate propagating error (e.g. such as a corresponding propagating logical X error) and, at the end of the relevant sequence, perform the appropriate physical correcting measurement or corresponding software operation to yield identical results as described above and below.

## Claims

1. A quantum system for performing a classical low density parity check (LDPC) error-correcting code, the system comprising:

   a command circuit for selectively applying radiation; and
   an LDPC quantum superconducting circuit comprising:

   - a number n of data resonators, each data resonator being coupled to said command circuit for stabilizing a respective data cat qubit, wherein the n data resonators are arranged on said LDPC quantum superconducting circuit in a two-dimensional array defining a plurality of rows of data resonators extending along a length dimension L and a plurality of columns of data resonators extending along a height dimension H, the two-dimensional array extending from a first edge to a second edge in a first direction along the height dimension H and from a third edge to a fourth edge in a second direction along the length dimension L;
   - a plurality of ancilla resonators, each ancilla resonator being coupled to said command circuit for stabilizing a respective ancilla qubit in the ancilla resonator;
   - a first plurality of stabilizers, wherein each stabilizer of the first plurality of stabilizers is associated with a respective ancilla resonator of the plurality of ancilla resonators, the respective ancilla resonator being coupled to each of the data resonators of the stabilizer by a coupling, and wherein each stabilizer of the first plurality of stabilizers:

     (i) is formed from between 4 and 10 data resonators selected from a seven-by-seven sub-array of the two-dimensional array spanning seven consecutive rows along the first direction and seven consecutive rows along the second direction, and
     (ii) spans over at least two consecutive rows and at least two consecutive columns, wherein two or more data resonators are from the first row of the stabilizer in the first direction, two or more data resonators are from the final row of the stabilizer in the first direction, two or more data resonators are from the first column of the stabilizer in the second direction, and two or more data resonators are from the final column of the stabilizer in the second direction;

   wherein the LDPC quantum superconducting circuit is configured to implement a quantum gate through each coupling between the ancilla qubit stabilized in the ancilla resonator and the respective data cat qubit stabilized in the data resonator;
   wherein the command circuit is configured to implement a classical LDPC error-correcting code with the first plurality of stabilizers which only corrects phase flip errors on the data cat qubits stabilized in the data resonators, to thereby encode a plurality k of logical qubits from the data cat qubits such that the classical LDPC code has a value kd/n greater than 1, where d is the distance of the resulting classical LDPC code, the command circuit being configured to determine an error syndrome on each stabilizer of the first plurality of stabilizers by performing a parity check on the data cat qubits stabilized in the data resonators of the respective stabilizer by:

(i) stabilizing or preparing an ancilla qubit in the associated ancilla resonator of the stabilizer,
(ii) performing quantum gates between the ancilla qubit and each of the data cat qubits stabilized in the data resonators of the stabilizer, and
(iii) measuring the associated ancilla qubit to determine the presence of a phase flip on at least one of the data cat qubits stabilized in the data resonators of the stabilizer.

2. The quantum system of claim 1, wherein the ancilla qubits are ancilla cat qubits;

wherein the command circuit is configured to implement a multi-qubit quantum gate through two or more of the couplings between the ancilla qubit stabilized in the ancilla resonator and respectively two or more data cat qubits stabilized in the data resonators; and
wherein the command circuit is configured to determine the error syndrome on each stabilizer of the first plurality of stabilizers by:

(i) stabilizing or preparing the ancilla cat qubit in a "|->" or "|+>" state of the X operator in the associated ancilla resonator of the stabilizer,
(ii) performing CNOT gates between the ancilla cat qubit and each of the data cat qubits stabilized in the data resonators of the stabilizer, wherein at least two of the CNOT gates between the ancilla cat qubit and respectively at least two of the data cat qubits are performed substantially simultaneously, and
(iii) applying a measurement operation of the X operator on the ancilla cat qubit in the associated ancilla resonator of the stabilizer to determine the presence of a phase flip on at least one of the data cat qubits stabilized in the data resonators of the stabilizer.

3. The quantum system of any preceding claim, wherein each stabilizer of the first plurality of stabilizers:

(i) is formed from between 4 and 9 data resonators selected from a three-by-three sub-array of the two-dimensional array spanning three consecutive rows along the first direction and three consecutive rows along the second direction.

4. The quantum system of claim 3, wherein each stabilizer of the first plurality of stabilizers is selected from the group comprising: a ring-like shape formed from 8 data resonators; a C-like shape forward-facing along the second direction formed from 7 data resonators; a C-like shape backward-facing along the second direction formed from 7 data resonators; an I-like shape formed from 7 data resonators.

5. The quantum system of any preceding claim, wherein at least two of said stabilizers may be distinct, and/or the edges of the two-dimensional array defines a non-rectangular shape.

6. The quantum system of any preceding claim, wherein the LDPC quantum superconducting circuit further comprises a second plurality of stabilizers, wherein each stabilizer of the second plurality of stabilizers:

(i) is formed from between 2 and 10 data resonators selected from a seven-by-seven sub-array of the two-dimensional array spanning seven consecutive rows along the first direction and seven consecutive rows along the second direction, and
(ii) spans over at least two consecutive rows and at least two consecutive columns, wherein a single data resonators is from the first row of the stabilizer in the first direction, or a single data resonators is from the final row of the stabilizer in the first direction, or a single data resonators is from the first row of the stabilizer in the second direction, or a single data resonators is from the final row of the stabilizer in the second direction;

wherein the command circuit is configured to implement the classical LDPC error-correcting code with the first plurality of stabilizers and the second plurality of stabilizers which only corrects phase flip errors on the data cat qubits stabilized in the data resonators, the command circuit being further configured to determine an error syndrome on each stabilizer of the second plurality of stabilizers by performing a parity check on the data cat qubits stabilized in the data resonators of the respective stabilizer.

7. Quantum logic system for performing a quantum gate, comprising said quantum system according to one of the preceding claims and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit is associated with a logical X group of qubits of said LDPC quantum superconducting circuit which defines the support for the logical X operator of the target logical qubit, such that the routing path includes all of the data cat qubits of the routing circuit which are connected to the data cat qubits of the logical X group of the target logical qubit which form internal routing target qubits, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

c1) to prepare an internal routing target qubit with a $|+\rangle$ state or a $|-\rangle$ state, and to prepare the two ancilla of the routing path surrounding this internal routing target qubit with a $|0\rangle$ state or a $|1\rangle$ state,

c2) to perform a first CNOT gate between the pair of prepared ancilla qubits and the internal routing target qubit, with the former being the target and latter being the control,

c3) to perform a second CNOT gate between the pair of prepared ancilla qubits and two neighboring data cat qubits in the routing path, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit being further arranged to perform operations c1) to c4) on all but one of the internal routing target qubits, to perform operations c1) to c4) on the remaining internal routing target qubit using a single ancilla qubit, and to multiply the results of operation c4) on all internal routing target qubits to provide a MXX result, said command circuit being further arranged:

d1) depending on the MXX result, to derive a quantum Z gate to be performed on the data cat qubits of the logical group of the control logical qubit, and

d2) to apply a measurement of operator Z on all data cat qubits in said routing path except the internal routing target qubits, and, based on the result of the product of the results, to derive a quantum X gate to be performed on the data cat qubits of the logical X group.

8. Quantum logic system for performing a quantum gate, comprising said quantum system according to claims 1-6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit comprises a single data cat qubit of said LDPC quantum superconducting circuit which provides the support for the logical X operator of the target logical qubit, such that the routing path includes the only data cat qubit of the routing circuit which is connected to the single data cat qubit of the target logical qubit which forms an internal routing target qubit, and to selectively use the ancilla qubits of said routing path to prepare all of the data cat qubits within said routing path with a "$|0\rangle_L$" state or a "$|1\rangle_L$" state of a repetition code,

b) to perform a CNOT gate with each of the data cat qubits of the logical group of said control logical qubit being the control, each time with the corresponding data cat qubit of said routing quantum superconducting circuit being the target,

c1) to prepare the internal routing target qubit with a $|+\rangle$ or $|-\rangle$ state, and to prepare one of the ancilla qubit of the routing path surrounding this internal routing target qubit with a $|0\rangle$ or a $|1\rangle$ state,

c2) to perform a first CNOT gate between the single prepared ancilla qubits and the internal routing target qubit, with the former being the target and latter being the control,

c3) to perform a second CNOT gate between the single prepared ancilla qubits and its neighboring data cat qubit in the routing path which is not the internal routing target qubit, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the single prepared ancilla qubit of the routing path neighboring it, and to multiply their result to provide an MXX result,

said command circuit being further arranged:

d1) depending on the MXX result, to derive a quantum Z gate to be performed on the data cat qubits of the logical group of the control logical qubit, and

d2) to apply a measurement of operator Z on all data cat qubits in said routing path except the internal routing target qubits, and, based on the result of the product of the results, to derive a quantum X gate to be performed on the data cat qubits of the logical X group.

9. Quantum logic system for performing a quantum gate, comprising said quantum system according to claims 1-6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit comprises a single data cat qubit of said LDPC quantum superconducting circuit which provides the support for the logical X operator of the target logical qubit and forms a main target qubit and the corresponding connected data cat qubit of the routing quantum superconducting circuit forms a routing target qubit, such that the routing path does not include the routing target qubit, wherein the routing path ends at an end path qubit which is a data cat qubit of the routing quantum superconducting circuit neighboring said routing target qubit, and to selectively use the ancilla qubits of said routing path to prepare all of the data cat qubits within said routing path with a "$|0\rangle_L$" state or a "$|$

$1\rangle_L$" state of a repetition code,
b) to perform a CNOT gate with each of the data cat qubits of the logical group of said control logical qubit being the control, each time with the corresponding data cat qubit of said routing quantum superconducting circuit being the target,

and said command circuit being further arranged:

c1) to prepare the routing target qubit with a $|+\rangle$ or a $|-\rangle$ state, and to prepare the ancilla qubit connecting the routing target qubit and the end path qubit with a $|0\rangle$ or a $|1\rangle$ state,
c2) to perform a first CNOT gate between the prepared ancilla qubit and the routing target qubit, with the former being the target and the latter being the control,
c3) to perform a second CNOT gate between the prepared ancilla qubit and the end path qubit, with the former being the control and the latter being the target, and a third CNOT gate between the main target qubit and the routing target qubit, with the former being the target and the latter being the control,
c4) to perform an MX operation on the routing target qubit and the prepared ancilla qubit, and to multiply their result to provide an MXX result,
d1) depending on the MXX result, to derive a quantum Z gate to be performed on the data cat qubits of the logical group of the control logical qubit,
d2) to apply a measurement of operator Z on all data cat qubits in said routing path, and, based on the result of the product of the results, to derive a quantum X gate to be performed on the data cat qubits of the logical X group.

10. Quantum logic system for performing a quantum gate, comprising said quantum system according to one of claims 1 to 6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,
a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,
said command circuit being arranged, based on a control logical qubit and a target logical qubit encoded in said LDPC quantum superconducting circuit:

a) to define a routing path within said routing quantum superconducting circuit which connects all data cat qubits corresponding to the logical group of said control logical qubit with an ancilla qubit being included between each pair of data cat qubits, wherein the target logical qubit is associated with a logical X group of qubits of said LDPC quantum superconducting circuit which defines the support for the logical X operator of the target logical qubit, such that the routing path includes all of the data cat qubits of the routing circuit (5) which are connected to the data cat qubits of the logical X group of the target logical qubit but one, these data cat qubits forming internal routing target qubits and the remaining data cat qubit connected to the data cat qubits of the logical X group of the target logical qubit forming a routing target qubit, wherein the routing path ends at an end path qubit which is a data cat qubit of the routing superconducting quantum circuit (5) neighboring said routing target qubit, and to selectively use the ancilla qubits of said routing path to prepare all of the data cat qubits within said routing path with a "$|0\rangle_L$" state or a "$|1\rangle_L$" state of a repetition code,
b) to perform a CNOT gate with each of the data cat qubits of the logical group of said control logical qubit being the control, each time with the corresponding data cat qubit of said routing quantum superconducting circuit being the target,
c1) to prepare an internal routing target qubit with a $|+\rangle$ state or a $|-\rangle$ state, and to prepare the two ancilla of the routing path surrounding this internal routing target qubits with a $|0\rangle$ state or a $|1\rangle$ state,
c2) to perform a first CNOT gate between the pair of prepared ancilla qubits and the internal routing target qubit, with the former being the target and latter being the control,
c3) to perform a second CNOT gate between the pair of prepared ancilla qubits and two neighboring data cat qubits in the routing path, with the former being the control and the latter being the target, and a third CNOT gate between the data cat qubit of LDPC quantum superconducting circuit connected to the internal routing target qubit and the corresponding internal routing target qubit, with the former being the target and the latter being the control,

c4) to perform an MX operation on the internal routing target qubit and the pair of ancilla qubits of the routing path surrounding it, and to multiply their result,

said command circuit being arranged to perform operations c1) to c4) on all of the internal routing target qubits, and being further arranged:

c5) to prepare the routing target qubit with a $|+\rangle$ state, and to prepare the ancilla qubit connecting the routing target qubit and the end path qubit with a $|0\rangle$ state,

c6) to perform a first CNOT gate between the prepared ancilla qubit and the routing target qubit, with the former being the target and the latter being the control,

c7) to perform a second CNOT gate between the prepared ancilla qubit and the end path qubit, with the former being the control and the latter being the target, and a third CNOT gate between the data cat qubit of LDPC quantum superconducting circuit connected to the routing target qubit and the routing target qubit, with the former being the target and the latter being the control,

c8) to perform an MX operation on the routing target qubit and the prepared ancilla qubit, and to multiply their result,

said command circuit being further arranged to multiply the results of operation c4) together and with the result of operation c8) to provide a MXX result,

d1) depending on the MXX result, to derive a quantum Z gate to be performed on the data cat qubits of the logical group of the control logical qubit,

d2) to apply a measurement of operator Z on all data cat qubits in said routing path except the internal routing target qubits, and, based on the result of the product of the results, to derive a quantum X gate to be performed on the data cat qubits of the logical X group.

11. Quantum logic system for performing a quantum gate, comprising said quantum system according to one of claims 1 to 6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,

a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,

said routing quantum superconducting circuit comprising a target repetition code comprising a succession of data cat qubits and ancilla qubits,

said command circuit being arranged, based on a control logical qubit encoded in said LDPC quantum superconducting circuit:

a) to define a repetition code path within said routing quantum superconducting circuit which connects all data cat qubits corresponding to the logical group of said control logical qubit with an ancilla qubit being included between each pair of data cat qubits, said repetition code path extending until an end path qubit which is a data cat qubit of the routing quantum superconducting circuit neighboring a data cat qubit of said target repetition code, with a bridging ancilla qubit between said end path qubit and said neighboring data cat qubit of said target repetition code

b1) to prepare all of the data cat qubits within said repetition code path with a "$|0\rangle$" state or a "$|1\rangle$" state, and the ancilla qubits with a "$|+\rangle$" state or "$|-\rangle$" state,

b2) to repeatedly measure the stabilizers in the repetition code path to prepare a routing repetition code in a "$|0\rangle_L$" state or a "$|1\rangle_L$" state in the repetition code path,

b3) to perform a CNOT gate with each of the data cat qubits of the logical group of said control logical qubit being the control, each time with the corresponding data cat qubit in said routing quantum superconducting circuit (5) being the target,

and said command circuit being further arranged:

c1) to prepare the bridging ancilla qubit with a $|+\rangle$ or a $|-\rangle$ state,
c2) to perform a first CNOT gate between the prepared bridging ancilla qubit and the neighboring data cat qubit of the repetition code, with the former being the control and the latter being the target,
c3) to perform a second CNOT gate between the prepared bridging ancilla qubit and the end path qubit, with the former being the control and the latter being the target,
c4) to perform an MX operation on the performed bridging ancilla qubit, to provide an MXX result,
d1) depending on the MXX result, to derive a quantum Z gate to be performed on the data cat qubits of the logical group of the control logical qubit,
d2) to apply a measurement of operator Z on all data cat qubits in said repetition code path, and, based on the result of the product of the results, to derive a quantum X gate to be performed on an odd number of data cat qubits of the target repetition code.

12. Quantum logic system for performing a quantum gate, comprising said quantum system according to one of claims 1 to 6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,
a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,
said routing quantum superconducting circuit comprising a repetition code comprising a succession of data cat qubits and ancilla qubits,
said command circuit being arranged, based on a control logical qubit encoded in said LDPC quantum superconducting circuit:

i) to define a repetition code path within said routing quantum superconducting circuit which connects all data cat qubits corresponding to the logical group of said control logical qubit with an ancilla qubit being included between each pair of data cat qubits, wherein said repetition code path comprises said repetition code, and
ii) to perform a CNOT gate with each of the data cat qubits of the logical group of said control logical qubit being the control, each time with the corresponding data cat qubit in said routing quantum superconducting circuit being the target.

13. Quantum logic system for performing a quantum gate, comprising said quantum system according to one of claims 1 to 6 and a routing quantum superconducting circuit, said routing quantum superconducting circuit comprising:

a number n of data resonators, each data resonator having a respective resonance frequency and being coupled to said command circuit for stabilizing a respective data cat qubit, each of said n data resonators of said routing quantum superconducting circuit being connected to a respective one of said n data resonators of said LDPC quantum superconducting circuit,
a plurality of ancilla resonators, each ancilla resonator having an ancilla resonance frequency coupled to said command circuit for stabilizing an ancilla qubit, substantially all data cat qubits being connected to at least two ancilla qubits, and substantially all ancilla qubits being connected to at least two data cat qubits, such that a continuous path can be defined in said routing quantum superconducting circuit which connects any two data cat qubits and is comprised of pairs of data cat qubits which are connected via an ancilla qubit,
said routing quantum superconducting circuit comprising a control repetition code comprising a succession of data cat qubits and ancilla qubits configured to encode a control logical qubit, the data cat qubits of the control repetition code forming repetition data qubits, wherein the plurality of repetition data qubits form a logical group which defines the support for the Z logical operator of the control logical qubit, and wherein the control logical qubit further comprises a logical X group of one or more repetition data qubit(s) which defines the support for the X logical operator of the control logical qubit,
based on said control logical qubit encoded in said routing quantum superconducting circuit and a target logical data qubit encoded in said LDPC quantum superconducting circuit, wherein the target logical qubit is associated with a logical X group of one or more qubits of said LDPC quantum superconducting circuit which defines the support for the logical X operator of the target logical qubit, wherein the one or more data cat qubits of the routing quantum superconducting circuit each coupled to a respective one of the one or more data cat qubits of the logical X group of the target logical qubit form one or more routing target qubits of the routing quantum superconducting circuit, said command circuit being arranged:

a) to define a routing path within said routing quantum superconducting circuit, wherein the path includes a plurality of data cat qubits which are each coupled to an adjacent repetition data qubit such that each repetition data qubit is coupled to a respective data cat qubit in the path, wherein the path includes an ancilla qubit between each pair of data cat qubits, the routing path being configured such that the routing path comprises a routing repetition code implemented on all of the data cat qubits of the path, wherein a routing logical qubit is encoded using the routing repetition code,

b) to perform a CNOT gate with each of the repetition data qubits of the logical group of the control logical qubit being the control, each time with the corresponding adjacent coupled data cat qubit in the routing path being the target,

c) to perform an MX operation on at least the one or more routing target qubits to provide an MXX result; and

d1) depending on the value of the MXX result, to derive a quantum Z gate to be performed on the repetition data qubits of the logical group of the control logical qubit, and

d2) to apply a measurement of operator Z on all data cat qubits in said routing path except any routing target qubits in said routing path, and, based on the result of the product of the results, to derive a quantum X gate to be performed on the data cat qubits of the logical X group of the target logical qubit.

14. Quantum logic system for performing a quantum gate according to claim 13, wherein the logical X group of the target logical qubit comprises only a single data cat qubit of said LDPC quantum superconducting circuit which forms a main target qubit, such that the routing quantum superconducting circuit comprises a corresponding single routing target qubit, said command circuit being arranged:

in operation (a), to define said routing path such that said routing path does not include the single routing target qubit which forms an external routing target qubit, wherein the routing path is defined such that an end of the path comprises an end path qubit, wherein the end path qubit is a data cat qubit of the routing quantum superconducting circuit neighboring the external routing target qubit, and selectively using the ancilla qubits of said routing path to prepare all of said data cat qubits within said path with a "$|0\rangle_L$" state or a "$|1\rangle_L$" state of the routing repetition code,

said command circuit being further arranged:

c1) to prepare the external routing target qubit with a $|+\rangle$ or a $|-\rangle$ state, and to prepare the ancilla qubit connecting the routing target qubit and the end path qubit with a $|0\rangle$ state or a $|1\rangle$,

c2) to perform a first CNOT gate between the prepared ancilla qubit and the external routing target qubit, with the former being the target and the latter being the control,

c3) to perform a second CNOT gate between the prepared ancilla qubit and the end path qubit, with the former being the control and the latter being the target, and a third CNOT gate between the main target qubit and the external routing target qubit, with the former being the target and the latter being the control,

c4) to perform an MX operation the external routing target qubit and the prepared ancilla qubit, and multiply their result to provide an MXX result.

**Patentansprüche**

1. Quantensystem zum Durchführen eines klassischen Low-Density-Parity-Check- (LDPC) Fehlerkorrekturcodes, das System umfassend:

eine Befehlsschaltung zum selektiven Anwenden von Strahlung; und
eine supraleitende LDPC-Quantenschaltung, umfassend:

- eine Anzahl n von Datenresonatoren, wobei jeder Datenresonator mit der Befehlsschaltung zum Stabilisieren eines jeweiligen Daten-Katzen-Qubits gekoppelt ist, wobei die n Datenresonatoren auf der supraleitenden LDPC-Quantenschaltung in einem zweidimensionalen Array eingerichtet sind, das eine Vielzahl von Zeilen von Datenresonatoren, die sich entlang einer Längendimension L erstrecken, und eine Vielzahl von Spalten von Datenresonatoren, die sich entlang einer Höhendimension H erstrecken, definiert, wobei sich das zweidimensionale Array von einer ersten Kante zu einer zweiten Kante in einer ersten Richtung entlang der Höhendimension H und von einer dritten Kante zu einer vierten Kante in einer zweiten Richtung entlang der Längendimension L erstreckt;

- eine Vielzahl von Hilfsresonatoren, wobei jeder Hilfsresonator zum Stabilisieren eines jeweiligen Hilfs-Qubits im Hilfsresonator mit der Befehlsschaltung gekoppelt ist;

- eine erste Vielzahl von Stabilisatoren, wobei jeder Stabilisator der ersten Vielzahl von Stabilisatoren mit einem jeweiligen Hilfsresonator der Vielzahl von Hilfsresonatoren verknüpft ist, wobei der jeweilige Hilfsresonator mit jedem der Datenresonatoren des Stabilisators über eine Kopplung gekoppelt ist, und wobei jeder Stabilisator der ersten Vielzahl von Stabilisatoren:

(i) aus 4 bis 10 Datenresonatoren gebildet ist, die aus einem Sieben-mal-Sieben-Teilarray des zweidimensionalen Arrays ausgewählt sind, das sieben aufeinanderfolgende Zeilen in der ersten Richtung und sieben aufeinanderfolgende Zeilen in der zweiten Richtung umspannt, und

(ii) mindestens zwei aufeinanderfolgende Zeilen und mindestens zwei aufeinanderfolgende Spalten umspannt, wobei zwei oder mehr Datenresonatoren aus der ersten Zeile des Stabilisators in der ersten Richtung, zwei oder mehr Datenresonatoren aus der letzten Zeile des Stabilisators in der ersten Richtung, zwei oder mehr Datenresonatoren aus der ersten Spalte des Stabilisators in der zweiten Richtung und zwei oder mehr Datenresonatoren aus der letzten Spalte des Stabilisators in der zweiten Richtung stammen;

wobei die supraleitende LDPC-Quantenschaltung so konfiguriert ist, dass sie durch jede Kopplung zwischen dem im Hilfsresonator stabilisierten Hilfs-Qubit und dem jeweiligen im Datenresonator stabilisierten Daten-Katzen-Qubit ein Quantengatter implementiert;

wobei die Befehlsschaltung so konfiguriert ist, dass sie einen klassischen LDPC-Fehlerkorrekturcode mit der ersten Vielzahl von Stabilisatoren implementiert, die nur Phasenumkehrfehler an den in den Datenresonatoren stabilisierten Daten-Katzen-Qubits korrigiert, um dadurch eine Vielzahl k logischer Qubits aus den Daten-Katzen-Qubits so zu codieren, dass der klassische LDPC-Code einen Wert kd/n größer als 1 aufweist, wobei d der Abstand des resultierenden klassischen LDPC-Codes ist, wobei die Befehlsschaltung so konfiguriert ist, dass sie ein Fehlersyndrom an jedem Stabilisator der ersten Vielzahl von Stabilisatoren bestimmt, indem sie eine Paritätsprüfung an den in den Datenresonatoren des jeweiligen Stabilisators stabilisierten Daten-Katzen-Qubits durchführt durch:

(i) Stabilisieren oder Vorbereiten eines Hilfs-Qubits im verknüpften Hilfsresonator des Stabilisators,

(ii) Durchführen von Quantengattern zwischen dem Hilfs-Qubit und jedem der in den Datenresonatoren des Stabilisators stabilisierten Daten-Katzen-Qubits, und

(iii) Messen des verknüpften Hilfs-Qubits, um das Vorhandensein einer Phasenumkehr auf mindestens einem der in den Datenresonatoren des Stabilisators stabilisierten Daten-Katzen-Qubits zu bestimmen.

2. Quantensystem nach Anspruch 1, wobei die Hilfs-Qubits Hilfs-Katzen-Qubits sind;

wobei die Befehlsschaltung so konfiguriert ist, dass sie ein Multi-Qubit-Quantengatter durch zwei oder mehr Kopplungen zwischen dem im Hilfsresonator stabilisierten Hilfs-Qubit und jeweils zwei oder mehr in den Datenresonatoren stabilisierten Daten-Katzen-Qubits implementiert; und

wobei die Befehlsschaltung so konfiguriert ist, dass sie das Fehlersyndrom an jedem Stabilisator der ersten Vielzahl von Stabilisatoren bestimmt durch:

(i) Stabilisieren oder Vorbereiten des Hilfs-Katzen-Qubits in einem "|->"- oder "|+>"-Zustand des X-Operators im verknüpften Hilfsresonator des Stabilisators,

(ii) Durchführen von CNOT-Gattern zwischen dem Hilfs-Katzen-Qubit und jedem der in den Datenresonatoren des Stabilisators stabilisierten Daten-Katzen-Qubits, wobei mindestens zwei der CNOT-Gatter zwischen dem Hilfs-Katzen-Qubit und jeweils mindestens zwei der Daten-Katzen-Qubits im Wesentlichen gleichzeitig durchgeführt werden, und

(iii) Anwenden einer Messoperation des X-Operators auf das Hilfs-Katzen-Qubit im verknüpften Hilfsresonator des Stabilisators, um das Vorhandensein einer Phasenumkehr auf mindestens einem der Daten-Katzen-Qubits zu bestimmen, die in den Datenresonatoren des Stabilisators stabilisiert sind.

3. Quantensystem nach einem vorstehenden Anspruch, wobei jeder Stabilisator der ersten Vielzahl von Stabilisatoren:

(i) aus 4 bis 9 Datenresonatoren gebildet ist, die aus einem Drei-mal-Drei-Teilarray des zweidimensionalen Arrays ausgewählt sind, das drei aufeinanderfolgende Zeilen in der ersten Richtung und drei aufeinanderfolgende Zeilen in der zweiten Richtung umspannt.

4. Quantensystem nach Anspruch 3, wobei jeder Stabilisator der ersten Vielzahl von Stabilisatoren aus der Gruppe ausgewählt ist, die umfasst: eine ringähnliche Form, die aus 8 Datenresonatoren gebildet wird; eine C-ähnliche Form, die in der zweiten Richtung nach vorne gerichtet ist und aus 7 Datenresonatoren gebildet wird; eine C-ähnliche Struktur, die in der zweiten Richtung nach hinten gerichtet ist und aus 7 Datenresonatoren gebildet wird; eine I-ähnliche Form, die aus 7 Datenresonatoren gebildet wird.

5. Quantensystem nach einem vorstehenden Anspruch, wobei mindestens zwei der Stabilisatoren verschieden sein können und/oder die Kanten des zweidimensionalen Arrays eine nicht-rechteckige Form definieren.

6. Quantensystem nach einem vorstehenden Anspruch, wobei die supraleitende LDPC-Quantenschaltung ferner eine zweite Vielzahl von Stabilisatoren umfasst, wobei jeder Stabilisator der zweiten Vielzahl von Stabilisatoren:

(i) aus 2 bis 10 Datenresonatoren gebildet ist, die aus einem Sieben-mal-Sieben-Teilarray des zweidimensionalen Arrays ausgewählt sind, das sieben aufeinanderfolgende Zeilen in der ersten Richtung und sieben aufeinanderfolgende Zeilen in der zweiten Richtung umspannt, und
(ii) mindestens zwei aufeinanderfolgende Zeilen und mindestens zwei aufeinanderfolgende Spalten umspannt, wobei ein einzelner Datenresonator aus der ersten Zeile des Stabilisators in der ersten Richtung oder ein einzelner Datenresonator aus der letzten Zeile des Stabilisators in der ersten Richtung, ein einzelner Datenresonator aus der ersten Zeile des Stabilisators in der zweiten Richtung oder ein einzelner Datenresonator aus der letzten Zeile des Stabilisators in der zweiten Richtung stammt;

wobei die Befehlsschaltung so konfiguriert ist, dass sie den klassischen LDPC-Fehlerkorrekturcode mit der ersten Vielzahl von Stabilisatoren und der zweiten Vielzahl von Stabilisatoren implementiert, die nur Phasenumkehrfehler an den in den Datenresonatoren stabilisierten Daten-Katzen-Qubits korrigiert, wobei die Befehlsschaltung ferner so konfiguriert ist, dass sie ein Fehlersyndrom an jedem Stabilisator der zweiten Vielzahl von Stabilisatoren bestimmt, indem sie eine Paritätsprüfung an den in den Datenresonatoren des jeweiligen Stabilisators stabilisierten Daten-Katzen-Qubits durchführt.

7. Quantenlogiksystem zum Durchführen eines Quantengatters, umfassend das Quantensystem nach einem der vorstehenden Ansprüche und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,
eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,
wobei die Befehlsschaltung dafür eingerichtet ist, basierend auf einem logischen Steuer-Qubit und einem in die supraleitende LDPC-Quantenschaltung codierten logischen Ziel-Qubits:

a) einen Routing-Pfad innerhalb der supraleitenden Routing-Quantenschaltung zu definieren, der alle Daten-Katzen-Qubits, die der logischen Gruppe des logischen Steuer-Qubits entsprechen, mit einem Hilfs-Qubit verbindet, das zwischen jedem Paar von Daten-Katzen-Qubits beinhaltet ist, wobei das logische Ziel-Qubit einer logischen X-Gruppe von Qubits mit der supraleitenden LDPC-Quantenschaltung verknüpft ist, die die Unterstützung für den logischen X-Operator des logischen Ziel-Qubits definiert, sodass der Routing-Pfad alle Daten-Katzen-Qubits der Routing-Schaltung beinhaltet, die mit den Daten-Katzen-Qubits der logischen X-Gruppe des logischen Ziel-Qubits verbunden sind, die interne Routing-Ziel-Qubits bilden, und selektiv die Hilfs-Qubits des Routing-Pfads zu verwenden, um alle der Daten-Katzen-Qubits innerhalb des Routing-Pfads mit einem "$|0\rangle_L$"-Zustand oder einem "$|1\rangle_L$"-Zustand eines Wiederholungscodes vorzubereiten,

b) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit der supraleitenden Routing-Quantenschaltung das Ziel ist,

c1) ein internes Routing-Ziel-Qubit mit einem |+⟩-Zustand oder einem |-⟩-Zustand vorzubereiten und die beiden Hilfs-Qubits des Routing-Pfads, die dieses interne Routing-Ziel-Qubit umgeben, mit einem |0)-Zustand oder einem | 1)-Zustand vorzubereiten,

c2) ein erstes CNOT-Gatter zwischen dem Paar von vorbereiteten Hilfs-Qubits und dem internen Routing-Ziel-Qubit durchzuführen, wobei das erstgenannte das Ziel ist und das letztgenannte die Steuerung ist,

c3) ein zweites CNOT-Gatter zwischen dem Paar von vorbereiteten Hilfs-Qubits und zwei benachbarten Daten-Katzen-Qubits im Routing-Pfad durchzuführen, wobei das Erstgenannte die Steuerung ist und die Letztgenannten das Ziel sind, und ein drittes CNOT-Gatter zwischen dem Daten-Katzen-Qubit der supraleitenden LDPC-Quantenschaltung, die mit dem internen Routing-Ziel-Qubit verbunden ist, und dem entsprechenden internen Routing-Ziel-Qubit durchzuführen, wobei das erstgenannte das Ziel ist und das letztgenannte die Steuerung ist,

c4) eine MX-Operation auf dem internen Routing-Ziel-Qubit und dem Paar von Hilfs-Qubits des Routing-Pfads, die es umgeben, durchzuführen und deren Ergebnis zu multiplizieren,

wobei die Befehlsschaltung ferner dafür eingerichtet ist, Operationen c1) bis c4) auf allen mit Ausnahme eines der internen Routing-Ziel-Qubits unter Verwendung eines einzelnen Hilfs-Qubits durchzuführen, Operationen c1) bis c4) auf dem verbleibenden internen Routing-Ziel-Qubit unter Verwendung eines einzelnen Hilfs-Qubits durchzuführen und die Ergebnisse der Operation c4) auf allen internen Routing-Ziel-Qubits zu multiplizieren, um ein MXX-Ergebnis bereitzustellen,

wobei die Befehlsschaltung ferner dafür eingerichtet ist:

d1) abhängig vom MXX-Ergebnis ein Quanten-Z-Gatter abzuleiten, das auf den Daten-Katzen-Qubits der logischen Gruppe des logischen Steuer-Qubits durchzuführen ist, und

d2) eine Messung des Operators Z auf alle Daten-Katzen-Qubits in dem Routingpfad mit Ausnahme der internen Routing-Ziel-Qubits anzuwenden und basierend auf dem Ergebnis des Produkts der Ergebnisse ein Quanten-X-Gatter abzuleiten, das auf den Daten-Katzen-Qubits der logischen X-Gruppe durchzuführen ist.

**8.** Quantenlogiksystem zum Durchführen eines Quantengatters, umfassend das Quantensystem nach Ansprüchen 1-6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist, eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

wobei die Befehlsschaltung dafür eingerichtet ist, basierend auf einem logischen Steuer-Qubit und einem in die supraleitende LDPC-Quantenschaltung codierten logischen Ziel-Qubits:

a) einen Routing-Pfad innerhalb der supraleitenden Routing-Quantenschaltung zu definieren, der alle Daten-Katzen-Qubits, die der logischen Gruppe des logischen Steuer-Qubits entsprechen, mit einem Hilfs-Qubit verbindet, das zwischen jedem Paar von Daten-Katzen-Qubits beinhaltet ist, wobei das logische Ziel-Qubit ein einzelnes Daten-Katzen-Qubit der supraleitenden LDPC-Quantenschaltung umfasst, die die Unterstützung für den logischen X-Operator des logischen Ziel-Qubits bereitstellt, sodass der Routing-Pfad das einzige Daten-Katzen-Qubit der Routing-Schaltung beinhaltet, das mit dem einzelnen Daten-Katzen-Qubit der logischen X-Gruppe des logischen Ziel-Qubits verbunden ist, das ein internes Routing-Ziel-Qubit bildet, und selektiv die Hilfs-Qubits des Routing-Pfads zu verwenden, um alle der Daten-Katzen-Qubits innerhalb des Routing-Pfads mit einem $0\rangle_L$"-Zustand oder einem "$|1\rangle_L$"-Zustand eines Wiederholungscodes vorzubereiten,

b) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit der supraleitenden Routing-Quantenschaltung das Ziel ist,

c1) das interne Routing-Ziel-Qubit mit einem $|+\rangle$- oder $|-\rangle$-Zustand vorzubereiten und eines des Hilfs-Qubits des Routing-Pfads, das dieses interne Routing-Ziel-Qubit umgibt, mit einem $|0\rangle$- oder $|1\rangle$-Zustand vorzubereiten,

c2) ein erstes CNOT-Gatter zwischen den einzelnen vorbereiteten Hilfs-Qubits und dem internen Routing-Ziel-Qubit durchzuführen, wobei die Erstgenannten das Ziel sind und das Letztgenannte die Steuerung ist,

c3) ein zweites CNOT-Gatter zwischen den einzelnen vorbereiteten Hilfs-Qubits und seinem benachbarten Daten-Katzen-Qubit im Routing-Pfad, das nicht das interne Routing-Ziel-Qubit ist, durchzuführen, wobei die Erstgenannten die Steuerung sind und das Letztgenannte das Ziel ist, und ein drittes CNOT-Gatter zwischen dem Daten-Katzen-Qubit der supraleitenden LDPC-Quantenschaltung, die mit dem internen Routing-Ziel-Qubit verbunden ist, und dem entsprechenden internen Routing-Ziel-Qubit durchzuführen, wobei das Erstgenannte das Ziel ist und das Letztgenannte die Steuerung ist,

c4) eine MX-Operation auf dem internen Routing-Ziel-Qubit und dem einzelnen vorbereiteten Hilfs-Qubit des Routing-Pfads, das diesem benachbart ist, durchzuführen und deren Ergebnis zu multiplizieren, um ein MXX-Ergebnis bereitzustellen,

wobei die Befehlsschaltung ferner dafür eingerichtet ist:

d1) abhängig vom MXX-Ergebnis ein Quanten-Z-Gatter abzuleiten, das auf den Daten-Katzen-Qubits der logischen Gruppe des logischen Steuer-Qubits durchzuführen ist, und

d2) eine Messung des Operators Z auf alle Daten-Katzen-Qubits in dem Routingpfad mit Ausnahme der internen Routing-Ziel-Qubits anzuwenden und basierend auf dem Ergebnis des Produkts der Ergebnisse ein Quanten-X-Gatter abzuleiten, das auf den Daten-Katzen-Qubits der logischen X-Gruppe durchzuführen ist.

9. Quantenlogiksystem zum Durchführen eines Quantengatters, umfassend das Quantensystem nach Ansprüchen 1-6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,

eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

wobei die Befehlsschaltung dafür eingerichtet ist, basierend auf einem logischen Steuer-Qubit und einem in die supraleitende LDPC-Quantenschaltung codierten logischen Ziel-Qubits:

a) einen Routing-Pfad innerhalb der supraleitenden Routing-Quantenschaltung zu definieren, der alle Daten-Katzen-Qubits, die der logischen Gruppe des logischen Steuer-Qubits entsprechen, mit einem Hilfs-Qubit verbindet, das zwischen jedem Paar von Daten-Katzen-Qubits beinhaltet ist, wobei das logische Ziel-Qubit ein einzelnes Daten-Katzen-Qubit der supraleitenden LDPC-Quantenschaltung umfasst, die die Unterstützung für den logischen X-Operator des logischen Ziel-Qubits bereitstellt und ein Hauptziel-Qubit bildet, und das entsprechende verbundene Daten-Katzen-Qubit der supraleitenden Routing-Quantenschaltung ein Routing-Ziel-Qubit bildet, sodass der Routing-Pfad das Routing-Ziel-Qubit nicht beinhaltet, wobei der Routing-Pfad bei einem End-Pfad-Qubit endet, das ein Daten-Katzen-Qubit der supraleitenden Routing-Quantenschaltung ist, das benachbart zum Routing-Ziel-Qubit ist, und selektiv die Hilfs-Qubits des Routing-Pfads zu verwenden, um alle der Daten-Katzen-Qubits innerhalb des Routing-Pfads mit einem "$|0\rangle_L$"-Zustand oder einem "$|1\rangle_L$"-Zustand eines Wiederholungscodes vorzubereiten,

b) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit der supraleitenden Routing-Quantenschaltung das Ziel ist,

und wobei die Befehlsschaltung ferner dafür eingerichtet ist:

c1) das Routing-Ziel-Qubit mit einem $|+\rangle$- oder einem $|-\rangle$-Zustand vorzubereiten und das Hilfs-Qubit, das das Routing-Ziel-Qubit und das End-Pfad-Qubit verbindet, mit einem $|0\rangle$- oder einem $|1\rangle$-Zustand vorzubereiten,

c2) ein erstes CNOT-Gatter zwischen dem vorbereiteten Hilfs-Qubit und dem Routing-Ziel-Qubit durchzuführen, wobei das Erstgenannte das Ziel ist und das Letztgenannte die Steuerung ist,

c3) ein zweites CNOT-Gatter zwischen dem vorbereiteten Hilfs-Qubit und dem End-Pfad-Qubit durchzuführen, wobei das Erstgenannte die Steuerung ist und das Letztgenannte das Ziel ist, und ein drittes CNOT-Gatter zwischen dem Hauptziel-Qubit und dem Routing-Ziel-Qubit durchzuführen, wobei das Erstgenannte das Ziel ist und das Letztgenannte die Steuerung ist,

c4) eine MX-Operation auf dem Routing-Ziel-Qubit und dem vorbereiteten Hilfs-Qubit durchzuführen und deren Ergebnis zu multiplizieren, um ein MXX-Ergebnis bereitzustellen,

d1) abhängig vom MXX-Ergebnis ein Quanten-Z-Gatter abzuleiten, das auf den Daten-Katzen-Qubits der logischen Gruppe des logischen Steuer-Qubits durchzuführen ist,

d2) eine Messung des Operators Z auf alle Daten-Katzen-Qubits in dem Routingpfad anzuwenden und basierend auf dem Ergebnis des Produkts der Ergebnisse ein Quanten-X-Gatter abzuleiten, das auf den Daten-Katzen-Qubits der logischen X-Gruppe durchzuführen ist.

**10.** Quantenlogiksystem zum Durchführen eines Quantengatters, umfassend das Quantensystem nach einem der Ansprüche 1 bis 6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,

eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

wobei die Befehlsschaltung dafür eingerichtet ist, basierend auf einem logischen Steuer-Qubit und einem in die supraleitende LDPC-Quantenschaltung codierten logischen Ziel-Qubits:

a) einen Routing-Pfad innerhalb der supraleitenden Routing-Quantenschaltung zu definieren, der alle Daten-Katzen-Qubits, die der logischen Gruppe des logischen Steuer-Qubits entsprechen, mit einem Hilfs-Qubit verbindet, das zwischen jedem Paar von Daten-Katzen-Qubits beinhaltet ist, wobei das logische Ziel-Qubit einer logischen X-Gruppe von Qubits mit der supraleitenden LDPC-Quantenschaltung verknüpft ist, die die Unterstützung für den logischen X-Operator des logischen Ziel-Qubits definiert, sodass der Routing-Pfad alle Daten-Katzen-Qubits der Routing-Schaltung (5) beinhaltet, die mit den Daten-Katzen-Qubits der logischen X-Gruppe des logischen Ziel-Qubits verbunden sind, aber eines dieser Daten-Katzen-Qubits interne Routing-Ziel-Qubits bildet und das verbleibende Daten-Katzen-Qubit, das mit den Daten-Katzen-Qubits der logischen X-Gruppe des logischen Ziel-Qubits verbunden ist, ein Routing-Ziel-Qubit bildet, wobei der Routing-Pfad bei einem End-Pfad-Qubit endet, das ein Daten-Katzen-Qubit der supraleitenden Routing-Quantenschaltung (5) ist, das benachbart zum Routing-Ziel-Qubit ist, und selektiv die Hilfs-Qubits des Routing-Pfads zu verwenden, um alle der Daten-Katzen-Qubits innerhalb des Routing-Pfads mit einem eines "$|0\rangle_L$"-Zustands oder eines "$|1\rangle_L$"-Zustands eines Wiederholungscodes vorzubereiten,

b) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit der supraleitenden Routing-Quantenschaltung das Ziel ist,

c1) ein internes Routing-Ziel-Qubit mit einem $|+\rangle$-Zustand oder einem $|-\rangle$-Zustand vorzubereiten und die beiden Hilfs-Qubits des Routing-Pfads, die diese internen Routing-Ziel-Qubits umgeben, mit einem $|0\rangle$-Zustand oder einem $|1\rangle$-Zustand vorzubereiten,

c2) ein erstes CNOT-Gatter zwischen dem Paar von vorbereiteten Hilfs-Qubits und dem internen Routing-Ziel-Qubit durchzuführen, wobei das erstgenannte das Ziel ist und das letztgenannte die Steuerung ist,

c3) ein zweites CNOT-Gatter zwischen dem Paar von vorbereiteten Hilfs-Qubits und zwei benachbarten Daten-Katzen-Qubits im Routing-Pfad durchzuführen, wobei das Erstgenannte die Steuerung ist und die Letztgenannten das Ziel sind, und ein drittes CNOT-Gatter zwischen dem Daten-Katzen-Qubit der supraleitenden LDPC-Quantenschaltung, die mit dem internen Routing-Ziel-Qubit verbunden ist, und dem entsprechenden internen Routing-Ziel-Qubit durchzuführen, wobei das erstgenannte das Ziel ist und das letztgenannte die Steuerung ist,

c4) eine MX-Operation auf dem internen Routing-Ziel-Qubit und dem Paar Hilfs-Qubits des Routing-Pfads, die dieses umgeben, durchzuführen und deren Ergebnis zu multiplizieren, wobei die Befehlsschaltung dazu eingerichtet ist, Operationen c1) bis c4) auf allen der internen Routing-Ziel-Qubits durchzuführen und ferner dazu eingerichtet ist:

c5) das Routing-Ziel-Qubit mit einem $|+\rangle$-Zustand vorzubereiten und das Hilfs-Qubit, das das Routing-Ziel-Qubit und das End-Pfad-Qubit verbindet, mit einem $|0)$-Zustand vorzubereiten,

c6) ein erstes CNOT-Gatter zwischen dem vorbereiteten Hilfs-Qubit und dem Routing-Ziel-Qubit durchzuführen, wobei das Erstgenannte das Ziel ist und das Letztgenannte die Steuerung ist,

c7) ein zweites CNOT-Gatter zwischen dem vorbereiteten Hilfs-Qubit und dem End-Pfad-Qubit durchzuführen, wobei das Erstgenannte die Steuerung ist und das Letztgenannte das Ziel ist, und ein drittes CNOT-Gatter zwischen dem Daten-Katzen-Qubit der mit dem Routing-Ziel-Qubit verbundenen supraleitenden LDPC-Quantenschaltung und dem Routing-Ziel-Qubit durchzuführen, wobei das Erstgenannte das Ziel ist und das Letztgenannte die Steuerung ist,

c8) eine MX-Operation auf dem Routing-Ziel-Qubit und dem vorbereiteten Hilfs-Qubit durchzuführen und deren Ergebnis zu multiplizieren,

wobei die Befehlsschaltung ferner dafür eingerichtet ist, die Ergebnisse der Operation c4) miteinander und mit dem Ergebnis der Operation c8) zu multiplizieren, um ein MXX-Ergebnis bereitzustellen,

d1) abhängig vom MXX-Ergebnis ein Quanten-Z-Gatter abzuleiten, das auf den Daten-Katzen-Qubits der logischen Gruppe des logischen Steuer-Qubits durchzuführen ist,

d2) eine Messung des Operators Z auf alle Daten-Katzen-Qubits in dem Routingpfad mit Ausnahme der internen Routing-Ziel-Qubits anzuwenden und basierend auf dem Ergebnis des Produkts der Ergebnisse ein Quanten-X-Gatter abzuleiten, das auf den Daten-Katzen-Qubits der logischen X-Gruppe durchzuführen ist.

11. Quantenlogiksystem zum Durchführen eines Quantengatters, umfassend das Quantensystem nach einem der Ansprüche 1 bis 6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,

eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

wobei die supraleitende Routing-Quantenschaltung einen Ziel-Wiederholungscode umfasst, der eine Abfolge von Daten-Qubits und Hilfs-Qubits umfasst,

wobei die Befehlsschaltung dafür eingerichtet ist, basierend auf einem in die supraleitende LDPC-Quantenschaltung codierten logischen Steuer-Qubit:

a) einen Wiederholungscodepfad innerhalb der supraleitenden Routing-Quantenschaltung zu definieren, der alle Daten-Katzen-Qubits verbindet, die der logischen Gruppe des logischen Steuer-Qubits entsprechen, wobei zwischen jedem Paar von Daten-Katzen-Qubits ein Hilfs-Qubit beinhaltet ist, wobei der Wiederholungscodepfad sich bis zu einem End-Pfad-Qubit erstreckt, das ein einem Daten-Katzen-Qubit des Ziel-Wiederholungscodes benachbartes Daten-Katzen-Qubit der supraleitenden Routing-Quantenschaltung ist, wobei sich zwischen dem End-Pfad-Qubit und dem benachbarten Daten-Katzen-Qubit des Ziel-Wiederholungscodes ein Überbrückungs-Hilfs-Qubit befindet,

b1) alle Daten-Katzen-Qubits innerhalb des Wiederholungscodepfads mit einem "$|0)$"-Zustand oder einem "$|1)$"-Zustand vorzubereiten und die Hilfs-Qubits mit einem "$|+\rangle$"-Zustand oder einem "$|-)$"-Zustand vorzubereiten,

b2) die Stabilisatoren im Wiederholungscodepfad wiederholt zu messen, um einen Routing-Wiederholungscode in einem "$|0\rangle_L$"-Zustand oder einem "$|1\rangle_L$"-Zustand im Wiederholungscodepfad vorzubereiten,

b3) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit der supraleitenden Routing-Quantenschaltung das Ziel ist und die Befehlsschaltung ferner dazu eingerichtet ist:

c1) das Überbrückungs-Hilfs-Qubit mit einem |+)- oder einem |-)-Zustand vorzubereiten,

c2) ein erstes CNOT-Gatter zwischen dem vorbereiteten Überbrückungs-Hilfs-Qubit und dem benachbarten Daten-Katzen-Qubit des Wiederholungscodes durchzuführen, wobei das Erstgenannte die Steuerung ist und das Letztgenannte das Ziel ist,

c3) ein zweites CNOT-Gatter zwischen dem vorbereiteten Überbrückungs-Hilfs-Qubit und dem End-Pfad-Qubit durchzuführen, wobei das Erstgenannte die Steuerung ist und das Letztgenannte das Ziel ist,

c4) eine MX-Operation auf dem durchgeführten Überbrückungs-Hilfs-Qubit durchzuführen, um ein MXX-Ergebnis bereitzustellen,

d1) abhängig vom MXX-Ergebnis ein Quanten-Z-Gatter abzuleiten, das auf den Daten-Katzen-Qubits der logischen Gruppe des logischen Steuer-Qubits durchzuführen ist,

d2) eine Messung des Operators Z auf alle Daten-Katzen-Qubits in dem Wiederholungscodepfad anzuwenden und basierend auf dem Ergebnis des Produkts der Ergebnisse ein Quanten-X-Gatter abzuleiten, das auf einer ungeraden Anzahl von Daten-Katzen-Qubits des Ziel-Wiederholungscodes durchzuführen ist.

12. Quantenlogiksystem zum Durchführen eines Quantengatters, umfassend das Quantensystem nach einem der Ansprüche 1 bis 6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,

eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

wobei die supraleitende Routing-Quantenschaltung einen Wiederholungscode umfasst, der eine Abfolge von Daten-Qubits und Hilfs-Qubits umfasst,

wobei die Befehlsschaltung dafür eingerichtet ist, basierend auf einem in die supraleitende LDPC-Quantenschaltung codierten logischen Steuer-Qubit:

i) einen Wiederholungscodepfad innerhalb der supraleitenden Routing-Quantenschaltung zu definieren, die alle Daten-Katzen-Qubits verbindet, die der logischen Gruppe des logischen Steuer-Qubits entsprechen, wobei zwischen jedem Paar von Daten-Katzen-Qubits ein Hilfs-Qubit beinhaltet ist, wobei der Wiederholungscodepfad den Wiederholungscode umfasst, und

ii) ein CNOT-Gatter durchzuführen, wobei jedes der Daten-Katzen-Qubits der logischen Gruppe des logischen Steuer-Qubits die Steuerung ist, wobei jedes Mal das entsprechende Daten-Katzen-Qubit in der supraleitenden Routing-Quantenschaltung das Ziel ist.

13. Quantenlogiksystem zum Durchführen eines Quantengatters, umfassend das Quantensystem nach einem der Ansprüche 1 bis 6 und eine supraleitende Routing-Quantenschaltung, wobei die supraleitende Routing-Quantenschaltung umfasst:

eine Anzahl n von Datenresonatoren, wobei jeder Datenresonator eine jeweilige Resonanzfrequenz aufweist und mit der Befehlsschaltung zum Stabilisieren eines jeweiligen Daten-Katzen-Qubits gekoppelt ist, wobei jeder der n Datenresonatoren der supraleitenden Routing-Quantenschaltung mit einem jeweiligen der n Datenresonatoren der supraleitenden LDPC-Quantenschaltung verbunden ist,

eine Vielzahl von Hilfsresonatoren, wobei jeder Hilfsresonator eine Hilfsresonanzfrequenz aufweist, die mit der Befehlsschaltung zum Stabilisieren eines Hilfs-Qubits gekoppelt ist, wobei im Wesentlichen alle Daten-Katzen-Qubits mit mindestens zwei Hilfs-Qubits verbunden sind und im Wesentlichen alle Hilfs-Qubits mit mindestens zwei Daten-Katzen-Qubits verbunden sind, sodass in der supraleitenden Routing-Quantenschaltung ein durchgehender Pfad definiert werden kann, der jegliche zwei Daten-Katzen-Qubits verbindet und Paare von Daten-Katzen-Qubits umfasst, die über ein Hilfs-Qubit verbunden sind,

die supraleitende Routing-Quantenschaltung, die einen Steuerungswiederholungscode umfasst, der eine Folge von Daten-Katzen-Qubits und Hilfs-Qubits umfasst, die so konfiguriert sind, dass sie ein logisches Steuer-Qubit codieren, wobei die Daten-Katzen-Qubits des Steuerungswiederholungscodes Wiederholungs-Daten-Qubits bilden, wobei die Vielzahl der Wiederholungs-Daten-Qubits eine logische Gruppe bildet, die den Träger für den logischen Z-Operator des logischen Steuer-Qubits definiert, und wobei das logische Steuer-Qubit ferner eine logische X-Gruppe aus einem oder mehreren Wiederholungs-Daten-Qubits umfasst, die den Träger für den logischen X-Operator des logischen Steuer-Qubits definiert, basierend auf dem logischen Steuer-Qubit, das in der supraleitenden Routing-Quantenschaltung codiert ist, und einem logischen Ziel-Daten-Qubit, das in der supraleitenden LDPC-Quantenschaltung codiert ist, wobei das logische Ziel-Qubit mit einer logischen X-Gruppe aus einem oder mehreren Qubits der supraleitenden LDPC-Quantenschaltung verknüpft ist, die die Unterstützung für den logischen X-Operator des Ziellogik-Qubits definiert, wobei die ein oder mehreren Daten-Katzen-Qubits der supraleitenden Routing-Quantenschaltung, die jeweils mit einem oder mehreren Daten-Katzen-Qubits der logischen X-Gruppe des Ziellogik-Qubits gekoppelt sind, ein oder mehrere Routing-Ziel-Qubits der supraleitenden Routing-Quantenschaltung bilden, wobei die Befehlsschaltung dazu eingerichtet ist:

a) einen Routing-Pfad innerhalb der supraleitenden Routing-Quantenschaltung zu definieren, wobei der Pfad eine Vielzahl von Daten-Katzen-Qubits beinhaltet, die jeweils mit einem benachbarten Wiederholungsdaten-Qubit gekoppelt sind, sodass jedes Wiederholungsdaten-Qubit mit einem entsprechenden Daten-Katzen-Qubit im Pfad gekoppelt ist, wobei der Pfad zwischen jedem Paar von Daten-Katzen-Qubits ein Hilfs-Qubit beinhaltet, wobei der Routing-Pfad so konfiguriert ist, dass er einen Routing-Wiederholungscode umfasst, der auf allen Daten-Katzen-Qubits des Pfads implementiert ist, wobei ein logisches Routing-Qubit unter Verwendung des Routing-Wiederholungscodes codiert wird,

b) ein CNOT-Gatter durchzuführen, wobei jedes der Wiederholungsdaten-Qubits der logischen Gruppe des logischen Steuer-Qubits die Steuerung ist, wobei jedes Mal das entsprechende benachbarte, gekoppelte Daten-Katzen-Qubit in der supraleitenden Routing-Quantenschaltung das Ziel ist,

c) eine MX-Operation auf mindestens einem oder mehreren Routing-Ziel-Qubits durchzuführen, um ein MXX-Ergebnis bereitzustellen; und

d1) abhängig vom Wert des MXX-Ergebnisses ein Quanten-Z-Gatter abzuleiten, das auf den Wiederholungsdaten-Qubits der logischen Gruppe des logischen Steuer-Qubits durchzuführen ist, und

d2) eine Messung des Operators Z auf alle Daten-Cat-Qubits in dem Routingpfad mit Ausnahme jeglicher Routing-Ziel-Qubits in dem Routing-Pfad anzuwenden und basierend auf dem Ergebnis des Produkts der Ergebnisse ein Quanten-X-Gatter abzuleiten, das auf den Daten-Katzen-Qubits der logischen X-Gruppe des logischen Ziel-LDPC-Qubits durchzuführen ist.

**14.** Quantenlogiksystem zum Durchführen eines Quantengatters nach Anspruch 13, wobei die logische X-Gruppe des Ziel-Qubits nur ein einzelnes Daten-Katzen-Qubit der supraleitenden LDPC-Quantenschaltung umfasst, das ein Haupt-Ziel-Qubit bildet, sodass die supraleitende Routing-Quantenschaltung ein entsprechendes einzelnes Routing-Ziel-Qubit umfasst, wobei die Befehlsschaltung dafür eingerichtet ist:

in Operation (a) den Routing-Pfad zu definieren, sodass er das einzelne Routing-Ziel-Qubit, das ein externes Routing-Ziel-Qubit bildet, nicht beinhaltet, wobei der Routing-Pfad ist so definiert, dass ein Ende des Pfads ein End-Pfad-Qubit umfasst, das ein Daten-Katzen-Qubit der supraleitenden Routing-Quantenschaltung ist, das benachbart zum externen Routing-Ziel-Qubit ist, und selektiv die Hilfs-Qubits des Routing-Pfads zu verwenden, um alle Daten-Katzen-Qubits innerhalb des Pfads mit einem "$|0\rangle_L$"-Zustand oder einem "$|1\rangle_L$"-Zustand des Routing-Wiederholungscodes vorzubereiten,
wobei die Befehlsschaltung ferner dafür eingerichtet ist:

c1) das externe Routing-Ziel-Qubit mit einem $|+\rangle$- oder einem $|-\rangle$-Zustand vorzubereiten und das Hilfs-Qubit, das das Routing-Ziel-Qubit und das End-Pfad-Qubit verbindet, mit einem $|0\rangle$- oder einem $|1\rangle$-Zustand vorzubereiten,

c2) ein erstes CNOT-Gatter zwischen dem vorbereiteten Hilfs-Qubit und dem externen Routing-Ziel-Qubit durchzuführen, wobei das Erstgenannte das Ziel ist und das Letztgenannte die Steuerung ist,

c3) ein zweites CNOT-Gatter zwischen dem vorbereiteten Hilfs-Qubit und dem End-Pfad-Qubit durchzuführen, wobei das Erstgenannte die Steuerung ist und das Letztgenannte das Ziel ist, und ein drittes CNOT-Gatter zwischen dem Hauptziel-Qubit und dem externen Routing-Ziel-Qubit durchzuführen, wobei das Erstgenannte das Ziel ist und das Letztgenannte die Steuerung ist,

c4) eine MX-Operation auf dem externen Routing-Ziel-Qubit und dem vorbereiteten Hilfs-Qubit durchzuführen und deren Ergebnis zu multiplizieren, um ein MXX-Ergebnis bereitzustellen.

**Revendications**

1. Système quantique pour réaliser un code de correction d'erreur de contrôle de parité à faible densité (LDPC) classique, le système comprenant :

un circuit de commande pour appliquer sélectivement un rayonnement ; et
un circuit quantique supraconducteur de LDPC comprenant :

- un nombre n de résonateurs de données, chaque résonateur de données étant couplé audit circuit de commande pour stabiliser un qubit de chat de données respectif, dans lequel les n résonateurs de données sont agencés sur ledit circuit quantique supraconducteur LDPC selon un réseau bidimensionnel définissant une pluralité de lignes de résonateurs de données s'étendant selon une dimension de longueur L et une pluralité de colonnes de résonateurs de données s'étendant selon une dimension de hauteur H, le réseau bidimensionnel s'étendant d'un premier bord à un deuxième bord dans une première direction selon la dimension de hauteur H et d'un troisième bord à un quatrième bord dans une seconde direction selon la dimension de longueur L;
une pluralité de résonateurs auxiliaires, chaque résonateur auxiliaire étant couplé audit circuit de commande pour stabiliser un qubit auxiliaire respectif dans le résonateur auxiliaire ;
- une première pluralité de stabilisateurs, dans lequel chaque stabilisateur de la première pluralité de stabilisateurs est associé à un résonateur auxiliaire respectif de la pluralité de résonateurs auxiliaires, le résonateur auxiliaire respectif étant couplé à chacun des résonateurs de données du stabilisateur par un couplage, et dans lequel chaque stabilisateur de la première pluralité de stabilisateurs :

(i) est formé de 4 à 10 résonateurs de données sélectionnés dans un sous-réseau sept par sept du réseau bidimensionnel couvrant sept lignes consécutives le long de la première direction et sept lignes consécutives le long de la seconde direction, et
(ii) s'étend sur au moins deux lignes consécutives et au moins deux colonnes consécutives, dans lequel deux résonateurs de données ou plus proviennent de la première ligne du stabilisateur dans la première direction, deux résonateurs de données ou plus proviennent de la dernière ligne du stabilisateur dans la première direction, deux résonateurs de données ou plus proviennent de la première colonne du stabilisateur dans la seconde direction, et deux résonateurs de données ou plus proviennent de la dernière colonne du stabilisateur dans la seconde direction ;

dans lequel le circuit quantique supraconducteur LDPC est configuré pour implémenter une porte quantique à travers chaque couplage entre le qubit auxiliaire stabilisé dans le résonateur auxiliaire et le qubit de chat de données respectif stabilisé dans le résonateur de données ;
dans lequel le circuit de commande est configuré pour implémenter un code de correction d'erreur LDPC classique avec la première pluralité de stabilisateurs qui corrigent uniquement les erreurs de renversement de phase sur les qubits de chat de données stabilisés dans les résonateurs de données, afin d'encoder ainsi une pluralité k de qubits logiques à partir des qubits de chat de données de sorte que le code LDPC classique ait une valeur kd/n supérieure à 1, où d est la distance du code LDPC classique résultant, le circuit de commande étant configuré pour déterminer un syndrome d'erreur sur chaque stabilisateur de la première pluralité de stabilisateurs en réalisant un contrôle de parité sur les qubits de chat de données stabilisés dans les résonateurs de données du stabilisateur respectif par :

(i) la stabilisation ou la préparation d'un qubit auxiliaire dans le résonateur auxiliaire associé du stabilisateur,
(ii) la réalisation de portes quantiques entre le qubit auxiliaire et chacun des qubits de chat de données stabilisés dans les résonateurs de données du stabilisateur, et
(iii) la mesure du qubit auxiliaire associé pour déterminer la présence d'un renversement de phase sur au moins l'un des qubits de chat de données stabilisés dans les résonateurs de données du stabilisateur.

2. Système quantique selon la revendication 1, dans lequel les qubits auxiliaires sont des qubits de chat auxiliaires ;

dans lequel le circuit de commande est configuré pour implémenter une porte quantique multi-qubits par l'intermédiaire de deux couplages ou plus entre le qubit auxiliaire stabilisé dans le résonateur auxiliaire et respectivement deux qubits de chat de données ou plus stabilisés dans les résonateurs de données ; et
dans lequel le circuit de commande est configuré pour déterminer le syndrome d'erreur sur chaque stabilisateur de la première pluralité de stabilisateurs par :

(i) la stabilisation ou la préparation du qubit de chat auxiliaire dans un état « |-> » ou « |+> » de l'opérateur X dans le résonateur auxiliaire associé du stabilisateur,

(ii) la réalisation de portes CNOT entre le qubit de chat auxiliaire et chacun des qubits de chat de données stabilisés dans les résonateurs de données du stabilisateur, dans lequel au moins deux des portes CNOT entre le qubit de chat auxiliaire et respectivement au moins deux des qubits de chat de données sont réalisées sensiblement simultanément, et

(iii) l'application d'une opération de mesure de l'opérateur X sur le qubit de chat auxiliaire dans le résonateur auxiliaire associé du stabilisateur pour déterminer la présence d'un renversement de phase sur au moins l'un des qubits de chat de données stabilisés dans les résonateurs de données du stabilisateur.

3. Système quantique selon une quelconque revendication précédente, dans lequel chaque stabilisateur de la première pluralité de stabilisateurs :

(i) est formé de 4 à 9 résonateurs de données sélectionnés dans un sous-réseau trois par trois du réseau bidimensionnel couvrant trois lignes consécutives le long de la première direction et trois lignes consécutives le long de la seconde direction.

4. Système quantique selon la revendication 3, dans lequel chaque stabilisateur de la première pluralité de stabilisateurs est sélectionné dans le groupe comprenant : une forme annulaire formée de 8 résonateurs de données ; une forme en C orientée vers l'avant le long de la seconde direction formée de 7 résonateurs de données ; une forme en C orientée vers l'arrière le long de la seconde direction formée de 7 résonateurs de données ; une forme en I formée de 7 résonateurs de données.

5. Système quantique selon une quelconque revendication précédente, dans lequel au moins deux desdits stabilisateurs peuvent être distincts, et/ou les bords du tableau bidimensionnel définissent une forme non rectangulaire.

6. Système quantique selon une quelconque revendication précédente, dans lequel le circuit quantique supraconducteur LDPC comprend en outre une seconde pluralité de stabilisateurs, dans lequel chaque stabilisateur de la seconde pluralité de stabilisateurs :

(i) est formé de 2 à 10 résonateurs de données sélectionnés dans un sous-réseau sept par sept du réseau bidimensionnel couvrant sept lignes consécutives le long de la première direction et sept lignes consécutives le long de la seconde direction, et

(ii) s'étend sur au moins deux lignes consécutives et au moins deux colonnes consécutives, dans lequel un seul résonateur de données provient de la première ligne du stabilisateur dans la première direction, ou un seul résonateur de données provient de la dernière ligne du stabilisateur dans la première direction, ou un seul résonateur de données provient de la première ligne du stabilisateur dans la seconde direction, ou un seul résonateur de données provient de la dernière ligne du stabilisateur dans la seconde direction ;

dans lequel le circuit de commande est configuré pour implémenter le code de correction d'erreur LDPC classique avec la première pluralité de stabilisateurs et la seconde pluralité de stabilisateurs qui corrigent uniquement les erreurs de renversement de phase sur les qubits de chat de données stabilisés dans les résonateurs de données, le circuit de commande étant en outre configuré pour déterminer un syndrome d'erreur sur chaque stabilisateur de la seconde pluralité de stabilisateurs en réalisant un contrôle de parité sur les qubits de chat de données stabilisés dans les résonateurs de données du stabilisateur respectif.

7. Système de logique quantique pour la réalisation d'une porte quantique, comprenant ledit système quantique selon l'une des revendications précédentes et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit de commande étant agencé, sur la base d'un qubit logique de contrôle et d'un qubit logique cible encodés dans ledit circuit quantique supraconducteur de LDPC :

a) pour définir un chemin de routage dans ledit circuit quantique supraconducteur de routage qui connecte tous les qubits de chat de données correspondant au groupe logique dudit qubit logique de contrôle à un qubit auxiliaire étant inclus entre chaque paire de qubits de chat de données, dans lequel le qubit logique cible est associé à un groupe X logique de qubits dudit circuit quantique supraconducteur de LDPC qui définit le support pour l'opérateur X logique du qubit logique cible, de telle sorte que le chemin de routage inclue tous les qubits de chat de données du circuit de routage qui sont connectés aux qubits de chat de données du groupe X logique du qubit logique cible qui forment des qubits cibles de routage internes, et pour utiliser sélectivement les qubits auxiliaires dudit chemin de routage pour préparer tous les qubits de chat de données dans ledit chemin de routage avec un état « $|0\rangle_L$ » ou un état « $|1\rangle_L$ » d'un code de répétition,
b) pour réaliser une porte CNOT avec chacun des qubits de chat de données du groupe logique dudit qubit logique de contrôle étant le contrôle, chaque fois avec le qubit de chat de données correspondant dudit circuit quantique supraconducteur de routage étant la cible,
c1) pour préparer un qubit cible de routage interne avec un état $|+\rangle$ ou un état $|-\rangle$, et pour préparer les deux qubits auxiliaires du chemin de routage entourant ce qubit cible de routage interne avec un état $|0\rangle$ ou un état $|1\rangle$, c2) pour réaliser une première porte CNOT entre la paire de qubits auxiliaires préparés et le qubit cible de routage interne, avec le premier étant la cible et le second étant le contrôle,
c3) pour réaliser une deuxième porte CNOT entre la paire de qubits auxiliaires préparés et deux qubits de chat de données voisins dans le chemin de routage, avec le premier étant le contrôle et le second étant la cible, et une troisième porte CNOT entre le qubit de chat de données du circuit quantique supraconducteur LDPC connecté au qubit cible de routage interne et le qubit cible de routage interne correspondant, avec le premier étant la cible et le second étant le contrôle,
c4) pour réaliser une opération de MX sur le qubit cible de routage interne et la paire de qubits auxiliaires du chemin de routage qui l'entoure, et pour multiplier leur résultat,
ledit circuit de commande étant en outre agencé pour réaliser les opérations c1) à c4) sur tous les qubits cibles de routage internes sauf un, pour réaliser les opérations c1) à c4) sur le qubit cible de routage interne restant à l'aide d'un seul qubit auxiliaire, et pour multiplier les résultats de l'opération c4) sur tous les qubits cibles de routage internes pour fournir un résultat de MXX,
ledit circuit de commande étant en outre agencé :

d1) en fonction du résultat de MXX, pour dériver une porte Z quantique à réaliser sur les qubits de chat de données du groupe logique du qubit logique de contrôle, et
d2) pour appliquer une mesure de l'opérateur Z sur tous les qubits de chat de données dans ledit chemin de routage à l'exception des qubits cibles de routage internes, et, sur la base du résultat du produit des résultats, pour dériver une porte X quantique à réaliser sur les qubits de chat de données du groupe X logique.

8. Système de logique quantique pour la réalisation d'une porte quantique, comprenant ledit système quantique selon les revendications 1-6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,
une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit de commande étant agencé, sur la base d'un qubit logique de contrôle et d'un qubit logique cible encodés dans ledit circuit quantique supraconducteur de LDPC :

a) pour définir un chemin de routage dans ledit circuit quantique supraconducteur de routage qui connecte tous les qubits de chat de données correspondant au groupe logique dudit qubit logique de contrôle à un qubit auxiliaire étant inclus entre chaque paire de qubits de chat de données, dans lequel le qubit logique cible comprend un seul qubit de chat de données dudit circuit quantique supraconducteur de LDPC qui fournit le support pour l'opérateur X logique du qubit logique cible, de telle sorte que le chemin de routage inclue le seul qubit de chat de données du circuit de routage qui est connecté au seul qubit de chat de données du qubit logique cible qui forme un qubit cible de routage interne, et pour utiliser sélectivement les qubits auxiliaires dudit chemin de routage pour préparer tous les qubits de chat de données dans ledit chemin de routage avec un état « $|0\rangle_L$ » ou un état « $|1\rangle_L$ » d'un code de répétition,

b) pour réaliser une porte CNOT avec chacun des qubits de chat de données du groupe logique dudit qubit logique de contrôle étant le contrôle, chaque fois avec le qubit de chat de données correspondant dudit circuit quantique supraconducteur de routage étant la cible,

c1) pour préparer le qubit cible de routage interne avec un état $|+\rangle$ ou $|-\rangle$, et pour préparer l'un des qubits auxiliaires du chemin de routage entourant ce qubit cible de routage interne avec un état $|0\rangle$ ou $|1\rangle$,

c2) pour réaliser une première porte CNOT entre le seul qubit auxiliaire préparé et le qubit cible de routage interne, avec le premier étant la cible et le second étant le contrôle,

c3) pour réaliser une deuxième porte CNOT entre le seul qubit auxiliaire préparé et son qubit de chat de données voisin dans le chemin de routage qui n'est pas le qubit cible de routage interne, avec le premier étant le contrôle et le second étant la cible, et une troisième porte CNOT entre le qubit de chat de données du circuit quantique supraconducteur LDPC connecté au qubit cible de routage interne et le qubit cible de routage interne correspondant, avec le premier étant la cible et le second étant le contrôle,

c4) pour réaliser une opération de MX sur le qubit cible de routage interne et le seul qubit auxiliaire préparé du chemin de routage voisin de celui-ci, et pour multiplier leur résultat afin de fournir un résultat de MXX, ledit circuit de commande étant en outre agencé :

d1) en fonction du résultat de MXX, pour dériver une porte Z quantique à réaliser sur les qubits de chat de données du groupe logique du qubit logique de contrôle, et d2) pour appliquer une mesure de l'opérateur Z sur tous les qubits de chat de données dans ledit chemin de routage à l'exception des qubits cibles de routage internes, et, sur la base du résultat du produit des résultats, pour dériver une porte X quantique à réaliser sur les qubits de chat de données du groupe X logique.

9. Système de logique quantique pour la réalisation d'une porte quantique, comprenant ledit système quantique selon les revendications 1-6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit de commande étant agencé, sur la base d'un qubit logique de contrôle et d'un qubit logique cible encodés dans ledit circuit quantique supraconducteur de LDPC :

a) pour définir un chemin de routage dans ledit circuit quantique supraconducteur de routage qui connecte tous les qubits de chat de données correspondant au groupe logique dudit qubit logique de contrôle à un qubit auxiliaire étant inclus entre chaque paire de qubits de chat de données, dans lequel le qubit logique cible comprend un seul qubit de chat de données dudit circuit quantique supraconducteur de LDPC qui fournit le support pour l'opérateur X logique du qubit logique cible et forme un qubit cible principal et le qubit de chat de données connecté correspondant du circuit quantique supraconducteur de routage forme un qubit cible de routage, de telle sorte que le chemin de routage n'inclue pas le qubit cible de routage, dans lequel le chemin de routage se termine au niveau d'un qubit de fin de chemin qui est un qubit de chat de données du circuit quantique supraconducteur de routage voisin dudit qubit cible de routage, et pour utiliser sélectivement les qubits auxiliaires dudit chemin de routage pour préparer tous les qubits de chat de données dans ledit chemin de routage avec un état « $|0\rangle_L$ » ou un état « $|1\rangle_L$ » d'un code de répétition,

b) pour réaliser une porte CNOT avec chacun des qubits de chat de données du groupe logique dudit qubit logique de contrôle étant le contrôle, chaque fois avec le qubit de chat de données correspondant dudit circuit quantique supraconducteur de routage étant la cible,

et ledit circuit de commande étant en outre agencé :

c1) pour préparer le qubit cible de routage avec un état $|+\rangle$ ou $|-\rangle$, et pour préparer le qubit auxiliaire connectant le qubit cible de routage et le qubit de fin de chemin avec un état $|0\rangle$ ou $|1\rangle$,

c2) pour réaliser une première porte CNOT entre le qubit auxiliaire préparé et le qubit cible de routage, avec le premier étant la cible et le second étant le contrôle,

c3) pour réaliser une deuxième porte CNOT entre le qubit auxiliaire préparé et le qubit de fin de chemin, avec le premier étant le contrôle et le second étant la cible, et une troisième porte CNOT entre le qubit cible principal et le qubit cible de routage, avec le premier étant la cible et le second étant le contrôle,

c4) pour réaliser une opération de MX sur le qubit cible de routage et le qubit auxiliaire préparé, et pour multiplier leur résultat afin de fournir un résultat de MXX,

d1) en fonction du résultat de MXX, pour dériver une porte Z quantique à réaliser sur les qubits de chat de données du groupe logique du qubit logique de contrôle,

d2) pour appliquer une mesure de l'opérateur Z sur tous les qubits de chat de données dans ledit chemin de routage, et, sur la base du résultat du produit des résultats, pour dériver une porte X quantique à réaliser sur les qubits de chat de données du groupe X logique.

10. Système de logique quantique pour la réalisation d'une porte quantique, comprenant ledit système quantique selon l'une des revendications 1 à 6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit de commande étant agencé, sur la base d'un qubit logique de contrôle et d'un qubit logique cible encodés dans ledit circuit quantique supraconducteur de LDPC :

a) pour définir un chemin de routage dans ledit circuit quantique supraconducteur de routage qui connecte tous les qubits de chat de données correspondant au groupe logique dudit qubit logique de contrôle à un qubit auxiliaire étant inclus entre chaque paire de qubits de chat de données, dans lequel le qubit logique cible est associé à un groupe X logique de qubits dudit circuit quantique supraconducteur de LDPC qui définit le support pour l'opérateur X logique du qubit logique cible, de telle sorte que le chemin de routage inclue tous les qubits de chat de données du circuit de routage (5) qui sont connectés aux qubits de chat de données du groupe X logique du qubit logique cible sauf un, ces qubits de chat de données formant des qubits cibles de routage internes et le qubit de chat de données restant étant connecté aux qubits de chat de données du groupe X logique du qubit logique cible formant un qubit cible de routage, dans lequel le chemin de routage se termine au niveau d'un qubit de fin de chemin qui est un qubit de chat de données du circuit quantique supraconducteur de routage (5) voisin dudit qubit cible de routage, et pour utiliser sélectivement les qubits auxiliaires dudit chemin de routage pour préparer tous les qubits de chat de données dans ledit chemin de routage avec un état « $|0\rangle_L$ » ou un état « $|1\rangle_L$ » d'un code de répétition,

b) pour réaliser une porte CNOT avec chacun des qubits de chat de données du groupe logique dudit qubit logique de contrôle étant le contrôle, chaque fois avec le qubit de chat de données correspondant dudit circuit quantique supraconducteur de routage étant la cible,

c1) pour préparer un qubit cible de routage interne avec un état |+⟩ ou un état |-⟩, et pour préparer les deux qubits auxiliaires du chemin de routage entourant ce qubit cible de routage interne avec un état | 0⟩ ou un état | 1⟩,

c2) pour réaliser une première porte CNOT entre la paire de qubits auxiliaires préparés et le qubit cible de routage interne, avec le premier étant la cible et le second étant le contrôle,

c3) pour réaliser une deuxième porte CNOT entre la paire de qubits auxiliaires préparés et deux qubits de chat de données voisins dans le chemin de routage, avec le premier étant le contrôle et le second étant la cible, et une troisième porte CNOT entre le qubit de chat de données du circuit quantique supraconducteur LDPC connecté au qubit cible de routage interne et le qubit cible de routage interne correspondant, avec le premier étant la cible et le second étant le contrôle,

c4) pour réaliser une opération de MX sur le qubit cible de routage interne et la paire de qubits auxiliaires du chemin de routage qui l'entoure, et pour multiplier leur résultat, ledit circuit de commande étant agencé pour réaliser les opérations c1) à c4) sur tous les qubits cibles de routage internes, et étant en outre agencé :

c5) pour préparer le qubit cible de routage avec un état |+⟩, et pour préparer le qubit auxiliaire connectant le qubit cible de routage et le qubit de fin de chemin avec un état |0⟩,

c6) pour réaliser une première porte CNOT entre le qubit auxiliaire préparé et le qubit cible de routage, avec le premier étant la cible et le second étant le contrôle,

c7) pour réaliser une deuxième porte CNOT entre le qubit auxiliaire préparé et le qubit de fin de chemin, avec le premier étant le contrôle et le second étant la cible, et une troisième porte CNOT entre le qubit de chat de données du circuit quantique supraconducteur de LDPC connecté au qubit cible de routage et le qubit cible de routage, avec le premier étant la cible et le second étant le contrôle,

c8) pour réaliser une opération de MX sur le qubit cible de routage et le qubit auxiliaire préparé, et pour multiplier leur résultat,

ledit circuit de commande étant en outre agencé pour multiplier les résultats de l'opération c4) ensemble et avec le résultat de l'opération c8) pour fournir un résultat de MXX,

d1) en fonction du résultat de MXX, pour dériver une porte Z quantique à réaliser sur les qubits de chat de données du groupe logique du qubit logique de contrôle,

d2) pour appliquer une mesure de l'opérateur Z sur tous les qubits de chat de données dans ledit chemin de routage à l'exception des qubits cibles de routage internes, et, sur la base du résultat du produit des résultats, pour dériver une porte X quantique à réaliser sur les qubits de chat de données du groupe X logique.

11. Système de logique quantique pour la réalisation d'une porte quantique, comprenant ledit système quantique selon l'une des revendications 1 à 6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit quantique supraconducteur de routage comprenant un code de répétition cible comprenant une succession de qubits de chat de données et de qubits auxiliaires,

ledit circuit de commande étant agencé, sur la base d'un qubit logique de contrôle encodé dans ledit circuit quantique supraconducteur de LDPC :

a) pour définir un chemin de code de répétition dans ledit circuit quantique supraconducteur de routage qui connecte tous les qubits de chat de données correspondant au groupe logique dudit qubit logique de contrôle avec un qubit auxiliaire étant inclus entre chaque paire de qubits de chat de données, ledit chemin de code de répétition s'étendant jusqu'à un qubit de fin de chemin qui est un qubit de chat de données du circuit quantique supraconducteur de routage voisin d'un qubit de chat de données dudit code de répétition cible, avec un qubit auxiliaire de pontage entre ledit qubit de fin de chemin et ledit qubit de chat de données voisin dudit code de répétition cible,

b1) pour préparer tous les qubits de chat de données dans ledit chemin de code de répétition avec un état « | 0⟩ » ou un état « |1⟩ », et les qubits auxiliaires avec un état « |+⟩ » ou un état « |-⟩ »,

b2) pour mesurer de manière répétée les stabilisateurs dans le chemin de code de répétition pour préparer un code de répétition de routage dans un état « $|0\rangle_L$ » ou un état « $|1\rangle_L$ » dans le chemin de code de répétition,

b3) pour réaliser une porte CNOT avec chacun des qubits de chat de données du groupe logique dudit qubit logique de contrôle étant le contrôle, chaque fois avec le qubit de chat de données correspondant dans ledit circuit quantique supraconducteur de routage (5) étant la cible, et ledit circuit de commande étant en outre agencé :

c1) pour préparer le qubit auxiliaire de pontage avec un état |+⟩ ou |-⟩,

c2) pour réaliser une première porte CNOT entre le qubit auxiliaire de pontage préparé et le qubit de chat de données voisin du code de répétition, avec le premier étant le contrôle et le second étant la cible,

c3) pour réaliser une deuxième porte CNOT entre le qubit auxiliaire de pontage préparé et le qubit de fin de chemin, avec le premier étant le contrôle et le second étant la cible,

c4) pour réaliser une opération de MX sur le qubit auxiliaire de pontage réalisé, pour fournir un résultat de MXX,

d1) en fonction du résultat de MXX, pour dériver une porte Z quantique à réaliser sur les qubits de chat de données du groupe logique du qubit logique de contrôle, d2) pour appliquer une mesure de l'opérateur Z sur tous les qubits de chat de données dans ledit chemin de code de répétition, et, sur la base du résultat du produit des résultats, pour dériver une porte X quantique à réaliser sur un nombre impair de qubits de chat de données du code de répétition cible.

12. Système de logique quantique pour la réalisation d'une porte quantique, comprenant ledit système quantique selon l'une des revendications 1 à 6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire, ledit circuit quantique supraconducteur de routage comprenant un code de répétition comprenant une succession de qubits de chat de données et de qubits auxiliaires,

ledit circuit de commande étant agencé, sur la base d'un qubit logique de contrôle encodé dans ledit circuit quantique supraconducteur de LDPC :

i) définir un chemin de code de répétition au sein dudit circuit quantique supraconducteur de routage qui connecte tous les qubits de chat de données correspondant au groupe logique dudit qubit logique de contrôle, avec un qubit auxiliaire étant inclus entre chaque paire de qubits de chat de données, dans lequel ledit chemin de code de répétition comprend ledit code de répétition, et

ii) pour réaliser une porte CNOT avec chacun des qubits de chat de données du groupe logique dudit qubit logique de contrôle étant le contrôle, chaque fois avec le qubit de chat de données correspondant dans ledit circuit quantique supraconducteur de routage étant la cible.

13. Système de logique quantique pour la réalisation d'une porte quantique, comprenant ledit système quantique selon l'une des revendications 1 à 6 et un circuit quantique supraconducteur de routage, ledit circuit quantique supraconducteur de routage comprenant :

un nombre n de résonateurs de données, chaque résonateur de données présentant une fréquence de résonance respective et étant couplé audit circuit de commande pour stabiliser un qubit de chat de données respectif, chacun desdits n résonateurs de données dudit circuit quantique supraconducteur de routage étant connecté à un résonateur de données respectif desdits n résonateurs de données dudit circuit quantique supraconducteur de LDPC,

une pluralité de résonateurs auxiliaires, chaque résonateur auxiliaire présentant une fréquence de résonance auxiliaire couplée audit circuit de commande pour stabiliser un qubit auxiliaire, sensiblement tous les qubits de chat de données étant connectés à au moins deux qubits auxiliaires, et sensiblement tous les qubits auxiliaires étant connectés à au moins deux qubits de chat de données, de telle sorte qu'un chemin continu puisse être défini dans ledit circuit quantique supraconducteur de routage qui connecte deux qubits de chat de données quelconques et est composé de paires de qubits de chat de données qui sont connectés via un qubit auxiliaire,

ledit circuit quantique supraconducteur de routage comprenant un code de répétition de contrôle comprenant une succession de qubits de chat de données et de qubits auxiliaires configurés pour coder un qubit logique de contrôle, les qubits de chat de données du code de répétition de contrôle formant des qubits de données de répétition, dans lequel la pluralité de qubits de données de répétition forme un groupe logique qui définit le support de l'opérateur logique Z du qubit logique de contrôle, et dans lequel le qubit logique de contrôle comprend en outre un groupe X logique d'un ou plusieurs qubits de données de répétition qui définit le support de l'opérateur logique X du qubit logique de contrôle,

sur la base dudit qubit logique de contrôle encodé dans ledit circuit quantique supraconducteur de routage et d'un qubit de données logique cible encodé dans ledit circuit quantique supraconducteur LDPC, dans lequel le qubit logique cible est associé à un groupe X logique d'un ou plusieurs qubits dudit circuit quantique supraconducteur LDPC qui définit le support de l'opérateur X logique du qubit logique cible, dans lequel les un ou plusieurs qubits de chat de données du circuit quantique supraconducteur de routage chacun couplés à un qubit de chat de données respectif des un ou plusieurs qubits de chat de données du groupe X logique du qubit logique cible forment un ou plusieurs qubits cibles de routage du circuit quantique supraconducteur de routage, ledit circuit de commande étant agencé :

a) pour définir un chemin de routage au sein dudit circuit quantique supraconducteur de routage, dans lequel le chemin inclut une pluralité de qubits de chat de données qui sont chacun couplés à un qubit de données de répétition adjacent, de telle sorte que chaque qubit de données de répétition soit couplé à un qubit de chat de données respectif dans le chemin, dans lequel le chemin inclut un qubit auxiliaire entre chaque paire de qubits de chat de données, le chemin de routage étant configuré de telle sorte que le chemin de routage comprenne un code de répétition de routage implémenté sur tous les qubits de chat de données du chemin, dans lequel un qubit logique de routage est encodé à l'aide du code de répétition de routage,

b) pour réaliser une porte CNOT avec chacun des qubits de données de répétition du groupe logique du qubit logique de contrôle étant le contrôle, chaque fois avec le qubit de chat de données couplé adjacent correspondant dans le chemin de routage étant la cible,

c) pour réaliser une opération de MX sur au moins les un ou plusieurs qubits cibles de routage pour fournir un résultat de MXX ; et

d1) en fonction de la valeur du résultat de MXX, pour dériver une porte Z quantique à réaliser sur les qubits de données de répétition du groupe logique du qubit logique de contrôle, et

d2) pour appliquer une mesure de l'opérateur Z sur tous les qubits de chat de données dans ledit chemin de routage à l'exception de qubits cibles de routage quelconques dans ledit chemin de routage, et, sur la base du résultat du produit des résultats, pour dériver une porte X quantique à réaliser sur les qubits de chat de données du groupe X logique du qubit logique cible.

**14.** Système de logique quantique pour réaliser une porte quantique selon la revendication 13, dans lequel le groupe X logique du qubit logique cible ne comprend qu'un seul qubit de chat de données dudit circuit quantique supraconducteur LDPC qui forme un qubit cible principal, de telle sorte que le circuit quantique supraconducteur de routage comprenne un seul qubit cible de routage correspondant, ledit circuit de commande étant agencé :

dans l'opération (a), pour définir ledit chemin de routage de sorte que ledit chemin de routage n'inclue pas le qubit cible de routage unique qui forme un qubit cible de routage externe, dans lequel le chemin de routage est défini de telle sorte qu'une fin du chemin comprenne un qubit de fin de chemin, dans lequel le qubit de fin de chemin est un qubit de chat de données du circuit quantique supraconducteur de routage voisin du qubit cible de routage externe, et pour utiliser sélectivement les qubits auxiliaires dudit chemin de routage pour préparer tous lesdits qubits de chat de données au sein dudit chemin avec un état « $|0\rangle_L$ » ou un état « $|1\rangle_L$ » du code de répétition de routage,

ledit circuit de commande étant en outre agencé :

c1) pour préparer le qubit cible de routage externe avec un état |+⟩ ou |-), et pour préparer le qubit auxiliaire connectant le qubit cible de routage et le qubit de fin de chemin avec un état |0) ou |1⟩,

c2) pour réaliser une première porte CNOT entre le qubit auxiliaire préparé et le qubit cible de routage externe, avec le premier étant la cible et le second étant le contrôle, c3) pour réaliser une deuxième porte CNOT entre le qubit auxiliaire préparé et le qubit de fin de chemin, avec le premier étant le contrôle et le second étant la cible, et une troisième porte CNOT entre le qubit cible principal et le qubit cible de routage externe, avec le premier étant la cible et le second étant le contrôle,

c4) pour réaliser une opération de MX sur le qubit cible de routage externe et le qubit auxiliaire préparé, et pour multiplier leur résultat afin de fournir un résultat de MXX.

**Fig. 1**

**Fig. 2**

● Data qubits ▨ X stabilizer

**Fig. 3**

● Data qubits ▨ X stabilizer

**Fig. 4**

Data qubits  X stabilizer

Data qubits  X stabilizer

Data qubits  X stabilizer

Data qubits  X stabilizer

**Fig. 5**

Fig. 6

Fig. 7

Fig. 8

Fig. 9

**Fig. 10**

| $[n, k, d]$ | $kd/n$ | $(H, L)$ | Stabiliser shapes (bottom to top) |
|---|---|---|---|
| $[23, 10, 5]$ | 2.17 | $(4, 5)$ | |
| $[61, 22, 9]$ | 3.25 | $(5, 11)$ | |
| $[88, 26, 12]$ | 3.55 | $(6, 13)$ | |
| $[134, 34, 16]$ | 4.06 | $(7, 17)$ | |
| $[157, 34, 22]$ | 4.76 | $(8, 17)$ | |

**Fig. 11**

**Fig. 12**

Fig. 13

1402

1404

1411    1406    1408

1404

**Fig. 14**

Turn on Feedforward Hamiltonian    1500

Turn off Feedforward Hamiltonian    1510

**Fig. 15**

**Fig. 16**

1404

1411

1404

**Fig. 17**

1404

|+>    1812

1411    1406    1408

M    1814

1404

**Fig. 18**

Prepare ancilla cat qubit    1900

Turn on Feedforward Hamiltonian    1910

Measure ancilla cat qubit    1920

**Fig. 19**

**Fig. 20**

**Fig. 21**

**Fig. 22**

Fig. 24

Fig. 25

Fig. 23

**Fig. 26**

**Fig. 27**

Fig. 28

**Fig. 29**

**Fig. 30**

**Fig. 31**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023071000 A1
- EP 23175147

**Non-patent literature cited in the description**

- **RÉGENT FRANCOIS-MARIE LE et al.** *High-performance repetition cat code using fast noisy operations*, 01 March 2023, https://arxiv.org/pdf/2212.11927.pdf
- Performance Analysis of a Repetition Cat Code Architecture: Computing 256-bit Elliptic Curve Logarithm in 9 Hours with 126133 Cat Qubits. **ELIE GOUZIEN et al.** ARXIV.ORG. CORNELL UNIVERSITY LIBRARY, 04 August 2023
- Repetition cat-qubits: fault-tolerant quantum computation with highly reduced overhead. **JEREMIE GUILLAUD et al.** ARXIV.ORG. CORNELL UNIVERSITY LIBRARY, 20 April 2019
- Bias-preserving gates with stabilized cat qubits. **SHRUTI PURI et al.** ARXIV.ORG. CORNELL UNIVERSITY LIBRARY, 01 May 2019
- **JÉRÉMIE GUILLAUD** ; **MAZYAR MIRRAHIMI**. Repetition Cat Qubits for Fault-Tolerant Quantum Computation. *Phys. Rev. X*, 12 December 2019, vol. 9, 041053
- **SHRUTI et al.** Bias-Preserving Gates With Stabilized Cat Qubits''. *Science Advances*, 21 August 2020, vol. 6 (34)
- **JÉRÉMIE GUILLAUD** ; **MAZYAR MIRRAHIMI**. Error Rates and Resource Overheads of repetition cat qubits. *Phys. Rev. A*, 13 April 2021, vol. 103, 042413
- **CHRISTOPHER CHAMBERLAND et al.** Building a Fault-Tolerant Quantum Computer Using Concatenated Cat Codes. *PRX Quantum*, 23 February 2022, vol. 3, 010329
- **ANDREW S. DARMAWAN et al.** Practical Quantum Error Correction with the XZZX Code and Kerr-Cat Qubits. *PRX Quantum*, 16 September 2021, vol. 2, 030345
- **S. BRAVI**. High-threshold and low-overhead fault-tolerant quantum memory. *arXiv:2308.07915*, 15 August 2023
- **XU et al.** Constant-Overhead Fault-Tolerant Quantum Computation with Reconfigurable Atom Arrays. *arXiv:2308.08648*
- **LESCANNE R.** Exponential suppression of bit-flips in a qubit encoded in an oscillator. *Nature Physics*, 2020